# EUROPEAN PATENT APPLICATION

(11) **EP 3 438 976 A1**
(43) Date of publication of application: **06.02.2019**
(21) Application number: 17774431.5
(22) Date of filing: 17.03.2017
(51) Int. Cl.: G10L 19/00

(54) **INFORMATION PROCESSING DEVICE AND METHOD**

(30) Priority: 31.03.2016 JP 2016072171
(71) Applicant: Sony Corporation, Tokyo 108-0075 (JP)
(72) Inventor: HAMADA Toshiya, Tokyo 108-0075 (JP); HIRABAYASHI Mitsuhiro, Tokyo 108-0075 (JP); KATSUMATA Mitsuru, Tokyo 108-0075 (JP)
(74) Representative: D Young & Co LLP
(86) International application number: PCT/JP2017/010871
(87) International publication number: WO 2017/169890

(57) **Abstract**

The present disclosure relates to an information processing apparatus and an information processing method for transmitting audio data of higher quality.

Given a file in a predetermined file format for storing encoded data derived from audio data, the encoded data being in groups of a predetermined number of blocks, a sample is set to the file, the sample being a minimum access unit in the file and including initialization information for decoding each of the groups of the blocks. The present disclosure may be applied to image processing apparatuses, image encoding apparatuses, or image decoding apparatuses, for example.

## Description

### [Technical Field]

The present disclosure relates to an information processing apparatus and an information processing method. More particularly, the disclosure relates to an information processing apparatus and an information processing method for transmitting audio data of higher quality.

### [Background Art]

Heretofore, Moving Picture Experts Group phase-Dynamic Adaptive Streaming over HTTP (MPEG-DASH) has been developed to stream video and audio data over the Internet (e.g., see NPL 1). Also studied has been the use of files in the International Organization for Standardization (ISO) Base Media File Format (ISOBMFF) stipulated by the ISO/IEC 14496-12 standard as the means for streaming video and audio data of higher quality to users by MPEG-DASH technology. With video and audio data becoming ever higher in quality, there has been a growing demand for the data to be delivered with higher quality.

For example, the Direct Stream Digital (DSD) technology has been known as a high-quality encoding method for music data. Because DSD data is to be handled at high data rates, a lossless compression technology (DSD lossless compression technology) has been devised. In recent years, there has also been developed a new DSD lossless compression encoding technology involving smaller load.

### [Citation List]

### [Non Patent Literature]

[NPL 1]
Dynamic Adaptive Streaming over HTTP (MPEG-DASH) (URL: http://mpeg.chiariglione.org/standards/mpeg-dash/media-presentation-description-and-segment-formats/text-isoiec-23009-12012-dam-1)

### [Summary]

### [Technical Problems]

However, there has yet to be a method devised to apply the new DSD lossless compression encoding technology to files in the ISOBMFF format. For this reason, it has been impossible to deliver by MPEG-DASH the DSD stream in which DSD data would be encoded using the new DSD lossless compression encoding technology. Thus it has been difficult to transmit audio data of higher quality.

The present disclosure has been made in view of the above circumstances. An object of the disclosure is therefore to transmit audio data of higher quality.

### [Solution to Problems]

According to one aspect of the present technology, there is provided an information processing apparatus including a sample setting part configured, in such a manner that given a file in a predetermined file format for storing encoded data derived from audio data, the encoded data being in groups of a predetermined number of blocks, to set to the file a sample that constitutes a minimum access unit in the file and includes initialization information for decoding each of the groups of the blocks.

The sample setting part may be configured to set two samples, one of the two samples including the initialization information and the first block in each of the groups, the other sample corresponding to each of the other blocks in each of the groups. The information processing apparatus may further include a sync sample setting part configured to set as a sync sample the sample that is set by the sample setting part and includes the initialization information and the first block in each of the groups, the sync sample including information required for starting decoding.

The information processing apparatus may further include a subsample setting part configured to set two subsamples to the sample that is set by the sample setting part and includes the initialization information and the first block in each of the groups, one of the subsamples including the initialization information, the other subsample including the first block in each of the groups.

The sample setting part may set a sample that includes the initialization information and all blocks in each of the groups.

The information processing apparatus may further include a subsample setting part configured to set two subsamples to the sample that is set by the sample setting part and includes the initialization information and all blocks in each of the groups, one of the subsamples including the initialization information and the first block in each of the groups, the other subsample corresponding to each of the blocks in each of the groups.

The information processing apparatus may further include a subsample setting part configured to set three subsamples to the sample that is set by the sample setting part and includes the initialization information and all blocks in each of the groups, one of the three subsamples including the initialization information, another one of the three subsamples including the first block in each of the groups, the last one of the three subsamples corresponding to each of the blocks in each of the groups.

All samples set by the sample setting part may constitute a sync sample including information required for starting decoding.

The information processing apparatus may further include a sync sample setting part configured to set as a sync sample the sample that is set by the sample setting part and includes the initialization information, the sync sample including information required for starting decoding. The sample setting part may be further configured to set a sample including all blocks in each of the groups.

The information processing apparatus may further include a subsample setting part configured to set a subsample to the sample that is set by the sample setting part and includes all blocks in each of the groups, the subsample corresponding to each of the blocks.

The sample setting part may be configured to set a sample including the initialization information and the first block in each of the groups, and a sample including all the other blocks in each of the groups. The information processing apparatus may further include a sync sample setting part configured to set as a sync sample the sample that is set by the sample setting part and includes the initialization information and the first block in each of the groups, the sync sample including information required for starting decoding.

The information processing apparatus may further include a subsample setting part configured to set a subsample to the sample that is set by the sample setting part and includes all the other blocks in each of the groups, the subsample corresponding to each of the blocks.

The subsample setting part may be further configured to set two subsamples to the sample that is set by the sample setting part and includes the initialization information and the first block in each of the groups, one of the subsamples including the initialization information, the other subsample including the first block in each of the groups.

The sample setting part may be further configured to set the sample corresponding to each of the blocks to a track different from the track to which the sample including the initialization information is set.

The sample setting part may be further configured to set the sample corresponding to each of the blocks to a file different from the file to which the sample including the initialization information is set.

The information processing apparatus may further include an extension box setting part configured to set information regarding the audio data to an extension box in an audio sample entry.

The audio data may be Direct Stream Digital (DSD) data, and the encoded data may be obtained by losslessly encoding the DSD data.

The file format may comply with the ISO/IEC 14496 standard.

According to one aspect of the present technology, there is provided an information processing method including, given a file in a predetermined file format for storing encoded data derived from audio data, the encoded data being in groups of a predetermined number of blocks, setting to the file a sample that constitutes a minimum access unit in the file and includes initialization information for decoding each of the groups of the blocks.

According to another aspect of the present technology, there is provided an information processing apparatus including: a sample analyzing part configured to analyze a sample in a file in a predetermined file format for storing encoded data derived from audio data in groups of blocks, the sample being a minimum access unit in the file and including initialization information for decoding each of the groups of the blocks, the sample analyzing part further acquiring decoder configuration information for decoding the encoded data on the basis of the result of the analysis; a setting part configured to set the decoder configuration information acquired by the sample analyzing part; and a decoding part configured to decode the encoded data using the decoder configuration information set by the setting part.

According to another aspect of the present technology, there is provided an information processing method including: analyzing a sample in a file in a predetermined file format for storing encoded data derived from audio data in groups of blocks, the sample being a minimum access unit in the file and including initialization information for decoding each of the groups of the blocks; acquiring decoder configuration information for decoding the encoded data on the basis of the result of the analysis; setting the acquired decoder configuration information; and decoding the encoded data using the set decoder configuration information.

According to one aspect of the present technology, there are thus provided an information processing apparatus and an information processing method by which, given a file in a predetermined file format for storing encoded data derived from audio data, the encoded data being in groups of a predetermined number of blocks, a sample is set to the file, the sample being a minimum access unit in the file and including initialization information for decoding each of the groups of the blocks.

According to another aspect of the present technology, there are thus provided an information processing apparatus and an information processing method by which a sample is analyzed in a file in a predetermined file format for storing encoded data derived from audio data in groups of blocks, the sample being a minimum access unit in the file and including initialization information for decoding each of the groups of the blocks; decoder configuration information is acquired for decoding the encoded data on the basis of the result of the analysis; the acquired decoder configuration information is set; and the encoded data is decoded using the set decoder configuration information.

### [Advantageous Effect of Invention]

The present disclosure permits the processing of information. In particular, the present disclosure makes it possible to transmit audio data of higher quality.

### [Brief Description of Drawings]

FIG. 1 is an explanatory diagram explaining an example of how to transmit data using MPEG-DASH.
FIG. 2 is an explanatory diagram explaining the DSD technology.
FIG. 3 is an explanatory diagram explaining an example of how the bit rate of streaming delivery varies.
FIG. 4 is a block diagram depicting a representative configuration of a compression encoding apparatus.
FIG. 5 is an explanatory diagram explaining a typical method of generating a data generation count table "pretable."
FIG. 6 is an explanatory diagram explaining a conversion table "table1."
FIG. 7 is a block diagram depicting a typical configuration of an encoding part.
FIG. 8 is a flowchart explaining a compression encoding process.
FIG. 9 is a block diagram depicting a representative configuration of a decoding apparatus.
FIG. 10 is a flowchart explaining a decoding process.
FIG. 11 is a schematic diagram depicting a representative configuration of a DSD lossless stream.
FIG. 12 is a schematic diagram depicting examples of the syntax of the DSD lossless stream.
FIG. 13 is a schematic diagram depicting an example of how to decode the DSD lossless stream.
FIG. 14 is a schematic diagram depicting an example of how to put the DSD lossless stream into an MP4 file.
FIG. 15 is a schematic diagram depicting representative structures of the MP4 file.
FIG. 16 is an explanatory diagram explaining a sync sample box.
FIG. 17 is an explanatory diagram explaining a subsample information box.
FIG. 18 is a schematic diagram depicting a representative configuration of a delivery system.
FIG. 19 is a block diagram depicting a representative configuration of a file generating apparatus.
FIG. 20 is a block diagram depicting a representative configuration of a reproduction terminal.
FIG. 21 is a schematic diagram depicting an example of correspondence between samples and blocks.
FIG. 22 is a schematic diagram depicting examples of the sync sample box and the subsample information box.
FIG. 23 is a schematic diagram depicting another example of correspondence between samples and blocks.
FIG. 24 is a schematic diagram depicting examples of the subsample information box.
FIG. 25 is a schematic diagram depicting another example of correspondence between samples and blocks.
FIG. 26 is a schematic diagram depicting other examples of the sync sample box and the subsample information box.
FIG. 27 is a schematic diagram depicting another example of the subsample information box.
FIG. 28 is a flowchart explaining a typical flow of a delivery data generating process.
FIG. 29 is a flowchart explaining a typical flow of an MP4 file generating process.
FIG. 30 is a block diagram depicting an example of how to perform decoding.
FIG. 31 is a flowchart explaining a typical flow of a reproduction process.
FIG. 32 is a flowchart explaining a typical flow of the decoding process.
FIG. 33 is a schematic diagram explaining an example of how to set samples.
FIG. 34 is a schematic diagram explaining another example of how to set samples.
FIG. 35 is a flowchart explaining another typical flow of the MP4 file generating process.
FIG. 36 is a flowchart explaining another typical flow of the decoding process.
FIG. 37 is an explanatory diagram explaining an example of how to apply the present technology to DRM.
FIG. 38 is an explanatory diagram explaining an example how to set samples in the application to DRM.
FIG. 39 is an explanatory diagram explaining an example of the syntax of an audio sample entry.
FIG. 40 is a block diagram depicting another representative configuration of the file generating apparatus.
FIG. 41 is a flowchart explaining another typical flow of the MP4 file generating process.
FIG. 42 is a block diagram depicting another representative configuration of the reproduction terminal.
FIG. 43 is a flowchart explaining another typical flow of the decoding process.
FIG. 44 is an explanatory diagram explaining an example of an extension box.
FIG. 45 is an explanatory diagram explaining an example of how to set the extension box.
FIG. 46 is an explanatory diagram explaining another example of how to set the extension box.
FIG. 47 is a block diagram depicting another representative configuration of the file generating apparatus.
FIG. 48 is a flowchart explaining another typical flow of the MP4 file generating process.
FIG. 49 is a block diagram depicting another representative configuration of the reproduction terminal.
FIG. 50 is a flowchart explaining another typical flow of the decoding process.
FIG. 51 is a block diagram depicting a representative configuration of a computer.

### [Description of Embodiments]

The modes for implementing the present technology (referred to as the embodiments) are described below. It is to be noted that the description is given under the following headings:
1. Putting the DSD lossless stream into the MP4 file
2. First embodiment (delivery system: associating samples with blocks)
3. Second embodiment (delivery system: separating the parameter set from the elementary stream)
4. Third embodiment (delivery system: setting the audio sample entry)
5. Fourth embodiment (delivery system: setting the extension box)
6. Others

### <1. Putting the DSD lossless stream into the MP4 file>

### <Delivery of video and audio data>

In recent years, the delivery of video and audio data by streaming over the Internet has attracted attention as means for delivering videos and music to consumers. However, the Internet is not stable as the means of transmission compared with broadcasts or with optical disks. First of all, the maximum rate of the transmission bandwidth varies significantly depending on the user's environment. Further, a constant transmission bandwidth is not assured all the time for the same user; the bandwidth varies over time. That the transmission bandwidth varies also means that the time of response to demands from clients is not constant.

As a standard for the transmission over the Internet noted for the above-described nature, Moving Picture Experts Group-Dynamic Adaptive Streaming over HTTP (MPEG-DASH) has been developed. This is a pull-type model in which a client, by referencing a Media Presentation Description (MPD), selects accordingly an optimum one of multiple files having different data sizes held on the server side. With http used in place of special protocols, common HyperText Transfer Protocol (HTTP) servers can be utilized. The usable file formats include not only the Moving Picture Experts Group-Transport Stream (MPEG-TS) format but also the International Organization for Standardization Base Media File Format (ISOBMFF) format.

### <MPEG-DASH>

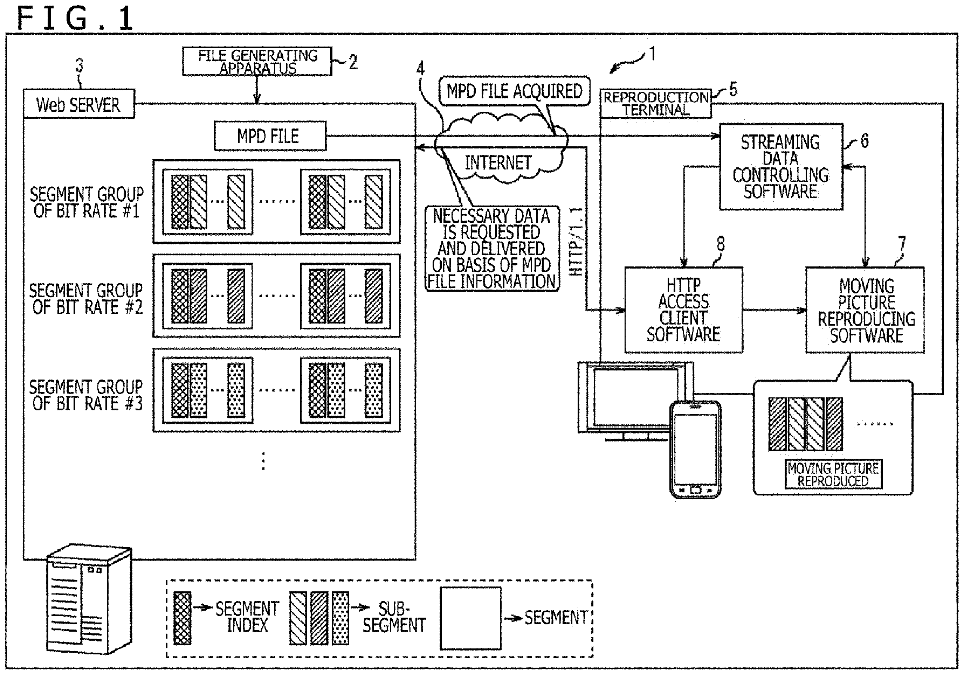

FIG. 1 depicts an example of how to transmit data using MPEG-DASH. In an information processing system 1 in FIG. 1, a file generating apparatus 2 generates video data and audio data as moving image content, encodes the generated data, and puts the encoded data into files in a transmission file format. For example, the file generating apparatus 2 puts the data into files (i.e., into segments) at intervals of approximately ten seconds. The file generating apparatus 2 uploads the generated segment files to a Web server 3. The file generating apparatus 2 also generates an MPD file (management file) for managing the moving image content, and uploads the MPD file to the Web server 3.

The Web server 3 acting as a DASH server delivers live the moving picture content files generated by the file generating apparatus 2 to a reproduction terminal 5 over the Internet 4 in a manner complying with MPEG-DASH. For example, the Web server 3 stores the segment files and MPD files uploaded from the file generating apparatus 2. Also, in response to requests from the reproduction terminal 5, the Web server 3 transmits stored segment files and MPD files to the reproduction terminal 5.

The reproduction terminal 5 (reproduction apparatus) executes streaming data controlling software (called the control software hereunder where appropriate) 6, moving picture reproducing software 7, and HTTP access client software (called the access software hereunder) 8, among others.

The control software 6 controls the data to be streamed from the Web server 3. For example, the control software 6 acquires an MPD file from the Web server 3. Further, the control software 6 commands the access software 8 to request transmission of the segment files targeted for reproduction on the basis of reproduction time information denoting the reproduction time designated by the acquired MPD file or by the moving picture reproducing software 7 and in accordance with the network bandwidth of the Internet 4, for example.

The moving picture reproducing software 7 is a software which reproduces an encoded stream acquired from the Web server 3 over the Internet 4. For example, the moving picture reproducing software 7 designates the reproduction time information for the control software 6. Also, after acquiring a reception start notification from the access software 8, the moving picture reproducing software 7 decodes the encoded stream supplied from the access software 8. The moving picture reproducing software 7 outputs the video data and audio data obtained from decoding.

The access software 8 controls communication with the Web server 3 using HTTP. For example, the access software 8 supplies a reception start notification to the moving picture reproducing software 7. Under command of the control software 6, the access software 8 also transmits to the Web server 3 a request for transmission of an encoded stream of the segment files to be reproduced. Further, the access software 8 receives segment files at a bit rate complying with the communication environment, the segment files being transmitted from the Web server 3 in response to the transmission request. The access software 8 extracts an encoded stream from the received files and supplies the extracted stream to the moving picture reproducing software 7.

### <DSD>

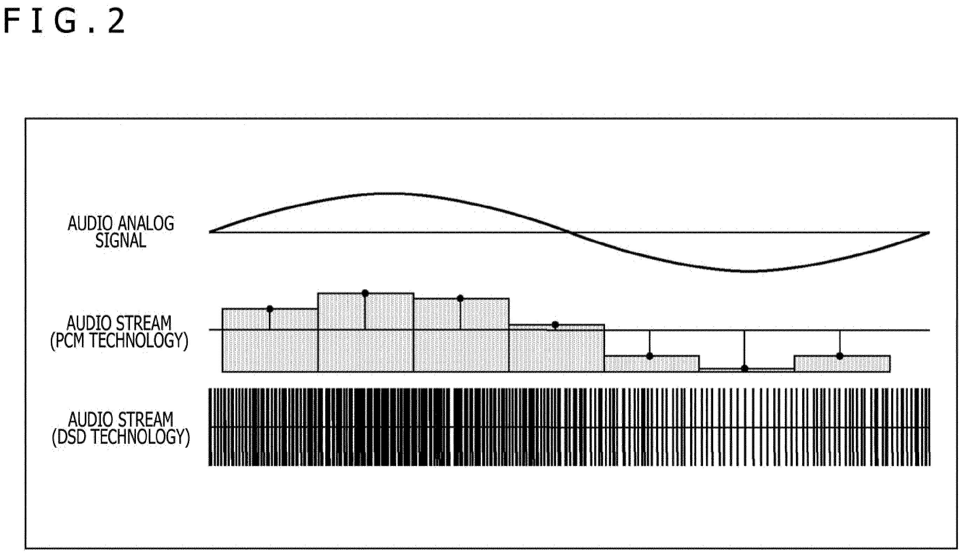

Meanwhile, with video and audio data getting ever higher in quality, there is a growing demand for data of higher quality to be delivered. For example, Direct Stream Digital (DSD) has been known as an audio signal high-quality modulation technique (FIG. 2). In the case of Pulse Code Modulation (PCM), as illustrated in FIG. 2, the signal value of an audio analog signal at each sampling time is converted into digital data of a fixed number of bits. In the case of DSD, on the other hand, the audio analog signal is subjected to ΔΣ modulation for conversion into 1-bit digital data.

In the case of DSD, the sampling frequencies are as high as 2.8 MHz, 5.6 MHz, and 11.2 MHz, for example. They translate into bit rates of 5.6 Mbps, 11.2 Mbps, and 22.4 Mbps, respectively, over 2 channels. Under these circumstances, techniques for lossless compression of high-rate DSD data have been devised.

### <DST>

For example, there exists Direct Stream Transfer (DST), which was developed as a DSD data lossless compression encoding technique for the Super Audio Compact Disc (SACD) and standardized by the MPEG4 Advanced Audio Coding (AAC) International Organization for Standardization/International Electrotechnical Commission (IEC/ISO) 14496-3. However, the DST technique involves too high loads to be used for the processing performed by software.

### <New DSD lossless compression encoding technology>

A new DSD lossless compression encoding technology has thus been developed in a manner different from the DST technique as a technology that may be implemented through software processing executed by embedded processors. Using a DSD lossless stream generated by the new DSD lossless compression encoding technology for delivery reduces the bandwidth required for transmission. The new technology is also expected to permit real-time decoding through software processing by such clients as PCs and mobile terminals.

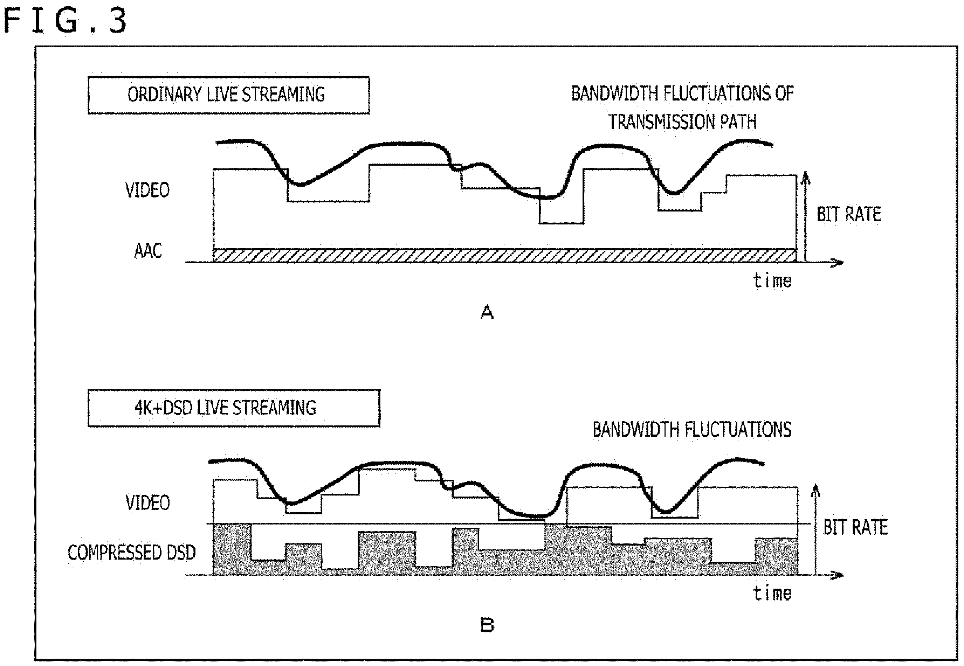

For example, in the case of normal live streaming of audio data encoded using AAC as depicted in Subfigure A in FIG. 3, the bit rate remains constant. The bit rate for video data is thus selected in accordance with bandwidth fluctuations of the transmission path. By contrast, in the case of live streaming (4K+DSD) of audio data encoded using the DSD lossless encoding technique, as illustrated in Subfigure B in FIG. 3, the DSD lossless stream is subject to pronounced localized rate fluctuations. That means bandwidth allowances stemming from the rate fluctuations can be allocated to the transmission of video data. This permits higher-quality video data transmission.

### <Typical configuration of the compression encoding apparatus>

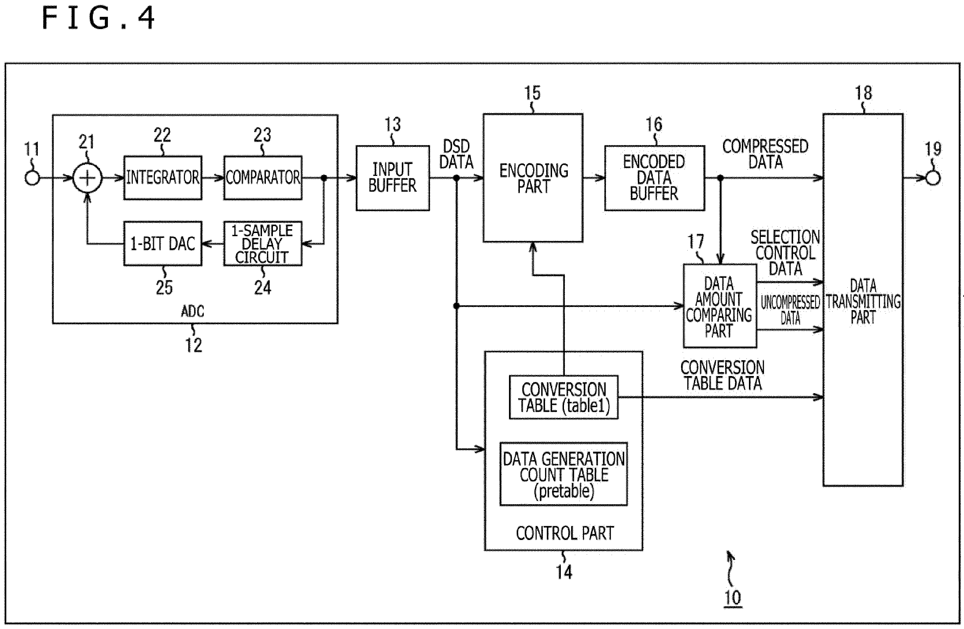

FIG. 4 depicts a representative configuration of a compression encoding apparatus supporting the new DSD lossless compression encoding technology. A compression encoding apparatus 10 in FIG. 4 subjects an analog audio signal to ΣΔ (sigma delta) modulation for conversion into a digital signal. Following the conversion, the compression encoding apparatus 10 compression-encodes the audio signal for output. That is, the compression encoding apparatus 10 digitizes the audio signal through modulation using the DSD technology, and encodes the resulting digital data (DSD data) using the above-described new DSD lossless compression encoding technology to generate a DSD lossless stream.

The analog audio signal is input from an input part 11 and supplied to an Analog Digital Converter (ADC) 12. The ADC 12 digitizes the supplied analog audio signal through ΣΔ modulation and outputs the digitized signal to an input buffer 13.

The ADC 12 is configured with an adder 21, an integrator 22, a comparator 23, a 1-sample delay circuit 24, and a 1-bit Digital Analog Converter (DAC) 25. The audio signal supplied from the input part 11 is forwarded to the adder 21. The adder 21 adds up an analog audio signal supplied one sampling period earlier from the 1-bit DAC 25 and the audio signal coming from the input part 11, and outputs the result to the integrator 22. The integrator 22 integrates the audio signal from the adder 21 and outputs the result to the comparator 23. The comparator 23 subjects the input audio signal to 1-bit quantization at intervals of a sampling period in comparison with the midpoint potential of the input audio signal. The frequency of the sampling period (sampling frequency) is either 64 or 128 times the existing 48 kHz or 44.1 kHz. The comparator 23 outputs the 1-bit quantified audio signal to the input buffer 13 and also supplies the signal to the 1-sample delay circuit 24. The 1-sample delay circuit 24 delays by one sampling period the audio signal from the comparator 23, and outputs the delayed signal to the 1-bit DAC 25. The 1-bit DAC 25 converts the digital signal from the 1-sample delay circuit 24 into an analog signal for output to the adder 21.

The ADC 12 configured as described above converts the audio signal from the input part 11 into a 1-bit digital signal (A/D conversion) and outputs the resulting signal to the input buffer 13. When the frequency of the sampling period (sampling frequency) is sufficiently high, the A/D conversion through the above-mentioned ΣΔ modulation provides a digital audio signal of a wide dynamic range even with the small bit count of 1 bit. For example, the ADC 12 receives input of a stereo (2-channel) audio signal from the input part 11. The ADC 12 converts the input analog audio signal into a 1-bit digital signal at a sampling frequency that is 128 times 44.1 kHz, and outputs the result to the input buffer 13. Incidentally, the ΣΔ modulation may utilize the quantization bit count of 2 bits or 4 bits.

The input buffer 13 temporarily stores the 1-bit digital audio data supplied from the ADC 12, and supplies the data one frame at a time to a control part 14, to an encoding part 15, and to a data amount comparing part 17 located downstream. Here, one frame refers to one of the units of the audio signal separated at intervals of a predetermined time (period). For example, a 3-second-long signal portion may be regarded as one frame. In other words, the input buffer 13 supplies the audio signal in units of three seconds to the control part 14, encoding part 15, and data amount comparing part 17. As described above, the audio signal input from the input part 11 is a stereo (2-channel) signal that is subjected to A/D conversion at the sampling frequency that is 128 times 44.1 kHz. This translates into a data amount of 44100(Hz)*128*2(ch)*3(sec)=5.6 M bits per frame. In the description that follows, the digital signal supplied from the input buffer 13 after undergoing ΣΔ modulation may be referred to as the DSD data.

The control part 14 controls the overall operation of the compression encoding apparatus 10. The control part 14 also has the function of generating a conversion table "table1" required by the encoding part 15 in carrying out compression encoding. For example, the control part 14 generates a data generation count table "pretable" using 1-frame DSD data supplied from the input buffer 13, and further generates the conversion table "table1" from the data generation count table "pretable." The control part 14 supplies the generated conversion table "table1" to the encoding part 15 and to a data transmitting part 18. The conversion table "table1" is generated (updated) in units of a frame and supplied to the encoding part 15.

The encoding part 15 compression-encodes the DSD data from the input buffer 13 in units of 4 bits using the conversion table "table1" supplied from the control part 14. Thus although the encoding part 15 is supplied with the DSD data from the input buffer 13 at the same time as the DSD data is supplied to the control part 14, the encoding part 15 waits for the start of processing until the conversion table is supplied from the control part 14. The encoding part 15 encodes the 4-bit DSD data into 2-bit data or into 6-bit data, before outputting the encoded data to an encoded data buffer 16.

The encoded data buffer 16 temporarily buffers the DSD data having undergone compression encoding by the encoding part 15, before supplying the buffered data to the data amount comparing part 17 and data transmitting part 18.

The data amount comparing part 17 compares in units of frames the amount of the DSD data supplied from the input buffer 13 (the supplied data may be called the uncompressed data hereunder) with the amount of the compressed data from the encoded data buffer 16. As described above, the encoding part 15 encodes the 4-bit DSD data into 2-bit data or into 6-bit data. That means the amount of the compressed data can exceed the amount of the uncompressed data in terms of algorithm. For this reason, the data amount comparing part 17 compares the amount of the compressed data with that of the uncompressed data so as to select the data of the smaller amount, and supplies the data transmitting part 18 with selection control data indicative of which data has been selected. It is to be noted that, in the case where the data amount comparing part 17 supplies the data transmitting part 18 with the selection control data denoting the selection of the uncompressed data, the data amount comparing part 17 also supplies the uncompressed data to the data transmitting part 18. From the viewpoint of the apparatus that receives transmitted data, the selection control data may be considered a flag denoting whether or not the audio data transmitted from the data transmitting part 18 has been compression-encoded by the encoding part 15.

On the basis of the selection control data supplied from the data amount comparing part 17, the data transmitting part 18 selects either the compressed data supplied from the encoded data buffer 16 or the uncompressed data from the data amount comparing part 17. The data transmitting part 18 transmits the selected data to the opposite apparatus via an output part 19 along with the selection control data. Also, when transmitting the compressed data to the opposite apparatus, the data transmitting part 18 attaches to the compressed data the data of the conversion table "table1" supplied from the control part 14. The data transmitting part 18 may attach a synchronizing signal and an error-correcting code (ECC) to the digital signal at intervals of a predetermined number of samples constituting the data to be transmitted.

### <Method of generating the data generation count table>

Explained below is the method by which the control part 14 generates the data generation count table "pretable."

The control part 14 generates the data generation count table "pretable" for one frame of DSD data. The DSD data supplied from the input buffer 13 is expressed in units of 4 bits as follows:
...D4[n-3],D4[n-2],D4[n-1],D4[n],D4[n+1],D4[n+2],D4[n+3],... where, D4[n] stands for 4-bit consecutive data. In the description that follows, the data may also be referred to as the D4 data (n>3).

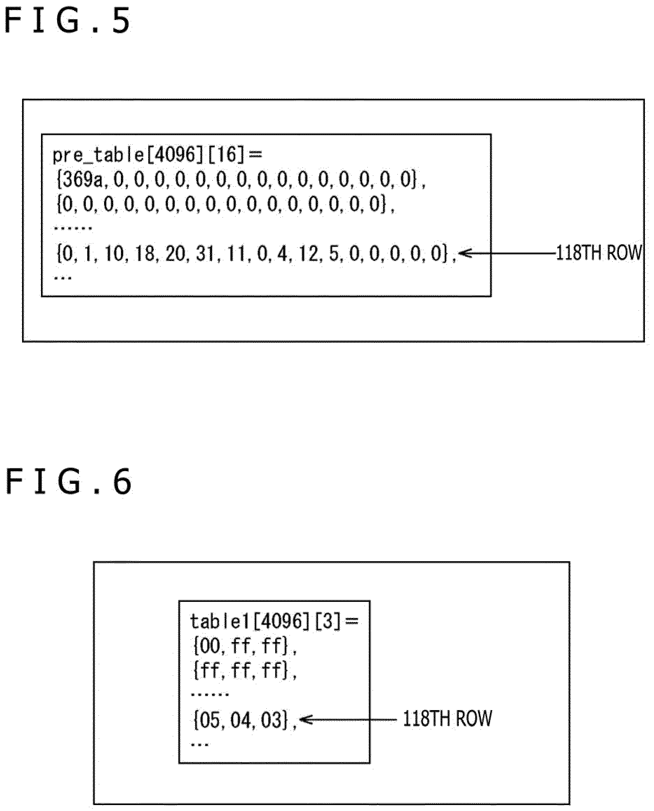

The control part 14 counts the number of times the D4 data next to past 3 D4 data items (last 12-bit data) was generated, and generates a data generation count table "pretable[4096][16]" depicted in FIG. 5. In the notation of this data generation count table "pretable[4096][16]," the numbers [4096] and [16] indicate that this is a table (matrix) of 4096 rows and 16 columns. Each of the rows [0] to [4095] corresponds to the value that can be assumed by the past 3 D4 data items (past bit pattern), and each of the columns [0] through [15] corresponds to the value that can be assumed by the next D4 data.

For example, the first row "pretable[0][0] to [0][15]" in the data generation count table "pretable" indicates the number of times the data item next to past 3 D4 data items D4[n-3],D4[n-2],D4[n-1] being "0"={0000,0000,0000} was generated. It is also indicated that the number of times the 4-bit data item next to the past 3 data items being "0" was "0" is 369a (in hexadecimal), with no other data present. The second row "pretable[1][0] to [1][15]" in the data generation count table "pretable" indicates the number of times the data item next to the past 3 D4 data items D4[n-3],D4[n-2],D4[n-1] being "1"={0000,0000,0001} was generated. That all elements of the second row in the data generation count table "pretable" are "0" means that in this frame, there was no data item of which the past 3 D4 data items were "1." Also in FIG. 5, the 118th row "pretable[117] [0] to[117][15]" in the data generation count table "pretable" indicates the number of times the data item next to the past 3 D4 data items D4[n-3],D4[n-2],D4[n-1] being "117"={0000,0111,0101} was generated. The data in the table indicates that the number of times the 4-bit data item next to the past 3 data items being "117" was "0" is 0, that the number of times the 4-bit data item next to the past 3 data items being "1" is 1, that the number of times the 4-bit data item next to the past 3 data items being "2" is 10, that the number of times the 4-bit data item next to the past 3 data items being "3" is 18, that the number of times the 4-bit data item next to the past 3 data items being "4" is 20, that the number of times the 4-bit data item next to the past 3 data items being "5" is 31, that the number of times the 4-bit data item next to the past 3 data items being "6" is 11, that the number of times the 4-bit data item next to the past 3 data items being "7" is 0, that the number of times the 4-bit data item next to the past 3 data items being "8" is 4, that the number of times the 4-bit data item next to the past 3 data items being "9" is 12, that the number of times the 4-bit data item next to the past 3 data items being "10" is 5, and that the number of times the 4-bit data item next to the past 3 data items being "11" through "15" is 0.

In this manner, the control part 14 generates the data generation count table "pretable" by counting the number of times the D4 data item next to the past 3 D4 data items (past 12-bit data) was generated for one frame of DSD data.

### <Method of generating the conversion table>

Explained next is the method by which the control part 14 generates the conversion table "table1."

The control part 14 generates a conversion table "table1[4096][3]" of 4096 rows and 3 columns on the basis of the data generation count table "pretable" generated earlier. In this conversion table "table1[4096][3]," each of the rows [0] through [4095] corresponds to the value that can be assumed by the past 3 D4 data items, and the columns [0] through [2] store 3 values having the highest generation frequencies among 16 values that can be assumed by the next D4 data. In the conversion table "table1[4096][3]," the first column [0] stores the value having the (first-) highest generation frequency; the second column [1] stores the value having the second-highest generation frequency; and the third column [2] stores the value having the third-highest generation frequency.

FIG. 6 depicts an example of the conversion table "table1[4096][3]" corresponding to the data generation count table "pretable" illustrated in FIG. 5. In the conversion table "table1[4096][3]," the 118th row "table1[117][0] to [117][2]" is {05, 04, 03}. This corresponds to the content of the 118th row "pretable[117][0] to [117][15]" in the data generation count table "pretable" of FIG. 5. In the 118th row "pretable[117][0] to [117][15]" in the data generation count table "pretable" of FIG. 5, the value having the (first-) highest generation frequency is "5" that was generated 31 times; the value having the second-highest generation frequency is "4" generated 20 times; and the value having the third-highest generation frequency is "3" generated 18 times. As a result of this, the 118th row and the first column "table1[117][0]" in the conversion table "table1[4096][3]" store {05}; the 118th row and the second column "table1[117][1]" store {04}; and the 118th row and the third column "table1[117] [2]" store {03}. Likewise, the first row "table1[0][0] to [0][2]" in the conversion table "table1[4096][3]" corresponds to the content of the first row "pretable[0][0] to [0][15]" in the data generation count table "pretable" of FIG. 5.

In the first row "pretable[0][0] to [0][15]" in the data generation count table "pretable" of FIG. 5, the value having the (first-) highest generation frequency is "0" that was generated 369a times (in hexadecimal). No other value has been generated. Thus the first row and the first column "table1[0][0]" in the conversion table "table1[4096][3]" store {00}; and the first row and the second column "table1[0][1]" as well as the fist row and the third column "table1[0][2]" store {ff} indicating that there is no data. The value indicative of the absence of data is not limited to {ff} and may be determined as desired. The value to be set in each of the elements constituting the conversion table "table1" is any one of "0" to "15." That means these values may be expressed in 4 bits. However, these values are expressed here in 8 bits for the ease of computer-based processing.

In the manner described above, on the basis of the data generation count table "pretable" prepared earlier, the conversion table "table1[4096][3]" of 4096 rows and 3 columns is prepared and supplied to the encoding part 15.

### <Method of compression encoding performed by the encoding part 15>

Explained next is the method by which the encoding part 15 performs compression encoding using the conversion tale "table1." Below is an example in which, given the DSD data "...D4[n-3],D4[n-2],D4[n-1],D4[n],D4[n+1],D4[n+2],D4[n+3],..." from the input buffer 13, the encoding part 15 encodes D4[n].

In the case of encoding D4[n], the encoding part 15 regards the immediately preceding 12-bit data D4[n-3],D4[n-2],D4[n-1] as a 12-bit data aggregate, and searches accordingly for 3 values at the address (row) designated by D4[n-3],D4[n-2],D4[n-1] in the conversion table "table1[4096][3]," i.e., for table1[D4[n-3],D4[n-2],D4[n-1]][0], table1[D4[n-3],D4[n-2],D4[n-1]][1], and table1[D4[n-3],D4[n-2],D4[n-1]][2].

In the case where one of the 3 values at the address (row) designated by D4[n-3],D4[n-2],D4[n-1] in the conversion table "table1[4096][3]," i.e., table1[D4[n-3],D4[n-2],D4[n-1]][0], table1[D4[n-3],D4[n-2],D4[n-1]][1], and table1[D4[n-3],D4[n-2],D4[n-1]][2], is the same as D4[n] and where table1[D4[n-3],D4[n-2],D4[n-1]][0] is the same as D4[n], the encoding part 15 converts D4[n] into 2-bit data "01b." In the case where D4[n] is the same as table1[D4[n-3],D4[n-2],D4[n-1]][1], the encoding part 15 converts D4[n] into 2-bit data "10b." In the case where D4[n] is the same as table1[D4[n-3],D4[n-2],D4[n-1]][2], the encoding part 15 converts D4[n] into 2-bit data "11b." Also, where none of the 3 values at the address (row) designated by D4[n-3],D4[n-2],D4[n-1] in the conversion table "table1[4096][3]" is the same as D4[n], the encoding part 15 prefixes D4[n] with "00b" for conversion into 6-bit data, such as "00b+D4[n]." Here, the symbol "b" in "01b," "10b," "11b" and "00b+D4[n]" indicates that these values are in binary notation.

As described above, using the conversion table "table1," the encoding part 15 converts the 4-bit DSD data D4[n] either into 2-bit data "01b," "10b," or "11b," or into 6-bit data "00b+D4[n]," for output to the encoded data buffer 16.

### <Detailed configuration of the encoding part 15>

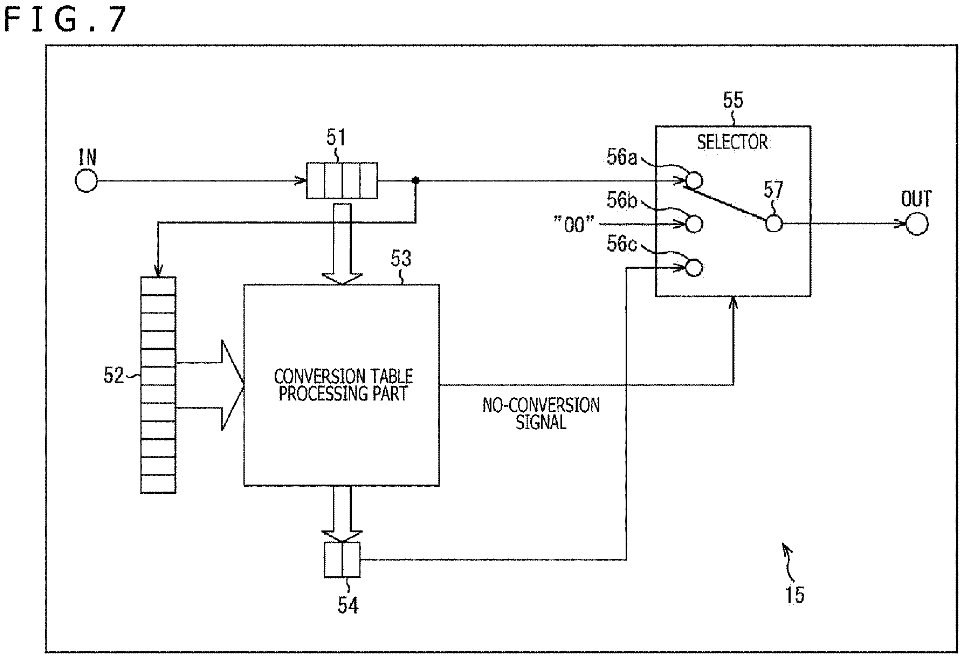

FIG. 7 depicts a typical configuration of the encoding part 15 that performs the above-described compression encoding.

The 4-bit DSD data (e.g., D4[n]) supplied from the input buffer 13 is stored into a register 51 designed to store 4-bit data. The output of the register 51 is connected with one input terminal 56a of a selector 55 and with a register 52 designed to store 12-bit data. The register 52 stores the 12-bit data immediately preceding the 4-bit DSD data stored in register 51 (e.g., D4[n-3],D4[n-2],D4[n-1]).

A conversion table processing part 53 holds the conversion table "table1" supplied from the control part 14. The conversion table processing part 53 determines whether or not any of the 3 values at the address designated by the 12-bit data (e.g., D4[n-3],D4[n-2],D4[n-1]) in the register 52, i.e., table1[D4[n-3],D4[n-2],D4[n-1]][0], table1[D4[n-3],D4[n-2],D4[n-1]][1], and table1[D4[n-3],D4[n-2],D4[n-1]][2], is the same as the 4-bit data (e.g., D4[n]) in the register 51. In the case where one of the 3 values is the same as the 4-bit data, the conversion table processing part 53 stores into a 2-bit register 54 the value corresponding to the column holding the same value, i.e., "01b," "10b," or "11b." The data stored in the 2-bit register 54 is supplied to one input terminal 56c of the selector 55. In the case where none of the 3 values at the address designated by the 12-bit data (e.g., D4[n-3],D4[n-2],D4[n-1]) in the register 52 is the same as the 4-bit data in the register 51 (e.g., D4[n]), the conversion table processing part 53 outputs to the selector 55 a signal indicative of no conversion (called the no-conversion signal hereunder).

The selector 55 selects one of the 3 input terminals 56a to 56c, and outputs the data acquired from the selected input terminal 56 via an output terminal 57. The input terminal 56a is supplied with the 4-bit DSD data (e.g., D4[n]) from the register 51, the input terminal 56b is supplied with "00b," and the input terminal 56c is supplied with the 2-bit converted data from the register 54. In the case where the selector 55 is supplied with the no-conversion signal designating no execution of conversion from the conversion table processing part 53, the selector 55 selects the input terminal 56b to output "00b" via the output terminal 57, before selecting the input terminal 56a to output the 4-bit DSD data (e.g., D4[n]) in the register 51 via the output terminal 57. As a result of this, the 6-bit data "00b+D4[n]," which is output in the case where the conversion table "table1" does not have the same data as D4[n], is output via the output terminal 57. Also, in the case where the no-conversion signal denoting no execution of conversion is not supplied (i.e., where a conversion execution signal denoting execution of conversion is supplied), the selector 55 selects the input terminal 56c, and outputs via the output terminal 57 the 2-bit converted data supplied from the register 54. In this manner, the output terminal 57 outputs the 2-bit data i.e., "01b," "10b," or "11b," which is output in the case where the conversion table "table1" has the same data as D4[n].

### <Flow of the compression encoding process>

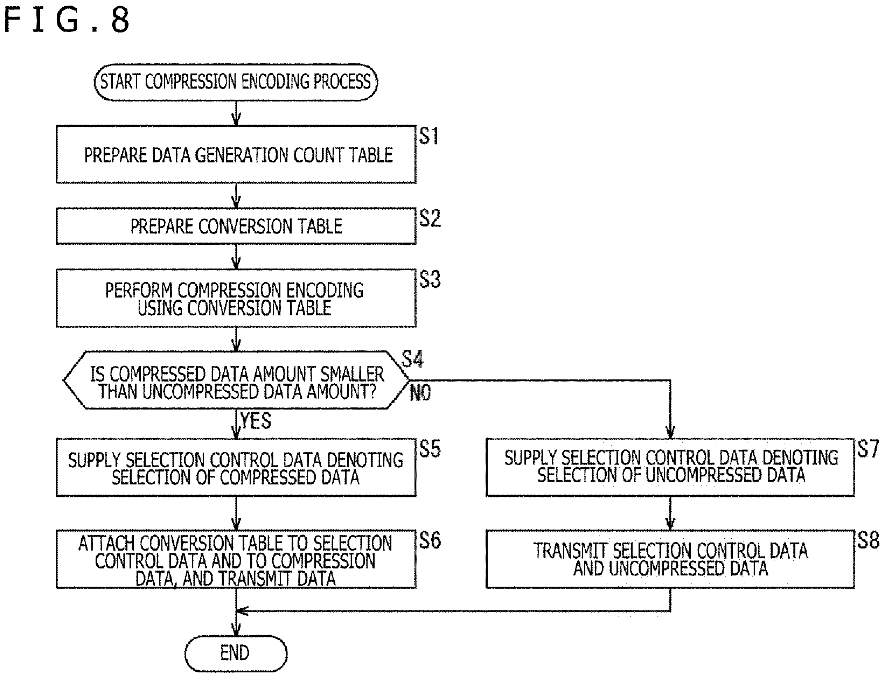

Explained below with reference to the flowchart of FIG. 8 is the compression encoding process performed by the compressing encoding apparatus 10.

It is to be noted that in the process flow of FIG. 8, the processing by the ADC 12 is not included. The explanation concerns the processing applicable after the 1-frame DSD data having undergone ΔΣ modulation by the ADC 12 is output from the input buffer 13.

First in step S1, given 1-frame DSD data, the control part 14 counts the number of times the D4 data item next to the past 3 D4 data items (i.e., past 12-bit data) has been generated, and prepares a data generation count table "pretable" accordingly.

In step S2, the control part 14 prepares a conversion table "table1" of 4096 rows and 3 columns on the basis of the prepared data generation count table "pretable." The control part 14 supplies the prepared conversion table "table1" to the encoding part 15 and to the data transmitting part 18.

In step S3, the encoding part 15 compression-encodes the 1-frame-period DSD data using the conversion table "table1." Specifically, the encoding part 15 processes the 1-frame-period DSD data in a manner converting the 4-bit DSD data D4[n] either into 2-bit data "01b," "10b," or "11b," or into 6-bit data "00b+D4[n]." The compressed data having undergone the compression encoding is supplied to the encoded data buffer 16 and to the data amount comparing part 17.

In step S4, the data amount comparing part 17 compares the amount of 1-frame uncompressed data supplied from the input buffer 13 with the amount of 1-frame compressed data supplied from the encoded data buffer 16, so as to determine whether the amount of the compressed data is smaller than the amount of the uncompressed data.

In the case where it is determined in step S4 that the amount of the compressed data is smaller than the amount of the uncompressed data, control is transferred to step S5. In step S5, the data amount comparing part 17 supplies the data transmitting part 18 with selection control data denoting the selection of the compressed data.

In step S6, the data transmitting part 18 attaches the data of the conversion table "table1" (conversion table data) supplied from the control part 14 to the selection control data denoting the selection of the compressed data (i.e., a flag indicative of compression-encoded data) and to the compressed data supplied from the encoding part 15, before transmitting the data to the opposite apparatus.

Meanwhile, in the case where it is determined in step S4 that the amount of the compressed data is not smaller than the amount of the uncompressed data, control is transferred to step S7. In step S7, the data amount comparing part 17 supplies the data transmitting part 18 with the selection control data denoting the selection of the uncompressed data together with the uncompressed data.

In step S8, the data transmitting part 18 transmits to the opposite apparatus the selection control data denoting the selection of the uncompressed data (i.e., a flag indicative of data not being compression-encoded) together with the uncompressed data.

This completes the compression encoding process performed on the 1-frame DSD data. The above-described processing from step S1 to step S8 is repeatedly carried out on the DSD data supplied consecutively in units of a frame from the input buffer 13.

### <Typical configuration of the decoding apparatus>

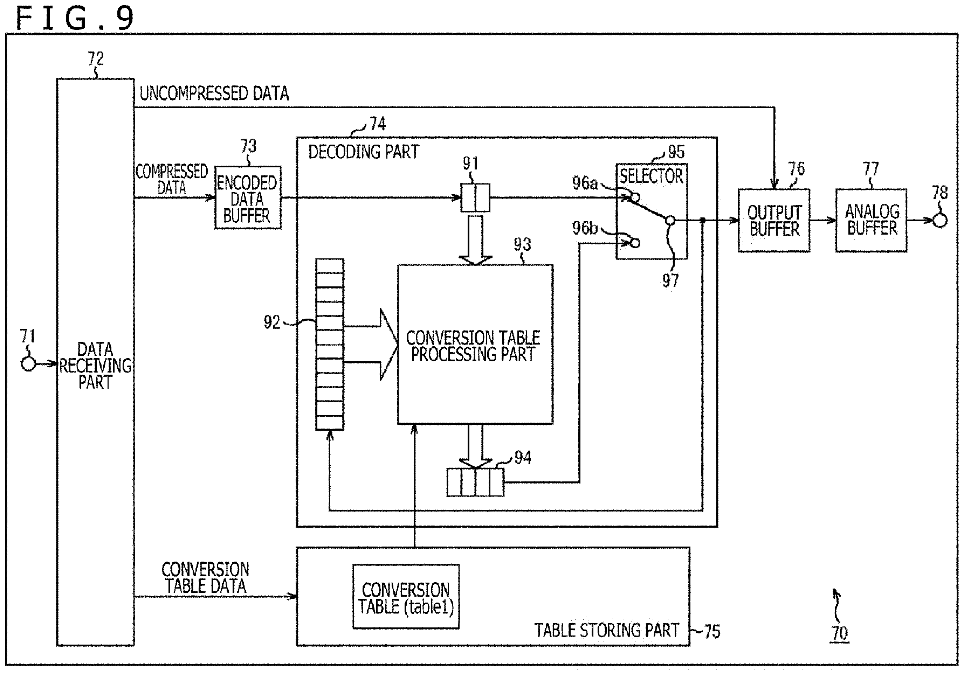

FIG. 9 depicts a representative configuration of a decoding apparatus that supports the above-described new DSD lossless compression encoding technology. A decoding apparatus 70 in FIG. 9 receives an audio signal compression-encoded by and transmitted from the compression encoding apparatus 10 in FIG. 4, and decompresses the received audio signal (in lossless decoding).

The audio signal compression-encoded by and transmitted from the compression encoding apparatus 10 in FIG. 4 is received by an input part 71 of the decoding apparatus 70 over a network (e.g., Local Area Network (LAN), Wide Area Network (WAN)), the Internet, or public networks such as telephone networks or satellite communication networks, all not illustrated. The received audio signal is supplied to a data receiving part 72 of the decoding apparatus 70.

The data receiving part 72 separates a synchronizing signal included in the received data, and corrects any transmission error that may have occurred during data transmission over the network. The data receiving part 72 then determines whether or not the audio signal is compression-encoded on the basis of the selection control data included in the received data and indicating whether or not the audio signal is compression-encoded. In the case where the audio signal is compression-encoded, the data receiving part 72 supplies the received compressed data to an encoded data buffer 73. Also, in the case where the audio signal is not compression-encoded, the data receiving part 72 supplies the received uncompressed data to an output buffer 76. Further, the data receiving part 73 supplies the data of the conversion table "table1" (conversion table data) included in the received data to a table storing part 75. The table storing part 75 stores the conversion table "table1" supplied from the data receiving part 72, and supplies the conversion table "table1" to the decoding part 74 as needed.

The encoded data buffer 73 temporarily stores the compressed data supplied from the data receiving part 72, and supplies the stored data to a downstream decoding part 74 at a predetermined timing.

The decoding part 74 decodes the compressed data into an uncompressed state (in lossless decoding) and supplies the decoded data to the output buffer 76.

### <Details of the decoding method>

The method by which the decoding part 74 performs decoding is described next. Explained below is a case in which the data compression-encoded by and transmitted from the compression encoding apparatus 10 is expressed in units of 2 bits as indicated below for the decoding of E2[n]: ...E2[n-3],E2[n-2],E2[n-1],E2[n],E2[n+1],E2[n+2],E2[n+3]...
where, E2[n] represents a consecutive 2-bit data item that may also be referred to as the E2 data.

The decoding part 74 first determines the value of E2[n]. In the case where E2[n] is "00b," this data item is not included in the received conversion table "table1[4096][3]," so that the 4-bit data item "E2[n+1]+E2[n+2]" next to E2[n] is the data to be decoded. Also, in the case where E2[n] is "01b," "10b," or "11b," this data item is included in the received conversion table "table1[4096][3]." In this case, the conversion table "table1[4096][3]" is referenced and searched for the data to be decoded using the most-recently decoded 12-bit D4 data D4[n-3],D4[n-2],D4[n-1]. The data to be decoded is located in "table1[D4[n-3],D4[n-2],D4[n-1]][E2[n]-1]." In this manner, the decoding part 74 decodes the compressed data into an uncompressed state (in lossless decoding). As illustrated in FIG. 9, the decoding part 74 is configured with a 2-bit register 91, a 12-bit register 92, a conversion table processing part 93, a 4-bit register 94, and a selector 95.

The 2-bit E2 data (e.g., E2[n]) supplied from the encoded data buffer 73 is stored into the register 91. The 12-bit register 92 is supplied with the output from the selector 95. The register 92 stores the 12-bit data (e.g., D4[n-3],D4[n-2],D4[n-1]) decoded immediately before the 2-bit E2 data (e.g., E2[n]) in the register 91. In the case where the 2-bit E2 data (e.g., E2[n]) stored in the register 91 is "00b," the selector 95 selects an input terminal 96a, and outputs accordingly the 4-bit data "E2[n+1]+E2[n+2]" next to E2[n] as the decoding result via an output terminal 97. In the case where the 2-bit E2 data (e.g., E2[n]) stored in the register 91 is "01b," "10b," or "11b," the conversion table processing part 93 stores into the register 94 the 4-bit data stored in "table1[D4[n-3],D4[n-2],D4[n-1]][E2[n]-1]" in the conversion table "table1" supplied from the table storing part 75. The selector 95 selects an input terminal 96b, and outputs accordingly the data in the register 94 as the decoding result via the output terminal 97.

The output buffer 76 selects as needed either the uncompressed data supplied from the data receiving part 72 or the decoded data from the decoding part 74, and outputs the selected data to an analog filter 77.

The analog filter 77 performs a predetermined filtering process such as low-pass filtering or band-pass filtering on the decoded data supplied from the output buffer 76, and outputs the processed data via an output part 78.

### <Flow of the decoding process>

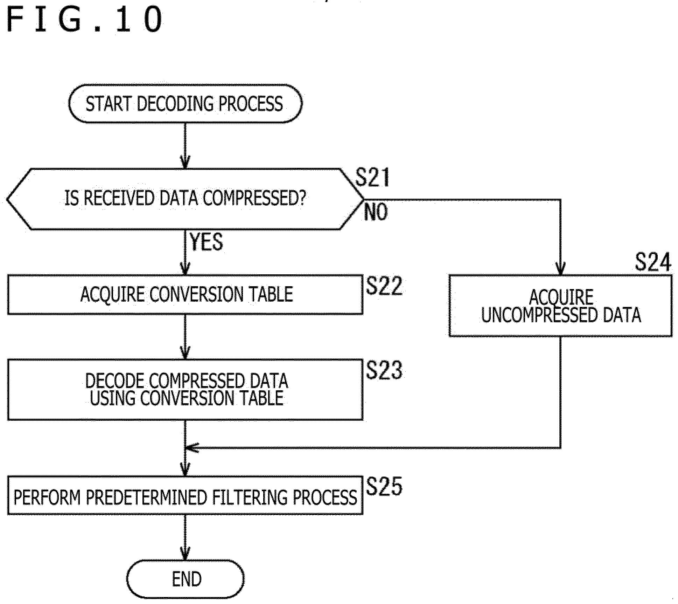

The decoding process performed by the decoding apparatus 70 is further explained below with reference to the flowchart of FIG. 10.

First in step S21, the data receiving part 72 determines whether the received data is compressed data having undergone compression encoding on the basis of the selection control data included in the received data.

In the case where it is determined in step S21 that the received data is compressed data, control is transferred to step S22. In step S22, the data receiving part 72 supplies the table storing part 75 with the conversion table data included in the received data. The conversion table processing part 93 acquires the received conversion table "table1" via the table storing part 75. Also in step S22, the compressed data included in the received data is supplied to the encoded data buffer 73.

In step S23, the decoding part 74 decodes the compressed data supplied from the encoded data buffer 73 using the conversion table "table1," and supplies the decoded data to the output buffer 76. That is, in the case where the 2-bit E2 data (e.g., E2[n]) is "00b," the decoding part 74 supplies the output buffer 76 with the 4-bit data "E2[n+1]+E2[n+2]" next to E2[n] as the decoding result. In the case where the 2-bit E2 data (e.g., E2[n]) is "01b," "10b," or "11b," the decoding part 74 supplies the output buffer 76 with the 4-bit data held in "table1[D4[n-3],D4[n-2],D4[n-1]][E2[n]-1]" in the conversion table "table1" as the decoding result.

Meanwhile, in the case where it is determined in step S21 that the received data is not compressed data, i.e., that the received data is uncompressed data, control is transferred to step S24. In step S24, the data receiving part 72 acquires the uncompressed data included in the received data, and supplies the acquired uncompressed data to the output buffer 76.

As a result of the above processing, either the uncompressed data or the data decoded by the decoding part 74 is supplied to the output buffer 76. The data supplied to the output buffer 76 is output to the analog filter 77.

In step S25, the analog filter 77 performs a predetermined filtering process on the data supplied via the output buffer 76. The output part 78 outputs the audio signal having undergone the filtering process.

The above processing is carried out repeatedly on the audio signal in units of a frame.

### <Configuration of the DSD lossless stream>

According to the above-described new DSD lossless compression encoding technology, DSD data is divided into blocks of a fixed length (4096×32=131,072 bits) per channel and compressed. After the compression, the compressed data in 10 consecutive blocks is prefixed with a header to form a Group of Blocks (GOB). The GOB as a unit is further prefixed with configuration information to form a DSD lossless payload (DSD_lossless_payload()). The information required for block decompression (code book; reference table) is stored into the GOB header and into the GOB data. With stream switching in AAC taken into consideration, the time period of the block (audio frame) is set to be approximately the same as depicted in AAC.

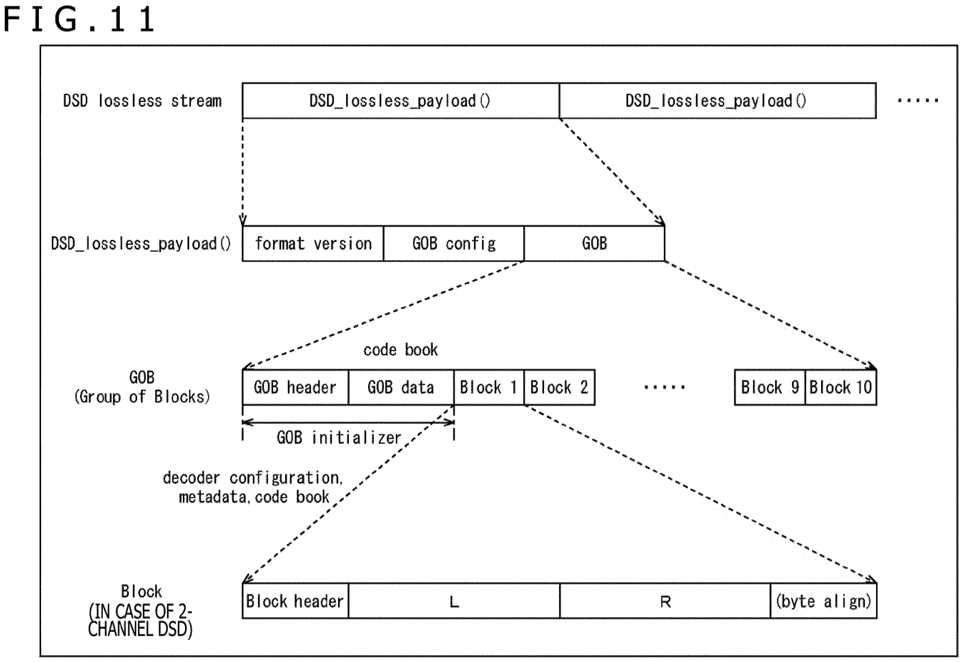

FIG. 11 depicts a typical basic configuration of the DSD lossless stream. As illustrated in the top row of FIG. 11, a DSD lossless stream is configured with multiple DSD lossless payloads (DSD_lossless_payload()).

As depicted in the second row from the top in FIG. 11, one DSD lossless payload is configured with a format version portion, a GOB config portion, and a GOB.

As depicted in the third row from the top in FIG. 11, the GOB is constituted by a GOB header, GOB data, and 10 blocks (blocks 1 to 10). The GOB header and the GOB data for use in decoding the current GOB are referred to as a GOB initializer as well. The GOB initializer includes decoder configuration information, metadata, and a code book for use in decoding.

As depicted in the bottom row in FIG. 11, one block is configured with a block header, left-channel audio data (L), right-channel audio data (R), and a byte align portion (in the case where DSD data is for 2 channels, i.e., for right and left channels).

One block stores uncompressed DSD data of 4096×32=131,072 bits per channel regardless of the file system in use. That is, the length of one block (block length) is approximately 46 milliseconds in the case where the sampling frequency is 2.8 MHz, approximately 23 milliseconds where the sampling frequency is 5.6 MHz, or approximately 12 milliseconds where the sampling frequency is 11.2 MHz. For example, where the sampling frequency is 2.8 MHz, a single GOB stores data of a reproduction time of approximately 468 milliseconds.

### <Syntax>

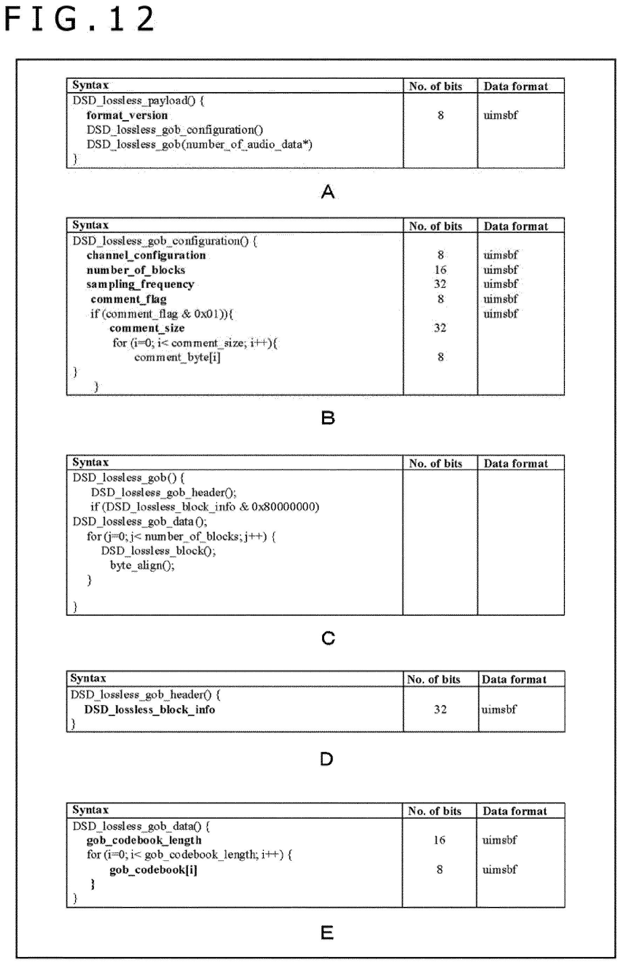

Subfigure A in FIG. 12 depicts examples of the syntax of the DSD lossless payload. As illustrated in Subfigure A, the DSD lossless payload (DSD_lossless_payload()) stores format version, DSD_lossless_gob_configuration(), and DSD_lossless_gob(number_of_audio_data), for example. This format version corresponds to the format version in FIG. 11. Also, the DSD_lossless_gob_configuration() corresponds to the GOB config in FIG. 11. The DSD_lossless_gob() corresponds to the GOB in FIG. 11.

Subfigure B in FIG. 12 depicts an example of the syntax of DSD_lossless_gob_configuration(). As illustrated in Subfigure B in FIG. 12, the DSD_lossless_gob_configuration() stores channel_configuration, number of blocks, sampling_frequency, comment_flag, comment_size, and comment_byte, for example.

Subfigure C in FIG. 12 depicts an example of the syntax of DSD_lossless_gob(). As illustrated in Subfigure C in FIG. 12, the DSD_lossless_gob() stores DSD_lossless_gob_header(), DSD_lossless_gob_data(), DSD_lossless_block(), and byte_align(), for example. This DSD_lossless_gob_header() corresponds to the GOB header in FIG. 11. The DSD_lossless_gob_data() corresponds to the DOB data in FIG. 11. The DSD_lossless_block() corresponds to each of the blocks 1 to 10 in FIG. 11.

Subfigure D in FIG. 12 depicts an example of the syntax of DSD_lossless_gob_header(). As illustrated in Subfigure D, the DSD_lossless_gob_header() stores DSD_lossless_block_info, for example.

Subfigure D in FIG. 12 depicts an example of the syntax of DSD_lossless_gob_data(). As illustrated in Subfigure D in FIG. 12, the DSD_lossless_gob_data() stores gob_codebook_length and gob_codebook[i], for example. The gob_codebook[i] corresponds to the code book in FIG. 11.

### <Decoding>

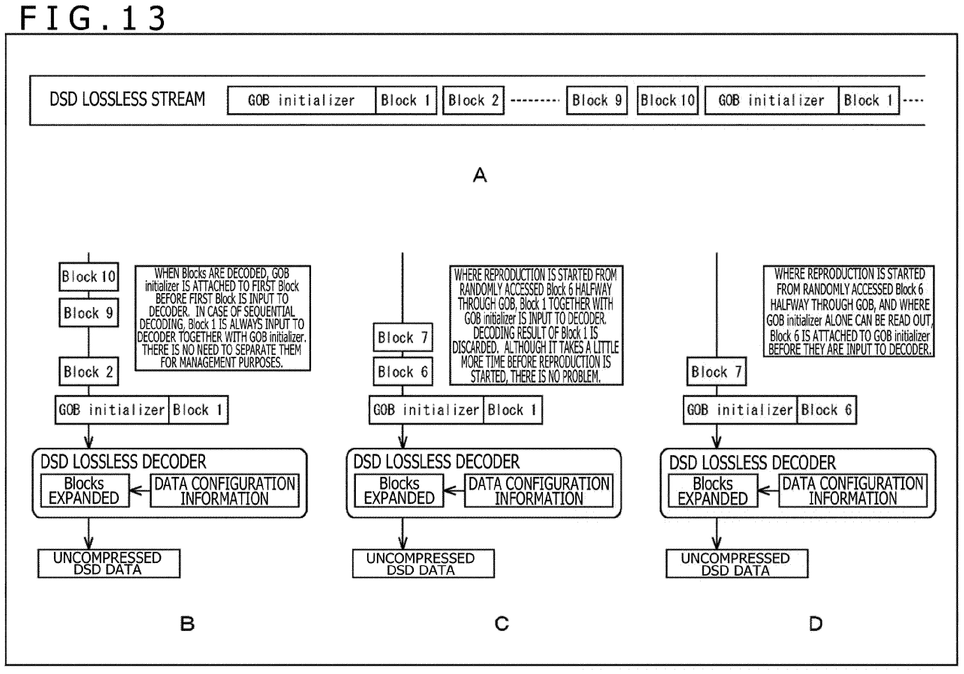

Explained below is an example of how to decode the DSD lossless stream according to the above-described new DSD lossless compression encoding technology. In the DSD lossless stream, the data of a predetermined time period is managed as a GOB as discussed above. That is, as depicted in Subfigure A in FIG. 13, the DSD lossless stream is configured with a GOB initializer followed by a predetermined number of consecutive blocks (e.g., 10 blocks). Because the GOB initializer has the reproduction time of 0, regarding this portion as an access unit complicates reproduction time management. For this reason, the GOB initializer is attached to block 1, which is the first block heading the GOB, so that the GOB initializer and block 1 are handled as a single access unit.

The decoder (a DSD lossless decoder) for the DSD lossless stream expands and decodes each of the blocks using the decoder configuration information included in the GOB initializer. In order to decode each block in the GOB, the GOB initializer needs to be read into the DSD lossless decoder. For example, in the case where the GOB is decoded successively from the first block (block 1) onward (in successive decoding), the blocks need only be input consecutively to the DSD lossless decoder since the GOB initializer is attached to block 1, as depicted in Subfigure B in FIG. 13.

In the case where reproduction is started from a block halfway into the GOB (e.g., in random access), the GOB initializer is also required to be first input to the DSD lossless decoder. For example, where reproduction is to be started from block 6, block 1 with the GOB initializer attached thereto is first input to the DSD lossless decoder as depicted in Subfigure C in FIG. 13, with block 6 and the subsequent blocks input to the DSD lossless decoder thereafter. In this case, the DSD lossless decoder discards the decoding result of block 1 and outputs the decoding result of block 6 and subsequent blocks.

It is to be noted that, in the case where the GOB initializer can be separated from block 1 when read out of the DSD lossless stream, the GOB initializer may be first read out and attached to block 6 for input to the DSD lossless decoder, as depicted in Subfigure D in FIG. 13. In this case, the decoding of unnecessary blocks need not be carried out.

### <Flow of putting data into MP4 format>

With MPEG-DASH technology, the use of files in the ISOBMFF format stipulated by the ISO/IEC 14496-12 standard has been studied as the means for delivering high-quality videos and music to users. For example, the use of files in the file format stipulated by Part 14 of MPEG-4 (ISO/IEC 14496-14: 2003), which is a format derived from the ISOBMFF format (the format is also referred to as MP4, and the file as an MP4 file hereunder), has been studied.

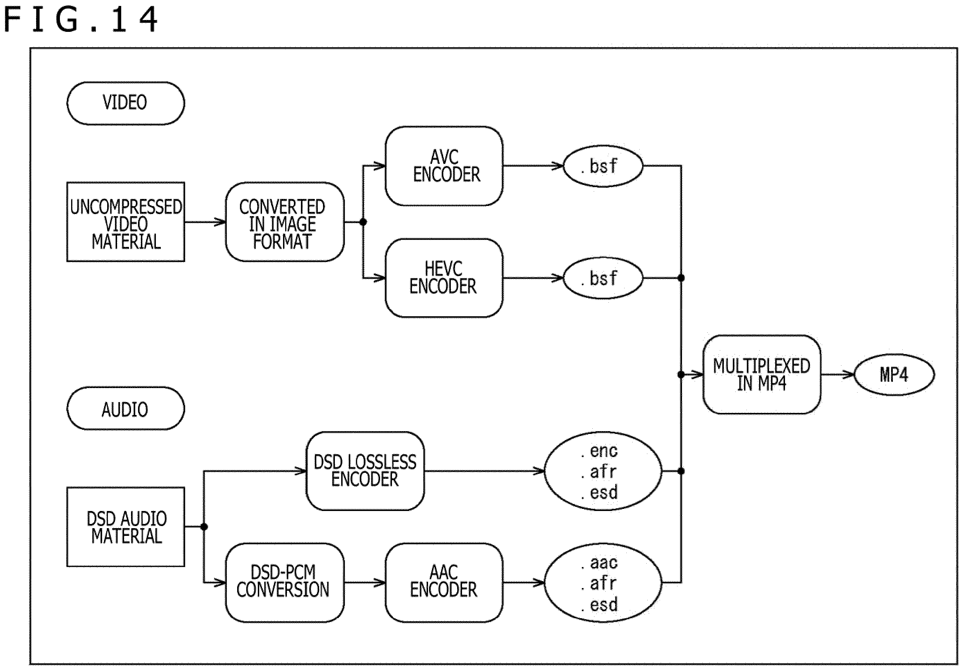

Video and audio data may be input into an MP4 file as depicted in the example of FIG. 14. In the case of video data, an uncompressed video material (video data) is converted in image format and encoded by an Advanced Video Coding (AVC) encoder or by a High Efficiency Video Coding (HEVC) encoder, for example, to form a file with the extension of "bsf" attached thereto (.bsf file). The .bsf file is a file that stores the encoded stream.

In the case of audio data, a DSD audio material (DSD data) is encoded by the DSD lossless encoder using the above-described new DSD lossless compression encoding technology, for example, to form a file with the extension "enc" (.enc file), "afr" (.afr file), or "esd" (.esd file) attached thereto. The .enc file is a file that stores the encoded DSD lossless stream. The .afr file stores metadata for assisting in the preparation of a sample table for storage into an MP4 file. The .esd file stores metadata for data configuration.

Alternatively, the DSD audio material may be converted into PCM data through DSD-PCM conversion, before being encoded by an AAC encoder to form a file with the extension "aac" (.aac file), ".afr" (.afr file), or "esd" (.esd file) attached thereto. The .aac file is a file that stores an encoded aac stream.

The information stored in these files is multiplexed to form an MP4 file.

### <MP4 file format>

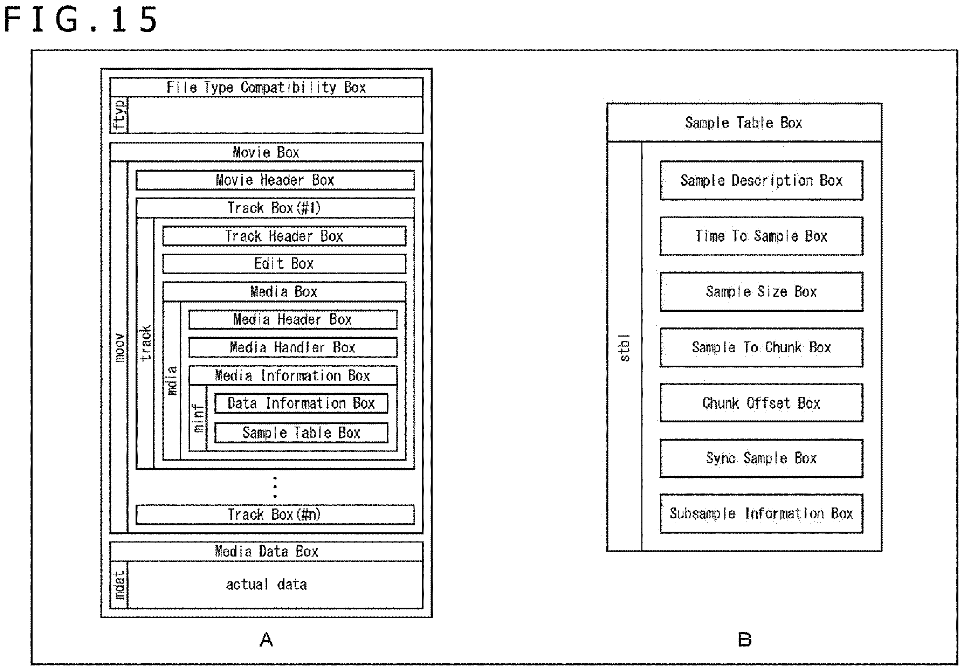

Subfigure A in FIG. 15 depicts a representative structure of the MP4 file. The MP4 file has a hierarchical structure called the boxes. For example, as illustrated in Subfigure A in FIG. 15, the MP4 file has a file type compatibility box (ftyp), a movie box (moov), and a media data box (mdat). The file type compatibility box (ftyp) denotes the beginning of the file and stores information identifying the file format type. The movie box (moov) stores metadata regarding content, for example. The media data box (mdat) stores actual AV data (actual data).

For example, the movie box (moov) has a movie header box and a track box (track). The movie header box stores movie time axis setting information and information regarding scaling, rotation, and reproduction speed, for example. The track box (track) is generated for each track. The track box (track) stores information related to the current track, for example.

For example, the track box (track) has a track header box, an edit box, and a media box (mdia). The track header box stores information regarding screen composition such as spatial positions, size, scaling, and layer, as well as information related to the association between tracks, for example. The edit box stores information regarding AV synchronization such as time positions and reproduction speed, for example. The media box (mdia) stores information regarding AV data, for example.

The media box (mdia) has a media header box, a media handler box, and a media information box (minf), for example. The media header box and the media handler box store information regarding the type of AV data, settings of the media time axis, and language settings, for example. The media information box (minf) stores information regarding data and samples, for example.

The media information box (minf) has a data information box and a sample table box, for example. The data information box stores information regarding data references such as data storage locations and a referencing method, for example. The sample table box stores information regarding sample management such as data times and address information, for example.

### <Sample table box>

A sample is a minimum access unit for the MP4 file format. Subfigure B in FIG. 15 depicts a representative structure of the sample table box. As illustrated in Subfigure B in FIG. 15, the sample table box (stbl) has a sample description box, a time to sample box, a sample size box, a sample to chunk box, a chunk offset box, a sync sample box, and a subsample information box.

The sample description box stores information regarding codec and image size, for example. The sample description box also holds a sample entry that stores information regarding samples, for example. Decode configuration information is stored in the sample entry. The time to sample box stores information regarding the sample time, for example. The sample size box stores information regarding the sample size, for example. The sample to chunk box stores information regarding sample data locations, for example. The chunk offset box stores information regarding data offset, for example.

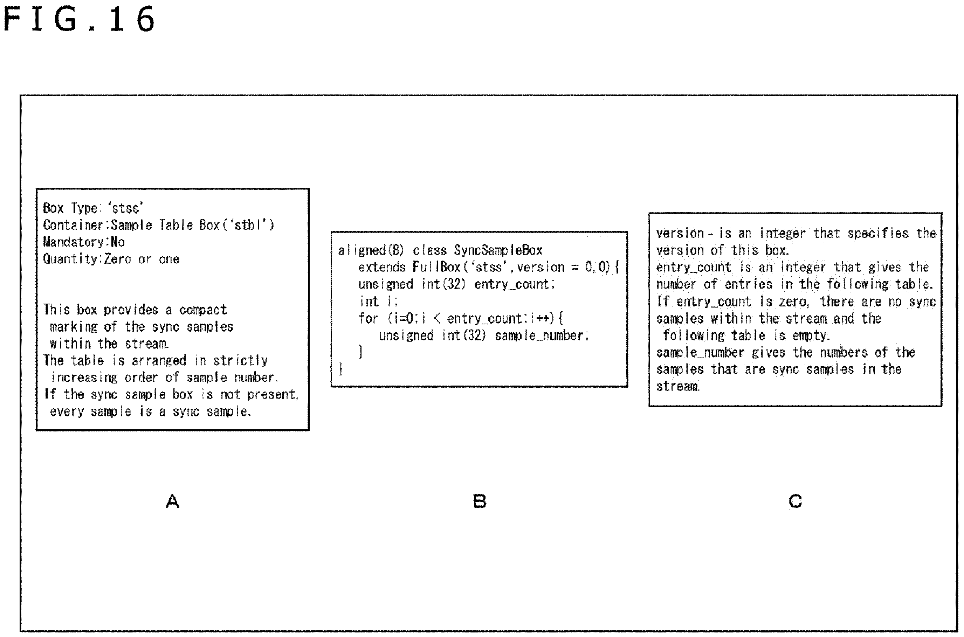

The sync sample box stores information regarding a sync sample, for example. The sync sample is a randomly accessible sample, i.e., a sample from which decoding can be started. That is, the sync sample box stores information necessary for starting decoding (e.g., information required for decoding, information denoting the start point of decoding, etc.). Subfigure A in FIG. 16 depicts a typical definition of the sync sample. Subfigure B in FIG. 16 depicts an example of the syntax of sync samples. Subfigure C in FIG. 16 depicts an example of the semantics of sync samples.

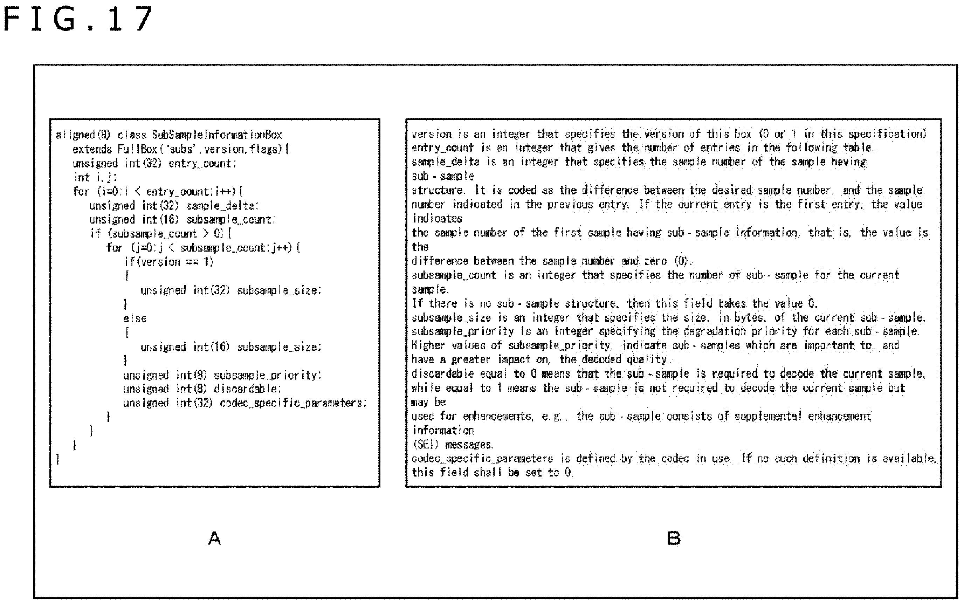

The subsample information box stores information regarding subsamples, for example. A subsample is a unit indicative of a portion of the byte range designated by the sample. That is, the byte range designated by the sample may be divided into multiple subsamples. In other words, multiple subsamples may be set in the sample. Subfigure A in FIG. 17 depicts an example of the syntax of a subsample. Subfigure B in FIG. 17 depicts an example of the semantics of the subsample.

### <Putting the DSD lossless stream into the MP4 file>

As described above, high-quality DSD data may be encoded into a DSD lossless stream using the new DSD lossless compression encoding technology, the DSD lossless stream being put into an MP4 file and streamed using MPEG-DASH. The delivery of higher-quality data is enabled in this manner. However, there has not been a method devised to put the DSD lossless stream into the MP4 file. For example, if a single audio sample (1 quantified sample) in an elementary stream were assigned to a single MP4 sample on the MP4 system layer as theoretically required, there would be a huge number of MP4 samples generated. For example, in the case of DSD data at 2.8 MHz, there would be 2.8 million MP4 samples generated in one second. This would impose an enormous load on a system that performs processing one MP4 sample at a time, which is an eminently inefficient and impractical exercise. This has made it impossible to deliver the DSD lossless stream using MPEG-DASH, which has made the delivery of higher-quality audio data impractical.

Thus it is proposed here that an audio access unit (audio frame) aggregating multiple quantified samples within a predetermined time period be constituted and associated with each MP4 sample. When the samples are handled in access units of a large data size for the sake of a reduced implementation burden, the processing load involved is lowered. In particular, the number of times a given process is performed such as the loop execution count per sample is significantly reduced.

### <2. First embodiment>

### <Delivery system>

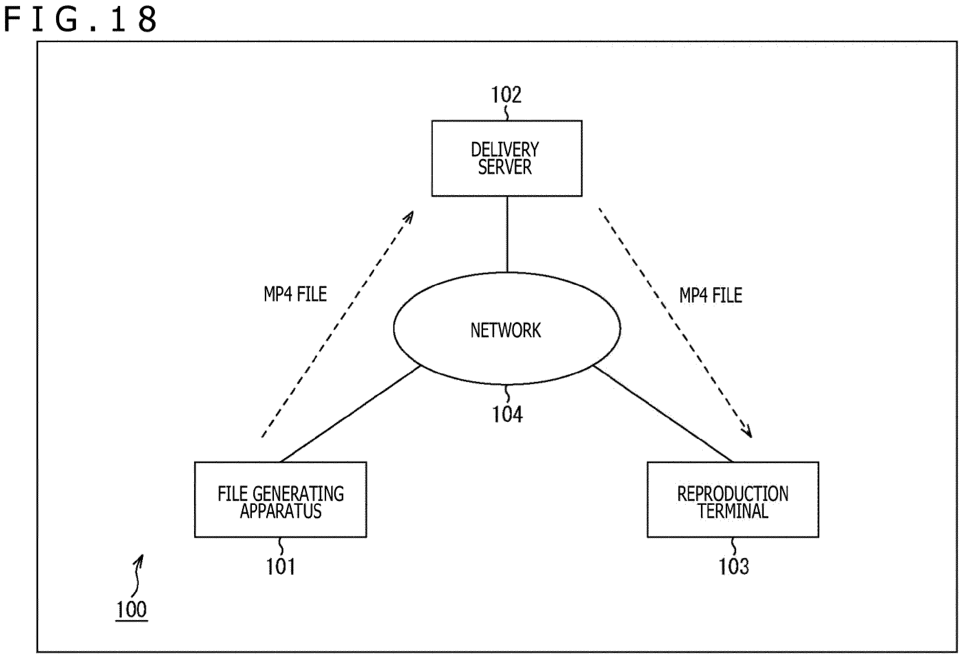

What follows is a more detailed description of the present technology. It is to be noted that the delivery of sound data (audio data) related to this technology is discussed below. FIG. 18 is a block diagram depicting a typical configuration of a delivery system as one embodiment of the information processing system to which the present technology is applied. A delivery system 100 in FIG. 18 delivers video and audio data (content). In the delivery system 100, a file generating apparatus 101, a delivery server 102, and a reproduction terminal 103 are interconnected communicably via a network 104.

The file generating apparatus 101 performs processes related to the generation of MP4 files that store audio data. For example, the file generating apparatus 101 generates audio data, generates an MP4 file that stores the generated audio data, and supplies the MP4 file to the delivery server 102. The delivery server 102 performs processes related to the delivery of MP4 files. For example, the delivery server 102 acquires and manages the MP4 files supplied from the file generating apparatus 101, and provides the service of delivering the files using MPEG-DASH. For example, in response to requests from the reproduction terminal 103, the delivery server 102 supplies the requested MP4 file to that reproduction terminal 103. The reproduction terminal 103 performs processes related to the reproduction of audio data. For example, the reproduction terminal 103 requests the delivery server 102 to deliver an MP4 file according to MPEG-DASH, and acquires the MP4 file supplied in response to the request. The reproduction terminal 103 decodes the MP4 file to reproduce audio data.

The network 104 is any communication network that may be wired, wireless, or both wired and wireless in configuration. Also, the network 104 may be constituted by a single or multiple communication networks. For example, the network 104 may include communication networks and communication channels supporting any suitable communication protocols, such as the Internet, public telephone networks, wide area mobile communication networks known as 3G or 4G lines, Wide Area Networks (WANs), Local Area Networks (LANs), wireless communication networks providing communication in accordance with the Bluetooth (registered trademark) standard, communication channels for short-range wireless communication such as Near Field Communication (NFC), infrared communication channels, and wired communication networks supporting protocols such as High-Definition Multimedia Interface (HDMI; registered trademark) or Universal Serial Bus (USB).

The file generating apparatus 101, the delivery server 102, and the reproduction terminal 103 are each connected communicably with the network 104 that allows them to exchange information therebetween. The file generating apparatus 101, the delivery server 102, and the reproduction terminal 103 may be connected with the network 104 in wired fashion, in wireless fashion, or in both wired and wireless fashion.

It is to be noted that, whereas FIG. 18 depicts the delivery server 100 configured with one generating apparatus 101, one delivery server 102, and one reproduction terminal 103, this is not limitative of the system configuration. There may be any number of units of each of these apparatuses, and the number of units of each apparatus need not be the same. For example, in the delivery server 100, there may be one or multiple file generating apparatuses 101, one or multiple delivery servers 102, and one or multiple reproduction terminals 103.

### <File generating apparatus>

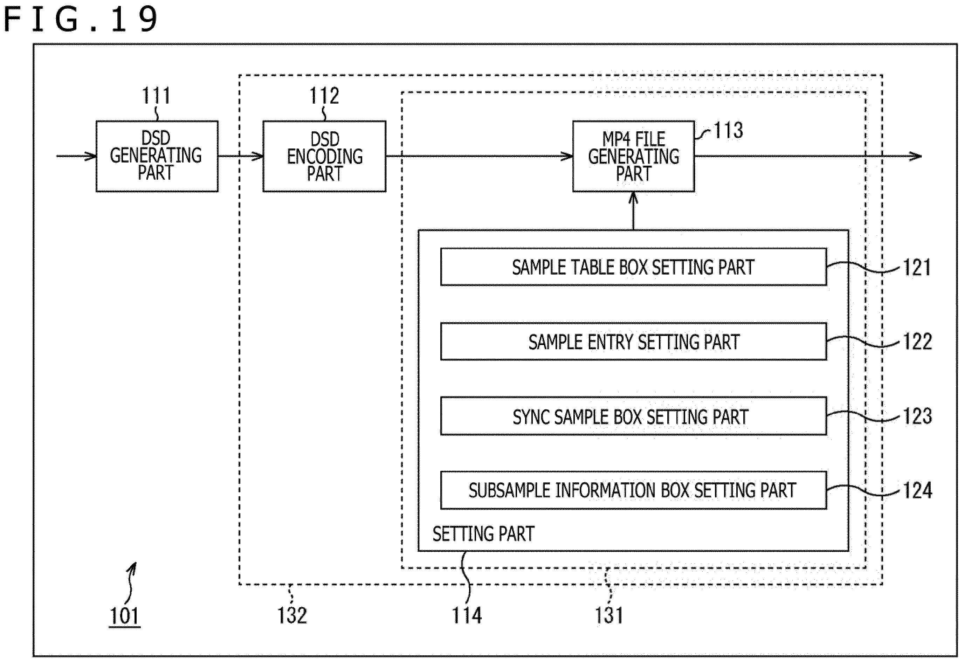

FIG. 19 is a block diagram depicting a representative configuration of the file generating apparatus 101. As illustrated in FIG. 19, the file generating apparatus 101 includes a DSD generating part 111, a DSD encoding part 112, an MP4 file generating part 113, and a setting part 114.

The DSD generating part 111 performs processes related to the generation of DSD data. For example, the DSD generating part 111 subjects input audio signal (audio analog signal) to ΔΣ modulation for conversion into DSD data that is 1-bit digital data. Also, the DSD generating part 111 supplies the generated DSD data to the DSD encoding part 112, for example.

The DSD encoding part 112 performs processes related to the encoding of DSD data. For example, the DSD encoding part 112 encodes the DSD data supplied from the DSD generating part 111 using the above-described new DSD lossless compression encoding technology to generate a DSD lossless stream. Also, the DSD encoding part 112 supplies the generated DSD lossless stream to the MP4 file generating part 113, for example.

The MP4 file generating part 113 performs processes related to the generation of MP4 files. For example, the MP4 file generating part 113 acquires a DSD lossless stream from the DSD encoding part 112 to generate an MP4 file that stores the DSD lossless stream. The MP4 file generating part 113 generates the MP4 file in accordance with the settings provided by the setting part 114, for example. Further, the MP4 file generating part 113 outputs the generated MP4 file to the outside of the file generating apparatus 101. For example, the MP4 file generating part 113 supplies the MP4 file to the delivery server 102 via the network 104.

The setting part 114 performs processes related to the settings with which the MP4 file generating part 113 generates MP4 files. For example, the setting part 114 generates the settings for generating MP4 files and specifies the settings to the MP4 file generating part 113. For example, the setting part 114 includes a sample table box setting part 121, a sample entry setting part 122, a sync sample box setting part 123, and a subsample information box setting part 124. The sample table box setting part 121 performs processes related to the setting of the sample table box. The sample entry setting part 122 performs processes related to the setting of the sample entry. The sync sample box setting part 123 performs processes related to the setting of the sync sample box. The subsample information box setting part 124 performs processes related to the setting of the subsample information box.

Incidentally, both the MP4 file generating part 113 and the setting part 114 may be configured in a single apparatus (MP4 file generating apparatus 131). The MP4 file generating apparatus 131 generates an MP4 file that stores the input DSD lossless stream and outputs the generated MP4 file. Also, the configuration of the MP4 file generating apparatus 131 may be supplemented with the DSD encoding part 112 to form a single apparatus (MP4 file generating apparatus 132). The MP4 file generating apparatus 132 losslessly encodes input DSD data to generate a DSD lossless stream, and generates an MP4 file that stores the DSD lossless stream, before outputting the MP4 file.

### <Reproduction terminal>

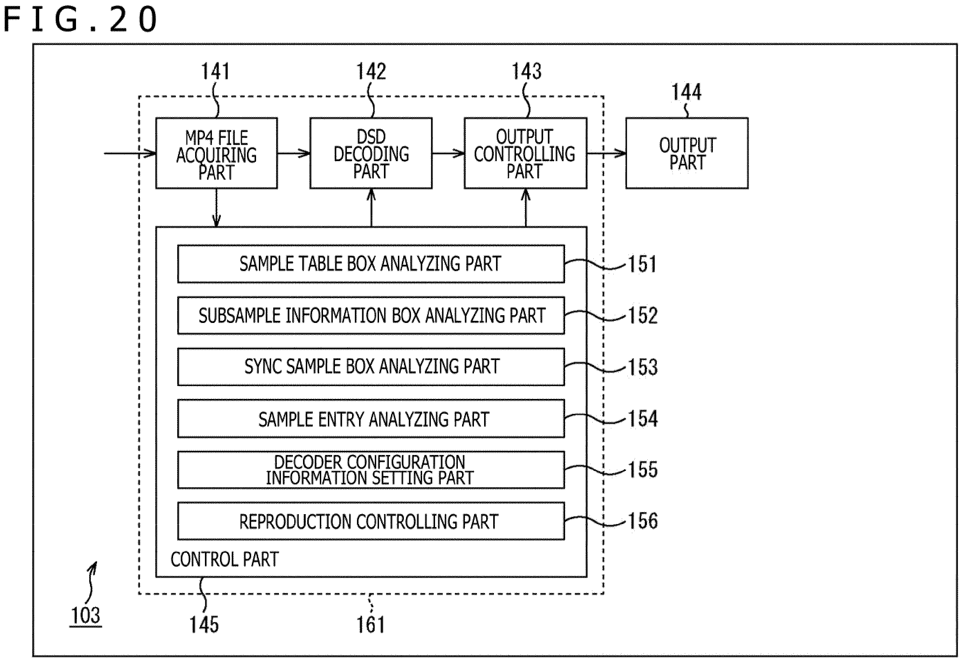

FIG. 20 is a block diagram depicting a representative configuration of the reproduction terminal 103. As illustrated in FIG. 20, the reproduction terminal 103 includes an MP4 file acquiring part 141, a DSD decoding part 142, an output controlling part 143, an output part 144, and a control part 145.

The MP4 file acquiring part 141 performs processes related to the acquisition of MP4 files. For example, the MP4 file acquiring part 141 requests the delivery server 102 to deliver content according to MPEG-DASH, and acquires an MP4 file of the content supplied in response to the request. Also, the MP4 file acquiring part 141 extracts a DSD lossless stream from the acquired MP4 file and supplies the extracted stream to the DSD decoding part 142, for example. Further, the MP4 file acquiring part 141 extracts control information from the acquired MP4 file and supplies the extracted information to the control part 145, for example.

The DSD decoding part 142 performs processes related to the decoding of DSD lossless streams. For example, the DSD decoding part 142 decodes a DSD lossless stream using a decoding method supporting the above-described new DSD lossless compression encoding technology, thereby restoring DSD data. It is to be noted that the DSD decoding part 142 performs the decoding under control of the control part 145, for example. Also, the DSD decoding part 142 supplies the restored DSD data to the output controlling part 143, for example.

The output controlling part 143 performs processes related to the output control of DSD data. The output controlling part 143 controls the output of DSD data by, for example, discarding the DSD data supplied from the DSD decoding part 142 or supplying the DSD data to the output part 144. It is to be noted that the output controlling part 143 carries out the output control under control of the control part 145, for example.

The output part 144 performs processes related to the output of DSD data. For example, equipped with speakers or like components, the output part 144 converts the DSD data supplied from the output controlling part 143 into an audio signal (audio analog signal) and outputs the audio signal through the speakers. Alternatively, the output part 144 may be furnished with output terminals or like components to thereby output the audio signal or DSD data to the outside of the reproduction terminal 103 (i.e., to another apparatus). The output part 144 may be configured as desired and may include devices other than those mentioned above.

The control part 145 performs processes related to the decoding control of DSD lossless streams and associated with the output control of DSD data. For example, the control part 145 controls the DSD decoding part 142 to regulate the decoding of DSD lossless streams. Also, the control part 145 controls the output controlling part 143 to regulate the output of DSD data, for example. The control part 145 acquires control information from the MP4 file acquiring part 141, for example, to perform these controls on the basis of the acquired control information.

For example, the control part 145 includes a sample table box analyzing part 151, a subsample information box analyzing part 152, a sync sample box analyzing part 153, a sample entry analyzing part 154, a decoder configuration information setting part 155, and a reproduction controlling part 156.

The sample table box analyzing part 151 performs processes related to analyzing the sample table box. The subsample information box analyzing part 152 performs processes related to analyzing the subsample information box. The sync sample box analyzing part 153 performs processes related to analyzing the sync sample box. The sample entry analyzing part 154 performs processes related to analyzing the sample entry. The decoder configuration information setting part 155 performs processes related to analyzing the decoder configuration information. The reproduction controlling part 156 performs processes related to the reproduction control of DSD data.

Incidentally, the MP4 file acquiring part 113, the DSD decoding part 142, the output controlling part 143, and the control part 145 may be configured in a single apparatus (MP4 file reproducing apparatus 161). The MP4 file reproducing apparatus 161 extracts a DSD lossless stream from the input MP4 file and decodes the extracted DSD lossless stream to generate DSD data. Further, the MP4 file reproducing apparatus 161 outputs the generated DSD data of a desired range (i.e., ranging from a desired location to a desired location).

### <Setting MP4 samples>

As described above, there has yet to be a method devised to store into an MP4 file the DSD lossless stream in which high-quality DSD data would be encoded using the new DSD lossless compression encoding technology. For example, it has yet to be determined which data is to be assigned to which samples in the MP4 file.

The present technology thus proposes that, given a file in a predetermined file format for storing encoded data derived from audio data, the encoded data being in groups of a predetermined number of blocks, a sample is to be set to the file, the sample being a minimum access unit in the file and including initialization information for decoding each of the groups of the blocks.

Preferably, the encoded data may be the above-described DSD lossless stream (a stream in which DSD data is encoded using the above-mentioned new DSD lossless compression encoding technology). The blocks may be those in the DSD lossless stream, each group of blocks may be the GOB, and the initialization information may be the GOB initializers. The predetermined file format may be the above-mentioned MP4 file format (i.e., file format complying with the ISO/IEC 14496 standard), and the samples may be those in the MP4 file. That is, the MP4 file may be set with samples including the GOB initializers of the DSD lossless stream, for example. The sample entry setting part 122 is configured to set the samples each including the GOB initializer, for example.

The above settings allow each of the blocks to be decoded using the initialization information. That is, the DSD lossless stream may be stored in the MP4 file. As a result, the streaming delivery of the DSO lossless stream using MPEG-DASH technology is implemented, and audio data of higher quality is transmitted.

### <Sampling each of the blocks>

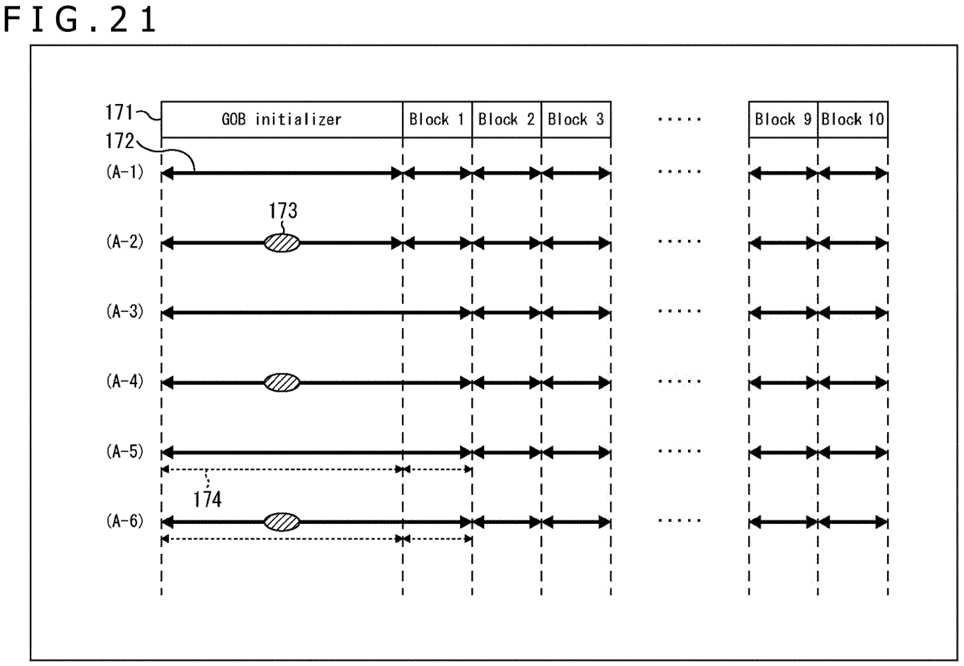

Each of the blocks in the DSD lossless stream may be assigned to a different sample. That is, one block may be assigned to one sample in the MP4 file. For example, as depicted in FIG. 21, a sample indicated by a double-headed arrow 172 may be set to a DSD lossless stream 171 of one GOB (10 blocks). The double-headed arrow 172 denotes the range of the sample.

For example, as indicated in (A-1), a sample may be set to each of the blocks. In this case, a total of 11 samples are set to the DSD lossless stream 171, i.e., a sample that includes the GOB initializer and a sample for each of the blocks. The sample entry setting part 122, for example, sets the samples for the blocks in addition to the sample including the GOB initializer.

Also, as indicated in (A-2), of the samples set as depicted in (A-1), the one including the GOB initializer may be set as a sync sample. In FIG. 21, an ellipse 173 denotes that this sample is the sync sample. The sync sample setting part 123, for example, sets the sample including the GOB initializer as the sync sample. In this case, the sync sample includes the GOB initializer but excludes any block, so that the reproduction time of the sync sample is 0.

Also, as indicated in (A-3), the sample including the GOB initializer may also include the first block (block 1) of the GOB, with the second and subsequent blocks of the GOB being assigned to a sample each. In this case, a total of 10 samples are set to the DSD lossless stream 171, i.e., a sample including the GOB initializer and block 1, and a sample for each of blocks 2 to 10. The sample entry setting part 122, for example, sets a sample that includes the GOB initializer and block 1, and a sample for each of blocks 2 to 10.

Also, as indicated in (A-4), of the samples set as depicted in (A-3), the one including the GOB initializer and block 1 may be set as the sync sample. The sync sample box setting part 123, for example, sets the sample including the GOB initializer and block 1 as the sync sample.

Also, as indicated in (A-5), of the samples set as depicted in (A-3), the one including the GOB initializer and block 1 may be set to have a subsample assigned to the GOB initializer and another subsample assigned to block 1. In FIG. 21, a dotted double-headed arrow 174 denotes the ranges of the subsamples. In this case, that is, a subsample including the GOB initializer and a subsample including block 1 are set to the sample that includes the GOB initializer and block 1. The subsample information box setting part 124, for example, sets these subsamples.

Also, as indicated in (A-6), of the samples set as depicted in (A-5), the one including the GOB initializer and block 1 may be set as the sync sample. The sync sample box setting part 123, for example, sets the sample including the GOB initializer and block 1 as the sync sample. In this case, that is, both the sync sample and the subsamples are set.

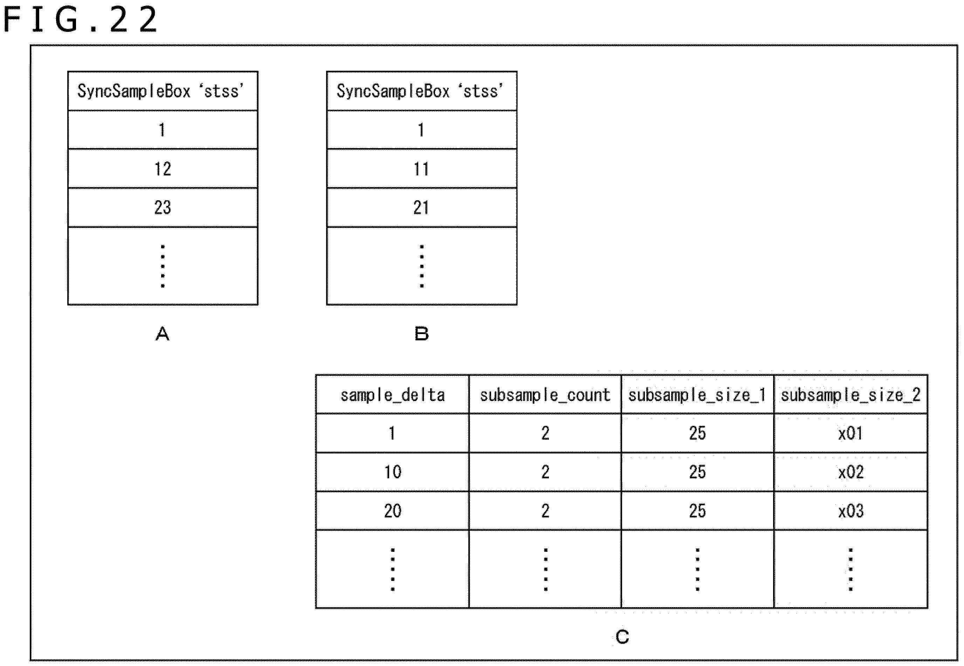

It is to be noted that, in the case of (A-2), there are 11 samples for one GOB, so that the sample numbers are set in the sync sample box (SyncSampleBox (stss)) as depicted in Subfigure A in FIG. 22. By contrast, in the case of (A-4) or (A-6), there are 10 samples for one GOB, so that the sample numbers are set in the sync sample box (stss) as depicted in Subfigure B in FIG. 22.

Also, in the case of (A-5) or (A-6), parameters such as sample_delta, subsample_count, subsample_size_1, and subsample size 2 are set in the subsample information box as depicted in Subfigure C in FIG. 22. The sample_delta parameter denotes (identifies) the sample locations (numbers) at which to set subsamples. The subsample_count parameter denotes the number of set subsamples. The subsample_size parameter denotes the size of each subsample. For example, the subsample_size_1 parameter denotes the size of the subsample that includes the GOB initializer, the size being 25 bytes. The subsample_size_2 parameter denotes the size of the subsample that includes block 1, the size being variable depending on each subsample (e.g., x01, x02, x03, ...).

Obviously, the above values are only examples. The values of the above parameters are not limited to those in the examples of FIG. 22. Incidentally, parameters such as field, subsample_priority, discardable, and codec_specific_parameters for each subsample need not be used.

When the samples are set as indicated in (A-1), the decoding of data is controlled in units of a block. This reduces any increase in load compared with the case where data is sampled in units of a quantified sample. Also, because the sample including the GOB initializer is set for each GOB in this case, data is accessed randomly in units of a block by initially accessing the first sample of a given GOB. For example, in the case where a block halfway into a GOB is to be accessed, initially reading the GOB initializer makes it possible to start decoding data from that halfway block (decoding of the blocks preceding the block of interest is omitted).

Also, when the samples are set as indicated in (A-2), the sample that includes the GOB initializer is set as the sync sample. This makes it easier to access the sample that includes the GOB initializer, enabling access to a desired block in the current GOB. That is, random access in units of a block is made possible. Also, because the GOB initializer is stored in a sample different from those of the blocks, the GOB initializer is read out without having to decode the blocks. That means the GOB initializers are read out more quickly.

Also, when the samples are set as indicated in (A-3), there is no sample with the reproduction time of 0. This makes it easier to establish correspondence between the sample counts and the reproduction times.

Also, when the samples are set as indicated in (A-4), the sample that includes the GOB initializer and block 1 is set as the sync sample. This enables random access in units of a block.

Also, when the samples are set as indicated in (A-5), the GOB initializer is extracted as a subsample. This provides a quicker readout of the GOB initializers.

Also, when the samples are set as indicated in (A-6), it is easier to establish correspondence between the sample counts and the reproduction times. This permits a quicker readout of the GOB initializers and enables random access in units of a block.

### <Sampling each of the GOBs>

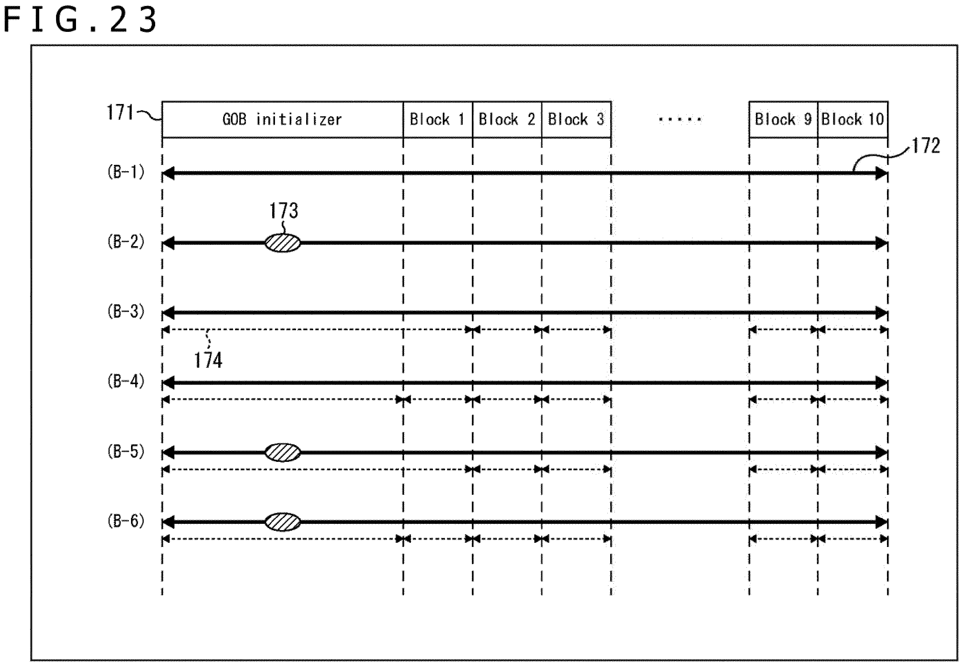

Each of the blocks in the DSD lossless stream may be assigned to a single sample. That is, one GOB may be assigned to a single sample in the MP4 file. For example, as depicted in FIG. 23, a sample indicated by a double-headed arrow 172 may be set to a DSD lossless stream 171 of one GOB (10 blocks).

For example, as indicated in (B-1), a sample may be set to include the GOB initializer as well as blocks 1 to 10. In this case, one sample is set to the DSD lossless stream 171. The sample entry setting part 122, for example, sets the sample that includes the GOB initializer and all blocks.

Also, as indicated in (B-2), the sample that includes the entire GOB set as depicted in (B-1) may be set as the sync sample. In FIG. 23, an ellipse 173 denotes the sync sample as well. The sync sample box setting part 123, for example, sets the sync sample in this manner.

Also, as indicted in (B-3), given the sample set as depicted in (B-1), the GOB initializer and block 1 may be set as a subsample, and each of blocks 2 to 10 may also be set as a subsample. In FIG. 23, a dotted double-headed arrow 174 denotes the ranges of the subsamples as well. In this case, that is, the sample encompassing the entire GOB has a total of 10 subsamples set therein, i.e., a subsample including the GOB initializer and block 1, a subsample including block 2, a subsample including block 3, ..., and a subsample including bock 10. The subsample information box setting part 124, for example, sets the subsamples in this manner.

Also, as indicated by the dotted double-headed arrow 174 in (B-4), given the sample set as depicted in (B-1), the GOB initializer may be set as a subsample and each of blocks 1 to 10 may also be set as a subsample. In this case, that is, the sample including the entire GOB has a total of 11 subsamples set therein, i.e., a subsample including the GOB initializer, a subsample including block 1, a subsample including block 2, ..., and a subsample including block 10. The subsample information box setting part 124, for example, sets these subsamples.

Also, as indicated in (B-5), the sample including the entire GOB and having the subsamples set therein as depicted in (B-3) may be set as the sync sample. The sync sample box setting part 123, for example, sets the sync sample in this manner.

Also, as indicated in (B-6), the sample including the entire GOB and having the subsamples set therein as depicted in (B-4) may be set as the sync sample. The sync sample box setting part 123, for example, sets the sync sample in this manner.

Incidentally, subclause 8.6.2.1 of the ISO/IEC 14496-12 (2015) standard states that "If the sync sample box is not present, every sample is a sync sample." According to this rule, with no sync sample required to be set (i.e., without the sync sample box being set), all samples become random access points. Thus the above cases of (B-2), (B-5), and (B-6) are substantially the same as (B-1), (B-3), and (B-4), respectively. That means these cases may be omitted.

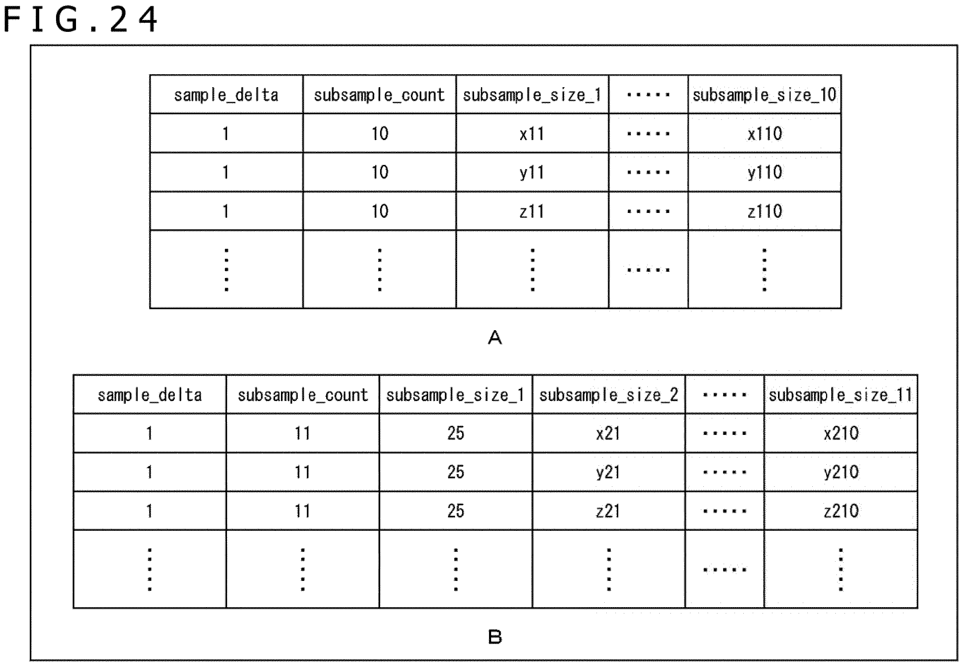

Also, in the case of (B-3) (in the case of (B-5)), the parameters such as sample_delta, subsample_count, subsample_size_1, ..., and subsample_size_10 are set in the subsample information box as indicated in Subfigure A in FIG. 24. In this case, the sample count of each GOB is 1, so that the sample delta value is set to "1." With 10 subsamples set in each sample, the subsample count value is set to "10." Also, the subsample sizes are set to the sizes of the respective subsamples (e.g., x11, ..., x110, y11, ..., y110, z11, ..., z110).

Also, in the case of (B-4) (in the case of (B-6)), the parameters such as sample_delta, subsample_count, subsample_size_1, ..., and subsample_size_11 are set in the subsample information box as indicated in Subfigure B in FIG. 24. In this case, the sample count of each GOB is 1, so that the sample delta value is set to "1." With 11 subsamples set in each sample, the subsample count value is set to "11." Further, sample 1 (subsample_size_1) denotes the size of the subsample including the GOB initializer, the value being set to "25" (bytes). The subsample sizes of subsample 2 and subsequent subsamples are set to the sizes of the respective subsamples (e.g., x21, ..., x210, y21, ..., y210, z21, ..., z210).

Obviously, the above values are only examples. The values of these parameters are not limited to those in the examples of FIG. 24. Incidentally, the parameters such as field, subsample_priority, discardable, and codec_specific_parameters for each subsample need not be used.

When the sample is set as indicated in (B-1) (as in (B-2)), the decoding of data is controlled in units of a GOB. This reduces any increase in load compared with the case where data is sampled in units of a quantified sample. Also, because the sample including the GOB initializer is set for each GOB and because each sample is automatically set as the sync sample in this case, data can be randomly accessed at least in units of a GOB. It is to be noted that a block halfway into a GOB may be accessed by sequentially decoding blocks starting from block 1, and the decoding result of the blocks preceding the block of interest need only be discarded under output control.

Also, when the sample is set as indicated in (B-3) (as in (B-5)), the GOB initializer and block 1 are extracted as a subsample, and each of blocks 2 to 10 is also extracted as a subsample. This makes it easier to establish correspondence between the sample counts and the reproduction times, and enables random access in units of a block.

Also, when the sample is set as indicated in (B-4) (as in (B-6)), the GOB initializer is extracted as a subsample, and each of blocks 1 to 10 is also extracted as a subsample. This provides a quicker readout of the GOB initializers and enables random access in units of a block.

### <Separating the GOB initializer from the blocks in sampling>

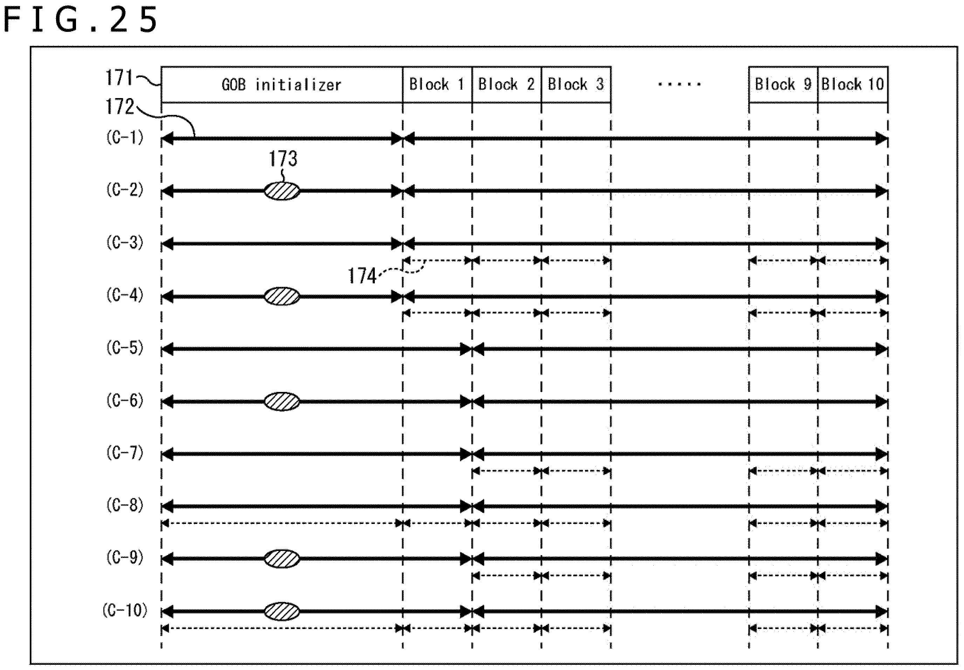

Each GOB of the DSD lossless stream may be set with 2 samples, i.e., a sample including the GOB initializer, and a sample not including the GOB initializer (including only the blocks). That is, the GOB initializer is assigned to one sample of the MP4 file, and the group of blocks is assigned to another sample of the MP4 file. For example, as depicted in FIG. 25, samples each indicated by a double-headed arrow 172 may be set to a DSD lossless stream 171 of one GOB (10 blocks).

For example, as indicated in (C-1), a sample that includes the GOB initializer may be supplemented with a sample set to include all blocks of the GOB. In this case, given the DSD lossless stream 171, a total of 2 samples are set, i.e., a sample including the GOB initializer, and a sample including all block of the GOB. The sample entry setting part 122, for example, sets the sample including all blocks in the GOB in addition to the sample that includes the GOB initializer.

Also, as indicated in (C-2), of the samples set as depicted in (C-1), the one including the GOB initializer may be set as the sync sample. Also in FIG. 25, an ellipse 173 denotes the sync sample. The sync sample box setting part 123, for example, sets the sample including the GOB initializer as the sync sample. In this case, the sync sample includes the GOB initializer but excludes any block, so that this sample has the reproduction time of 0.

Also, as indicated by a dotted double-headed arrow 174 in (C-3), each of blocks 1 to 10 may be set as a subsample in the sample that includes all blocks of the GOB set as depicted in (C-1). In this case, that is, the sample including all blocks of the GOB has a total of 10 subsamples set therein, i.e., a subsample including block 1, a subsample including block 2, ..., and a subsample including block 10. The subsample information box setting part 124, for example, sets the subsamples in this manner.

Also, as indicated in (C-4), the sample including the GOB initializer may be set as the sync sample different from the sample having the subsamples set therein as depicted in (C-3) and including all blocks of the GOB. The sync sample box setting part 123, for example, sets the sync sample in this manner.

Alternatively, instead of the samples being set as in (C-1), there may be a sample set to include the GOB initializer and block 1 and a sample set to include blocks 2 to 10 as depicted in (C-5), for example. In this case, given the DSD lossless stream 171, a total of 2 samples are set, i.e., a sample including the GOB initializer and block 1, and a sample including blocks 2 to 10. The sample entry setting part 122, for example, sets these 2 samples.

Also, as indicated in (C-6), of the samples set as depicted in (C-5), the one including the GOB initializer and block 1 may be set as the sync sample. The sync sample box setting part 123, for example, sets the sample that includes the GOB initializer and block 1 as the sync sample. In this case, the sync sample includes both the GOB initializer and block 1, so that this sample has the reproduction time of block 1.

Also, as indicated by the dotted double-headed arrow 174 in (C-7), each of blocks 2 to 10 may be set as a subsample in the sample set to include these blocks as depicted in (C-5). In this case, that is, the sample including blocks 2 to 10 has a total of 9 subsamples set therein, i.e., a subsample including block 2, a subsample including block 3, ..., and a subsample including block 10. The subsample information box setting part 124, for example, sets these subsamples.

Further, as indicated by the dotted double-headed arrow 174 in (C-8), the GOB initializer and block 1 may each be set as a subsample in addition to the subsamples set as depicted in (C-7). In this case, that is, a total of 11 subsamples are set, i.e., a subsample including the GOB initializer, a subsample including block 1, a subsample including block 2, ..., and a subsample including block 10. The subsample information box setting part 124, for example, sets these subsamples.

Also, as indicated in (C-9), the sample including the GOB initializer and block 1 may be set as the sync sample in place of the sample having the subsamples set therein to include blocks 2 to 10 as depicted in (C-7). The sync sample box setting part 123, for example, sets the sync sample in this manner.

Also, as indicated in (C-10), the sample having the subsamples set therein to include the GOB initializer and block 1 as depicted in (C-8) may be set as the sync sample. The sync sample box setting part 123, for example, sets the sync sample in this manner.

Incidentally, according to the ISO/IEC 14496-12 (2015) standard, all samples constitute random access points, with no sync sample required to be set, as described above. Thus in the above-described cases of (C-1), (C-3), (C-5), (C-7), and (C-8), there is a possibility that the sample including solely the blocks may become the sync sample. For this reason, these cases may be suppressed.

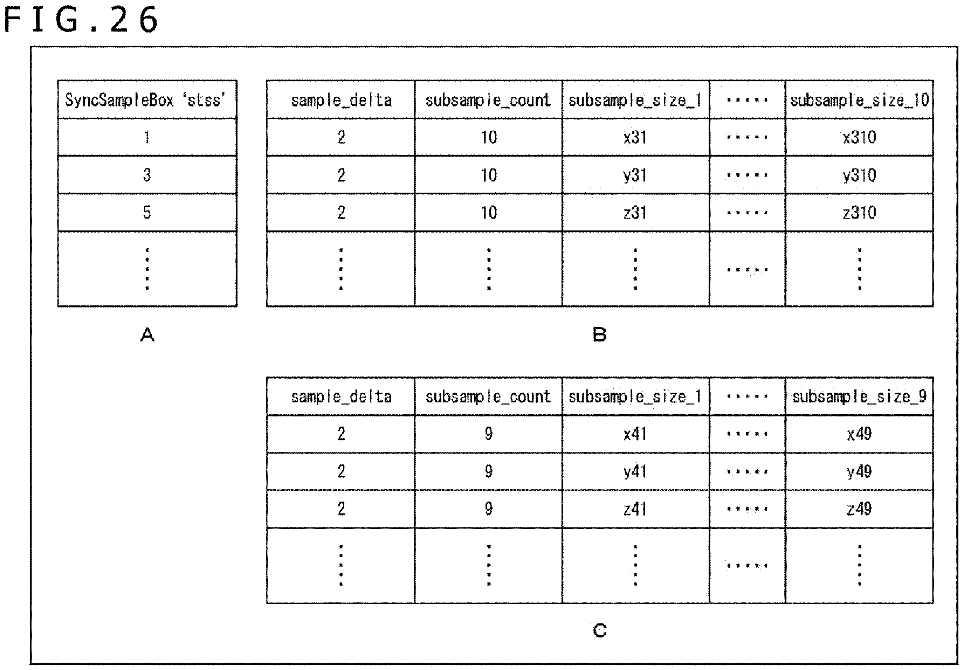

Also, in the cases of (C-2), (C-4), (C-6), (C-9), and (C-10), there are 2 samples of 1 GOB each. Thus the sample numbers are set in the sync sample box (stss) as indicated in Subfigure A in FIG. 26.

Also, in the case of (C-4), the parameters such as sample_delta, subsample_count, subsample_size_1, ..., and subsample_size_10 are set in the subsample information box as depicted in Subfigure B in FIG. 26. In this case, the sample count of each GOB is 2, so that the sample delta value is set to "2." Because the sample including blocks 1 to 10 has 10 subsamples set therein, the subsample count value is set to "10." The subsample sizes are set to the sizes of the respective subsamples (e.g., x31, ..., x310, y31, ..., y310, z31, ..., z310).

Also, in the case of (C-9), the parameters such as sample_delta, subsample_count, subsample_size_1, ..., and subsample_size_9 are set in the subsample information box as depicted in Subfigure C in FIG. 26. In this case, the sample count of each GOB is 2, so that the sample delta count is set to "2." Also, with 9 subsamples set in the sample that includes blocks 2 to 10, the subsample count value is set to "9." Further, The subsample sizes are set to the sizes of the respective subsamples (e.g., x41, ..., x49, y41, ..., y49, z41, ..., z49).

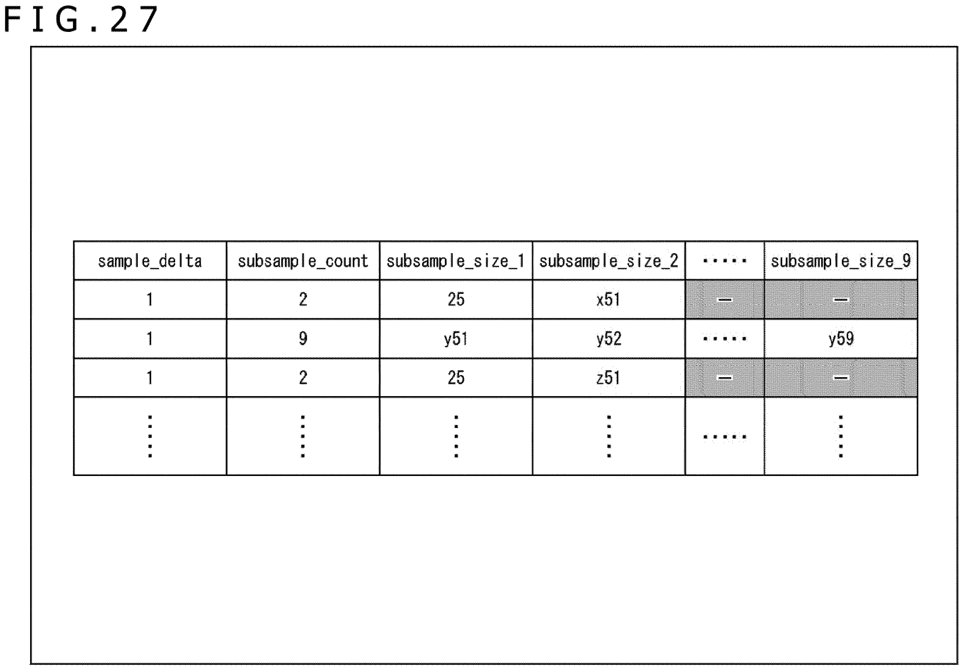

Also, in the case of (C-10), the parameters such as sample_delta, subsample_count, subsample_size_1, ..., and subsample_size_9 are set in the subsample information box as depicted in FIG. 27. In this case, the subsamples are set in all samples of each GOB, so that the sample delta value is set to "1." Also, because 2 subsamples are set in the sample that includes the GOB initializer and block 1 and because 9 subsamples are set in the sample including blocks 2 to 10, the subsample count value is set to "2" or to "9." Also, the subsample sizes are set to the sizes of the respective subsamples (e.g., 25, x41, y51, ..., y59, 25, z51).

Obviously, the above values are only examples. The values of the above parameters are not limited to those in the examples of FIGS. 26 and 27. Incidentally, parameters such as field, subsample_priority, discardable, and codec_specific_parameters for each subsample need not be used.

When the samples are set as indicated in (C-2), the decoding of data is controlled in units of a GOB. This reduces any increase in load compared with the case where data is sampled in units of a quantified sample. Also, because the sample including the GOB initializer is set for each GOB in this case, data is randomly accessed at least in units of a GOB. It is to be noted that a block halfway into the GOB may be accessed by sequentially decoding blocks starting from block 1, and the decoding result of the blocks preceding the block of interest need only be discarded under output control.

Also, when the samples are set as indicated in (C-4), each of blocks 1 to 10 is extracted as a sub-block. This enables random access in units of a block.

Also, when the samples are set as indicated in (C-6), the GOB initializer is attached to block 1. This makes it easier to establish correspondence between the subsample counts and the reproduction times.

Further, when the samples are set as indicated in (C-9), data is randomly accessed in units of a block. This also makes it easier to establish correspondence between the subsample counts and the reproduction times.

Further, when the samples are set as indicated in (C-10), data is randomly accessed in units of a block, and the correspondence between the subsample counts and the reproduction times is established more easily. It is also possible to extract the GOB initializer and each of blocks 1 to 10 as a subsample. This provides a quicker readout of the GOB initializers and permits random access in units of a block.

When the samples are set as described above, the DSD lossless stream is stored in the MP4 file. This permits transmission of audio data of higher quality.

### <Flow of the delivery data generating process>

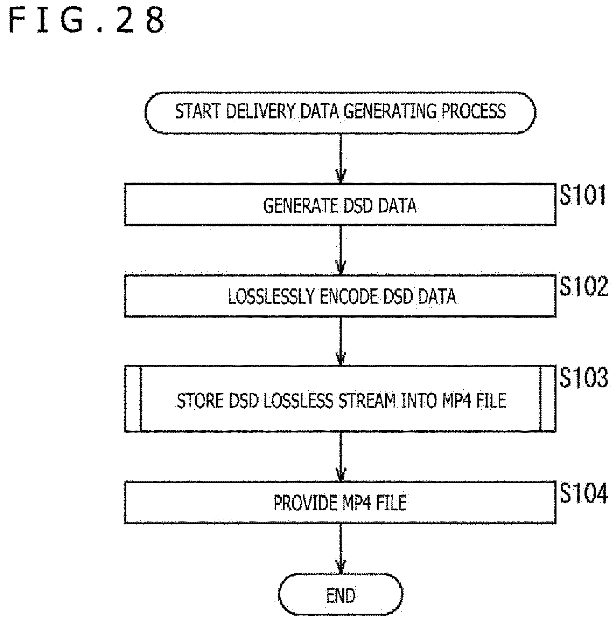

The processes performed by the individual apparatuses in the delivery system 100 are described below. Explained first with reference to the flowchart of FIG. 28 is a typical flow of a delivery data generating process carried out by the file generating apparatus 101. The file generating apparatus 101 performs the delivery data generating process when generating an MP4 file of audio data.

When the delivery data generating process is started, the DSD generating part 111 of the file generating apparatus 101 in step S101 generates DSD data by subjecting an audio analog signal to ΔΣ modulation. In step S102, the DSD encoding part 112 generates a DSD lossless stream by encoding the DSD data generated in step S101 using the above-described new DSD lossless compression encoding technology. In step S103, the MP4 file generating apparatus 131 (i.e., MP4 file generating part 113 and setting part 114) performs an MP4 file generating process to generate an MP4 file in which to store the DSD lossless stream generated in step S102. The MP4 file generating process will be discussed later. With the MP4 file generated, the MP4 file generating part 113 provides the generated MP4 file to the delivery server 102 in step S104. At the end of step S104, the delivery data generating process is terminated.

### <Flow of the MP4 file generating process>

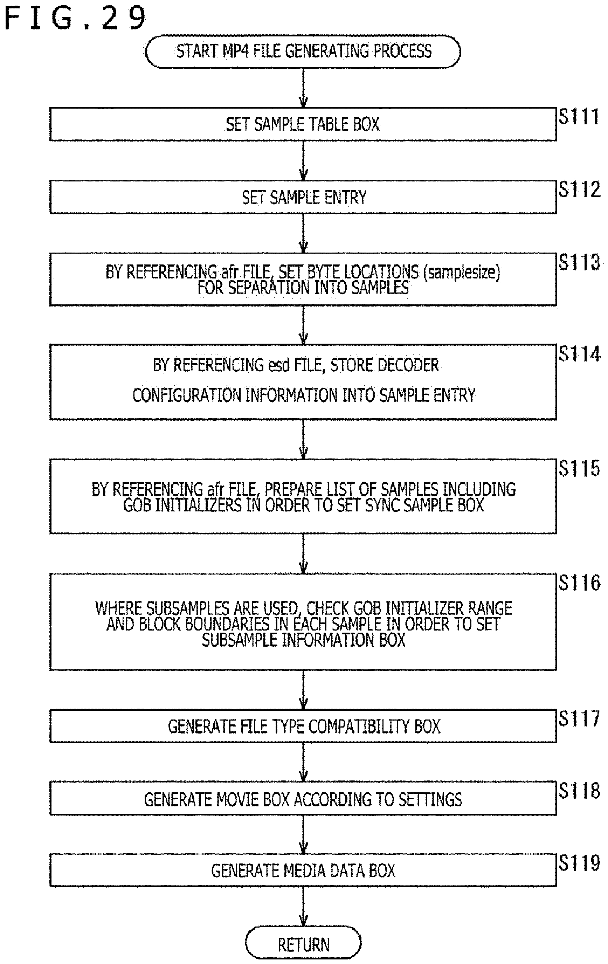

Explained next with reference to the flowchart of FIG. 29 is a typical flow of the MP4 file generating process performed in step S103 of the delivery data generating process.

When the MP4 file generating process is started, the sample table box setting part 121 sets the sample table box in step S111. In step S112, the sample entry setting part 122 sets the sample entry.

In step S113, the sample entry setting part 122 references the .afr file to set the byte locations (samplesize) for separation into samples. That is, the sample entry setting part 122 assigns blocks to samples on the basis of the .afr file. In making the assignments, the sample entry setting part 122 uses one of the methods described above as (A-1) to (A-6), (B-1) to (B-6), and (C-1) to (C-10), for example.

In step S114, the sample entry setting part 122 references the .esd file to store into the sample entry the decoder configuration information required for decoding the current GOB. That is, on the basis of the .esd file, the sample entry setting part 122 sets the GOB initializer that includes the decoder configuration information, and assigns the settings to samples. In making the assignments, the sample entry setting part 122 uses one of the methods described above as (A-1) to (A-6), (B-1) to (B-6), and (C-1) to (C-10), for example.

In step S115, the sync sample box setting part 123 references the .afr file to prepare a list of samples including the GOB initializers, and sets the sync sample box in which to store the list.

In step S116, where subsamples are used, the subsample information box setting part 124 checks the range of the GOB initializer and block boundaries in each sample, sets the subsample information box based on such information, and sets the parameters such as sample delta, subsample count, and subsample size.

In step S117, the setting part 114 sets the file type compatibility box (ftyp). In step S118, the setting part 114 generates a movie box according to the settings. That is, the setting part 114 generates the movie box (moov) in which to store the sample table box set as described above. In step S119, the setting part 114 generates the media data box (mdat) and stores the DSD lossless stream therein.

When the MP4 file is generated as described above, the MP4 file generating process is brought to an end. Control is then returned to the process in FIG. 28.

When the processes are carried out as described above, the DSD lossless stream is stored into the MP4 file. Audio data of higher quality is thus transmitted using MPEG-DASH.

### <Flow of the reproduction process>

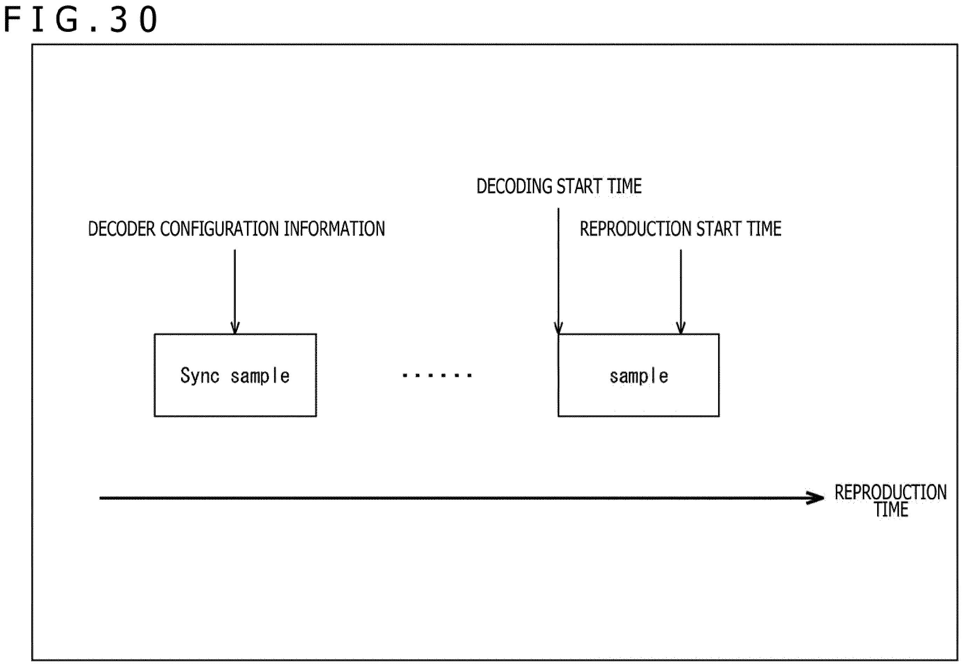

What follows is a description of the reproduction (decoding) of the MP4 file. It is to be noted that explained below is a case of random reproduction such as one outlined in FIG. 30. That is, it is assumed that the decoder configuration information stored in the sync sample is read in and that on the basis of the decoder configuration information, reproduction is started from a block halfway into a sample of the same GOB as that of the sync sample. In this case, as depicted in FIG. 30, the reproduction start time is set to a block halfway into the sample (i.e., midway in the sample). The decoding start time is designated to the beginning of the sample.

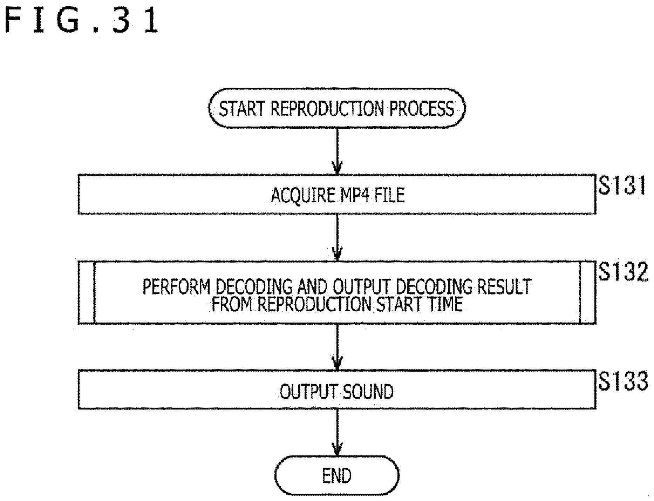

The reproduction terminal 103 acquires an MP4 file from the delivery server 102, reproduces the MP4 file by carrying out the reproduction process, and outputs the reproduced audio data. A typical flow of the reproduction process is explained with reference to the flowchart in FIG. 31.

When the reproduction process is started, the MP4 file acquiring part 141 of the reproduction terminal 103 acquires an MP4 file delivered from the delivery server 102 in step S131. In step S132, the MP4 file reproducing apparatus 161 (e.g., DSD decoding part 142, output controlling part 143, and control part 145) performs the decoding process so as to extract the DSD lossless stream from the MP4 file, decode the extracted DSD lossless stream, and start outputting the DSD data thus acquired from the reproduction start time.

In step S133, the output part 144 outputs the sound (audio analog signal) reproduced in step S132.

### <Flow of the decoding process>

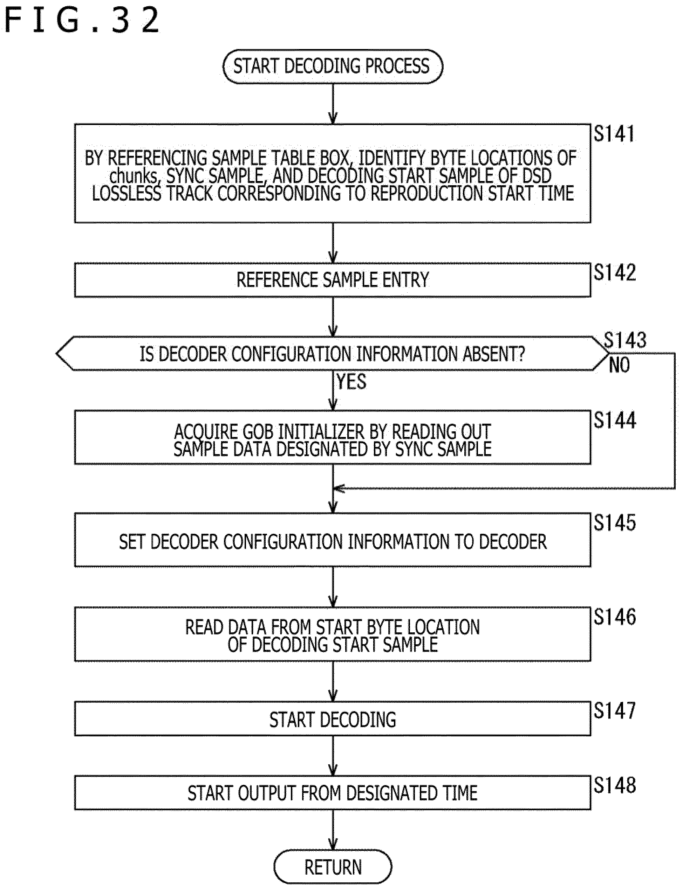

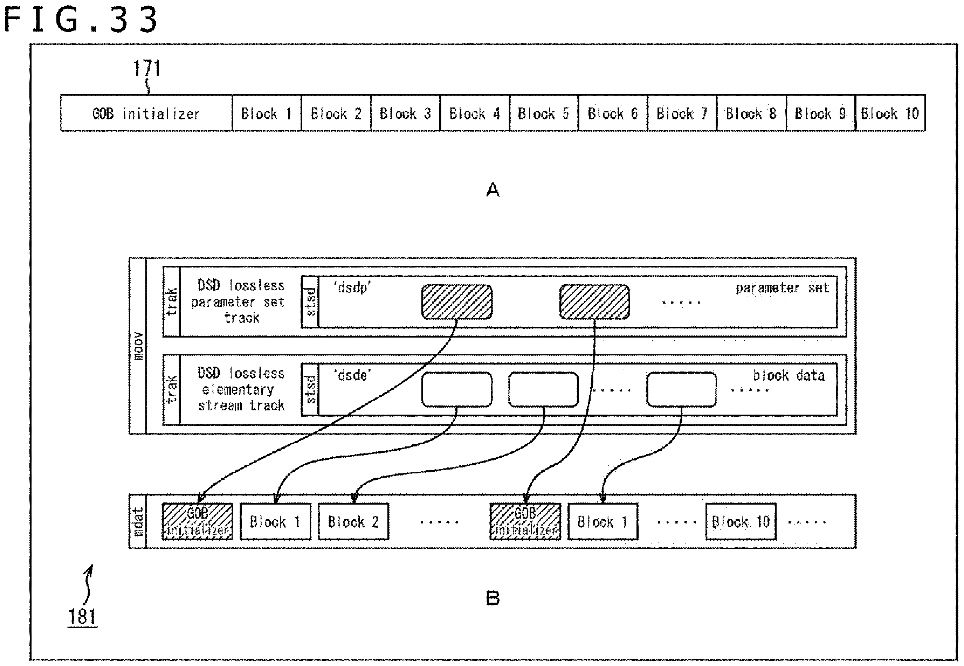

Next, referring to the flowchart of FIG. 32, explained below with reference to the flowchart of FIG. 33 is a typical flow of the decoding process performed in step S132 of the reproduction process.

When the decoding process is started, the sample table box analyzing part 151 in step S141 references the sample table box in the MP4 file acquired by the MP4 file acquiring part 141 so as to identify the byte locations of the chunks, sync sample, and decoding start sample of a DSD lossless track corresponding to the reproduction start time.

In step S142, the sample entry analyzing part 154 references the sample entry.

In step S143, the sample entry analyzing part 154 determines whether or not there exists the decoder configuration information. In the case where it is determined that the decoder configuration information is not present, control is transferred to step S144.

In this case, the sample entry analyzing part 154 in step S144 acquires the GOB initializer by reading the data of the samples designated by the sync sample from the MP4 file. With the GOB initializer acquired, control is transferred to step S145. In the case where it is determined in step S143 that there exists the decoder configuration information, step S144 is skipped and control is transferred to step S145.

In step S145, the decoder configuration information setting part 155 sets to the decoder configuration information included in the MP4 file.

In step S146, on the basis of the decoder configuration information, the DSD decoding part 142 reads data (DSD lossless stream) from the start byte location of the decoding start sample in the MP4 file acquired by the MP4 file acquiring part 141.

In step S147, the DSD decoding part 142 starts decoding the read data.

In step S148, the reproduction controlling part 156 designates the reproduction start time for the output controlling part 143. The output controlling part 143 starts outputting the DSD data obtained in step S147 from the designated time.

At the end of step S148, the decoding process is terminated. Control is then returned to the process in FIG. 31.

When the processes are carried out as described above, the DSD lossless stream stored and transmitted in the MP4 file is decoded, and the decoded audio data is output. That is, audio data of higher quality is transmitted using MPEG-DASH.

Incidentally, in the case where a fragmented movie is configured, the fragment boundary may be arranged to coincide with one of GOB boundaries. In this case, the beginning of the fragment constitutes the beginning of the GOB. Multiple GOBs may also be stored in a single fragment.

### <3. Second embodiment>

### <Separating the parameter set from the elementary stream>

It is to be noted that it is possible to store the GOB initializers (their samples) required for decoding in a track different from the track in which the blocks (their samples) are stored.

The GOB initializer, which is a parameter set required for decoding, is at the beginning of each GOB and changes over time. When the parameter set is configured as a single track, the parameter set is accessed and read out more easily.

Incidentally, the track is a series of samples (or chunks). As stated above, the GOB initializer (header, config, GOB data (code book)) of each GOB is stored in a single track. In this case, the sample duration is the reproduction time of one GOB.

For example, suppose that the GOB of a DSD lossless stream is configured as depicted in Subfigure A in FIG. 33. That is, the DSD lossless stream 171 of one GOB has the GOB initializer and 10 blocks (blocks 1 to 10). Subfigure B in FIG. 33 depicts a typical MP4 file that stores this DSD lossless stream 171.

In this case, as illustrated in Subfigure B in FIG. 33, the GOB initializer of the DSD lossless stream 171 and the data of its blocks are stored in the media box (mdat) of an MP4 file 181. In the movie box (moov), 2 tracks are formed, i.e., a DSD lossless parameter set track, and a DSD lossless elementary stream track. The DSD lossless parameter set track stores the management information regarding the parameter set required for decoding the DSD lossless stream. The DSD lossless elementary stream track stores the management information regarding the data of the blocks in the DSD lossless stream.

The management information regarding the parameter set of the DSD lossless stream is stored in the sample entry (dsdp) formed in the sample description box (stsd) of the DSD lossless parameter set track. That is, the information regarding each GOB initializer in the media data box (mdat) is stored in this sample entry (dsdp).

Also, the management information regarding the elementary stream of the DSD lossless stream is stored in the sample entry (dsde) formed in the sample description box (stsd) of the DSD lossless elementary stream track. That is, the information regarding each block in the media data box (mdat) is stored in the sample entry (dsde).

Incidentally, one of the methods discussed above with reference to FIGS. 21 to 27 need only be used to assign the samples in the DSD lossless elementary stream track. That is, although the example in Subfigure B in FIG. 33 depicts one sample being assigned to one block, this example is not limitative of how the samples are assigned.

The above configuration permits quicker acquisition of the decoder configuration information (setting information required for decoding; to be set to the decoder before the start of decoding). In particular, the header information is acquired at high speed at the time of random access. It is thus expected that the time elapsed before the start of reproduction will be shortened and that the switch between streams will be made more quickly. The sample of the GOB initializer has the reproduction time of 0. When the sample with the reproduction time of 0 is separated as a different track, it is possible not to include the samples other than those designating the blocks in the track. That is, with samples of different nature prevented from coexisting in one track, the management of information is made easier still.

Incidentally, a sample of the DSD lossless elementary track may include the GOB initializer and block 1 (first block). That is, in the DSD lossless elementary track, the GOB initializer may be attached to the first block (block 1) of the GOB.

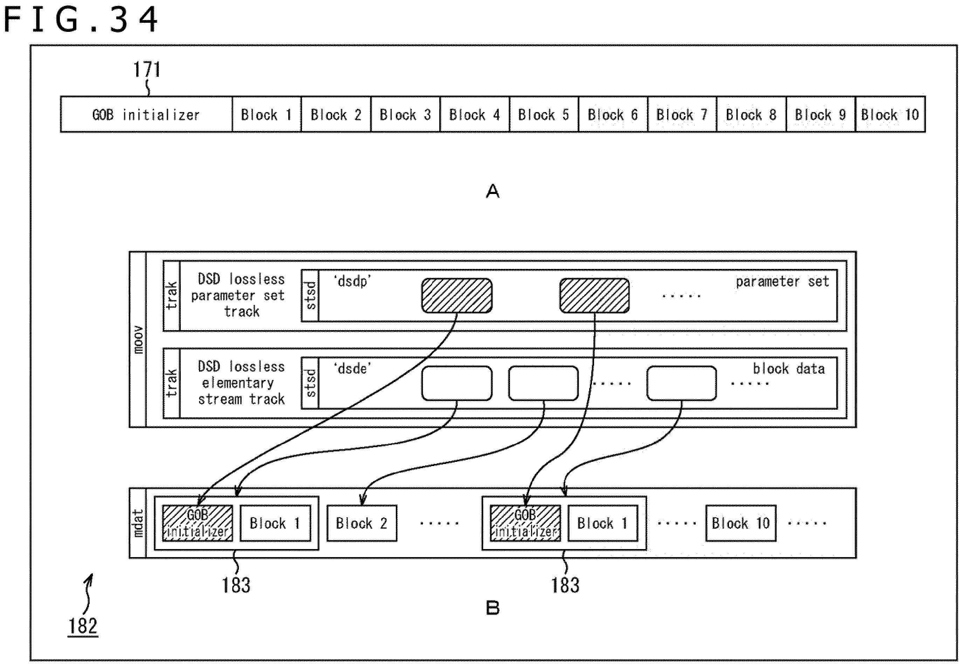

For example, suppose that the GOB of the DSD lossless stream is configured as depicted in Subfigure A in FIG. 34. That is, the DSD lossless stream 171 of one GOB has the GOB initializer and 10 blocks (blocks 1 to 10). A typical MP4 file that stores this DSD lossless stream 171 is illustrated in Subfigure B in FIG. 34.

The configuration of an MP4 file 182 depicted as an example in Subfigure B in FIG. 34 is basically similar to that of the MP4 file 181 in Subfigure B in FIG. 33. It is to be noted that in the DSD lossless elementary track, the GOB initializer is attached to the first block (block 1) of the GOB as indicated by a rectangle 183. Since it is acceptable for the data in the media data box, which is referenced by each track, to be duplicated, the samples may be assigned in this manner as well. These assignments permit decoding of data using only the information related to the samples of the DSD lossless elementary track.

### <Flow of the MP4 file generating process>

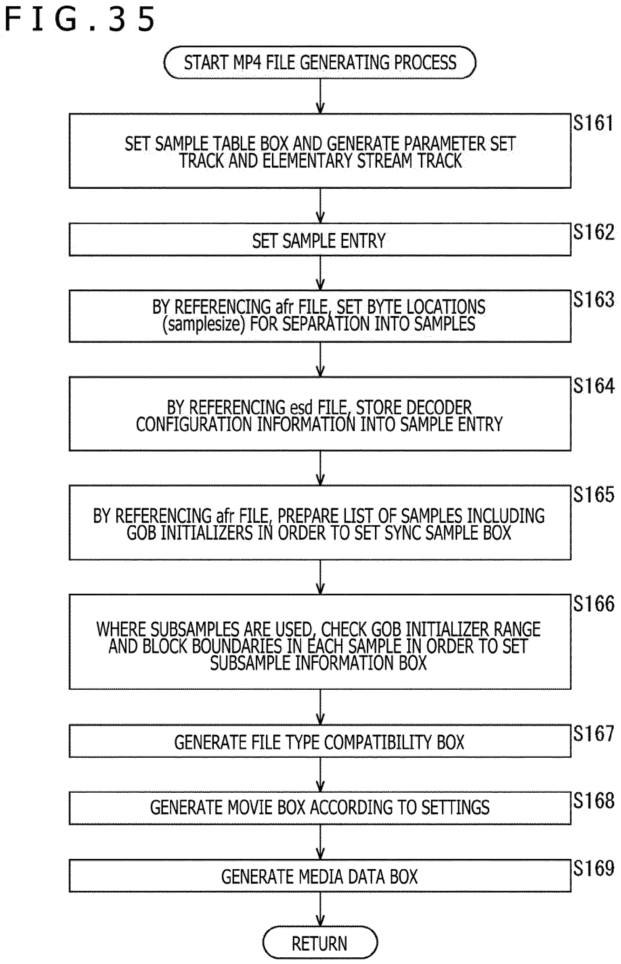

In the present case, the delivery data generating process is also carried out basically in similar flow discussed above with reference to the flowchart of FIG. 28. A typical flow of the MP4 file generating process in this case is explained below with reference to the flowchart of FIG. 35.

When the MP4 file generating process is started, the sample table box setting part 121 in step S161 sets the sample table box and generates a parameter set track (DSD lossless parameter set track) and an elementary stream track (DSD lossless elementary stream track). In step S162, the sample entry setting part 122 sets the sample entry ('dsdp' and 'dsde') to each track.

In step S163, the sample entry setting part 122 sets the byte locations (samplesize) for separation into samples by referencing the .afr file. That is, on the basis of the .afr file, the sample entry setting part 122 assigns the blocks to samples in the DSD lossless elementary stream track. In making the assignments, the sample entry setting part 122 uses one of the methods described above as (A-1) to (A-6), (B-1) to (B-6), and (C-1) to (C-10), for example.

In step S164, the sample entry setting part 122 references the .esd file to store the decoder configuration information into the sample entry ('dsdp') of the DSD lossless parameter set track. That is, on the basis of the .esd file, the sample entry setting part 122 assigns the GOB initializer that includes the decoder configuration information to the samples of the DSD lossless parameter set track. In making the assignments, the sample entry setting part 122 uses one of the methods described above as (A-1) to (A-6), (B-1) to (B-6), and (C-1) to (C-10), for example.

The processing from step S165 to step S169 is performed in similar manner to the processing from step S115 to step S119 in FIG. 29. At the end of step S169, the MP4 file generating process is terminated. Control is then returned to the process in FIG. 28. When the processes are carried out as described above, the DSD lossless stream is stored into the MP4 file. Audio data of higher quality is thus transmitted using MPEG-DASH.

### <Flow of the decoding process>

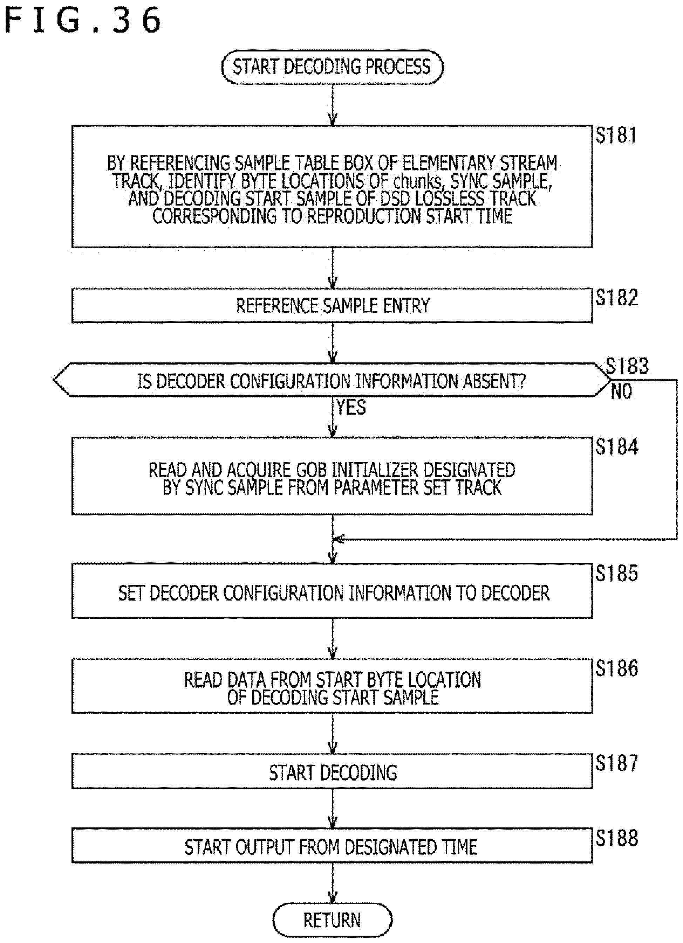

In the present case, the reproduction process is also carried out basically in similar flow discussed above with reference to the flowchart of FIG. 31. A typical flow of the decoding process in this case is explained below with reference to the flowchart of FIG. 36.

When the decoding process is started, the sample table box analyzing part 151 in step S181 identifies the byte locations of the chunks, sync sample, and decoding start sample of the DSD lossless track corresponding to the reproduction start time by referencing the sample table box of the DSD lossless elementary stream in the MP4 file acquired by the MP4 file acquiring part 141.

In step S182, the sample entry analyzing part 154 references the sample entry ('dedp') of the DSD lossless parameter set track.

In step S183, the sample entry analyzing part 154 determines whether or not there exists the decoder configuration information. In the case where it is determined that the decoder configuration information is absent, control is transferred to step S184. In this case, the sample entry analyzing part 154 in step S184 acquires the GOB initializer by reading the data of the sample designated by the sync sample from the sample entry ('dedp') of the DSD lossless parameter set track. With the GOB initializer acquired, control is transferred to step S185. In the case where it is determined in step S183 that there exists the decoder configuration information, step S184 is skipped, and control is transferred to step S185.

The processing from step S185 to step S188 is carried out in similar manner to the processing from step S145 to step S148 in FIG. 32. At the end of step S188, the decoding process is terminated. Control is then returned to the process of FIG. 31. When the processes are carried out as described above, the DSD lossless stream stored and transmitted in the MP4 file is decoded, and the decoded audio data is output. That is, audio data of higher quality is transmitted using MPEG-DASH.

### <DRM>

Incidentally, the file of the above-described DSD lossless parameter set track may be different from the file of the DSD lossless elementary stream track.

For example, the DSD lossless stream obtained by losslessly encoding uncompressed DSD data cannot be decoded without the GOB initializers. By taking advantage of this characteristic, it is possible to regard the DSD lossless stream as an encrypted stream and apply the present technology to a Digital Rights Management (DRM) system using the MP4 file including the GOB initializers as decryption key information.

For example, in content delivery, there may be conceivably a method for managing reproduction using DRM. In such a DRM system, the GOB initializers may be stored in an MP4 file and the blocks in a different MP4 file. The MP4 file that stores the GOB initializers may then be delivered separately as the decryption key information required to decode the MP4 file that stores the blocks.

For example, the MP4 file that stores only the blocks may be shared and widely distributed. Copying of the file may also be permitted. However, because this MP4 file does not include the GOB initializers, content cannot be reproduced from this MP4 file alone.

The MP4 file in which the GOB initializers are stored is then offered to legitimate users (e.g., users who paid). In this manner, only the legitimate user who has obtained the correct decryption key (i.e., MP4 file holding the GOB initializers) is able to reproduce the content (MP4 file holding the blocks only). That is, a DRM system is configured using the present technology. More secure data delivery is thus implemented. In other words, in content delivery, it is possible to implement multiple functions including the limiting of content delivery to authorized users.

More specifically, this type of DRM system requires that the corresponding relations be clarified between the MP4 file that stores the blocks and the MP4 file that stores the GOB initializers necessary for decoding the blocks. That is, it is necessary to identify the correct decryption key information. This kind of corresponding relation may be described in a protection scheme info box (sinf) provided in the sample entry, for example.

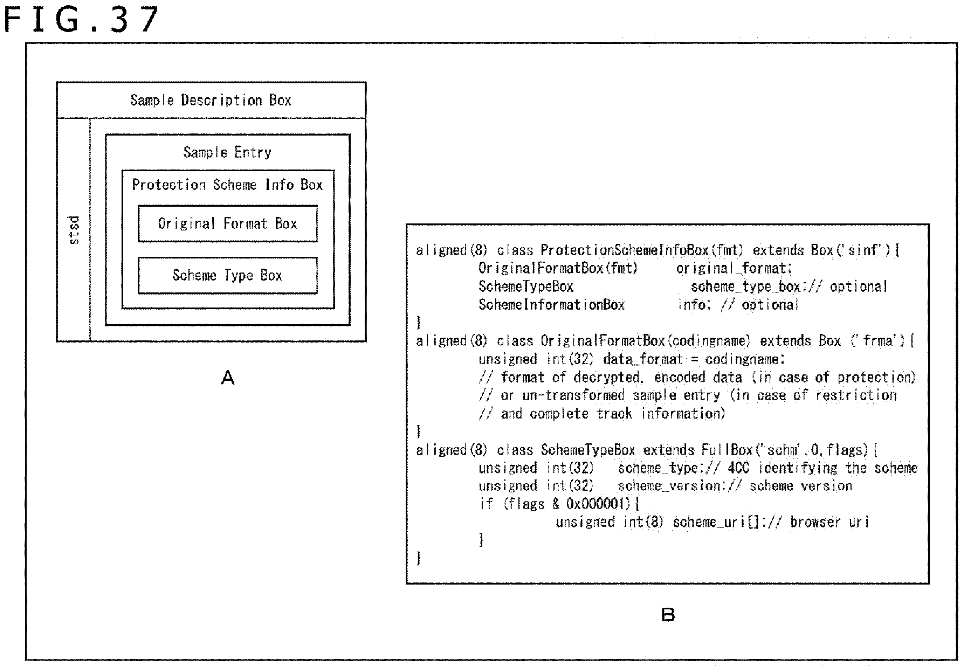

For example, the protection scheme info box (sinf) is provided in the sample entry as depicted in Subfigure A in FIG. 37. The protection scheme info box includes, for example, an original format box and a scheme type box. Examples of the syntax of the protection scheme info box, original format box, and scheme type box are depicted in Subfigure B in FIG. 37.

Information regarding the unencrypted stream is stored in the original format box. For example, uncompressed DSD data is regarded as the unencrypted stream. In this case, the value of the original_format parameter denoting the data format of the unencrypted stream is set to `dsd0' (uncompressed DSD data), for example.

Information regarding the decoding of the encrypted stream is stored in the scheme type box. For example, the DSD lossless stream obtained by encoding the DSD data using the new DSD lossless compression encoding technology is regarded as the encrypted stream. In this case, the value of the scheme_type parameter denoting the encryption method (encoding method) is set to 'dsde' (new DSD lossless compression encoding technology), for example.

Also, information regarding links to a license file is stored in the scheme type box. The license file may be specified as desired. For example, the license file describes the information regarding links to the GOB initializers as the decryption key.

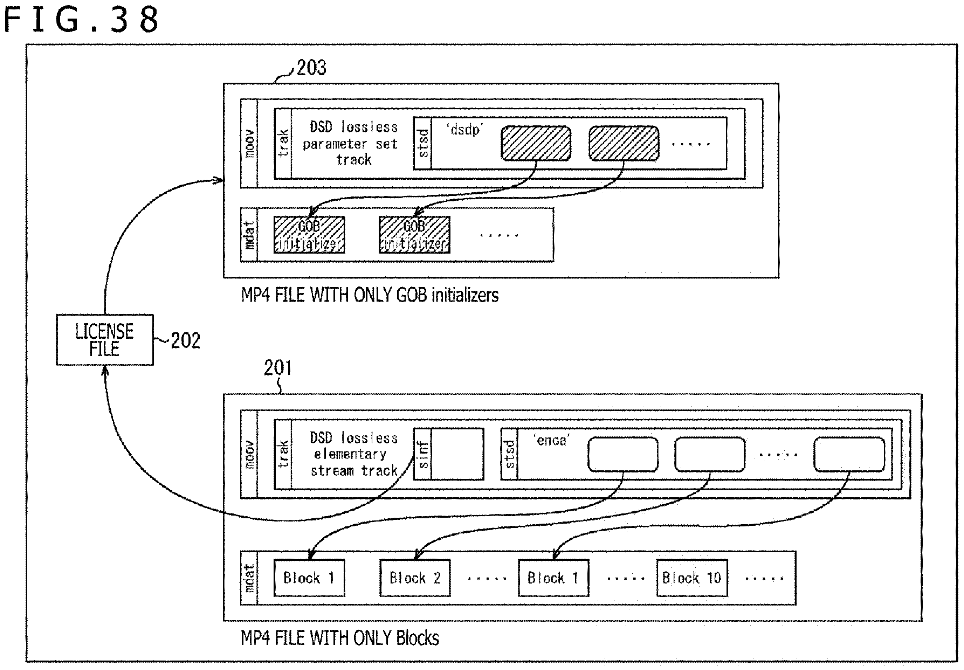

Thus as depicted in FIG. 38, the user who acquired an MP4 file 201 that stores only the blocks pays for the file, for example, to become a legitimate user authorized to reproduce the content of the file. The user proceeds to acquire a license file 202 on the basis of the information in the protection scheme box (sinf) of the DSD lossless elementary stream track in the MP4 file 201. Based on the information in the license file 202, the user acquires an MP4 file 203 that stores the GOB initializers corresponding to the MP4 file 201. The user is then allowed to reproduce the MP4 file 201 to enjoy the content using the MP4 file 203.

As described above, a DRM system is implemented by having the GOB initializers stored in one MP4 file and the blocks in another MP4 file using the present technology.

It is to be noted that, when the corresponding relation between the MP4 file 201 and the MP4 file 203 is defined by the intervention of the license file 202, the corresponding relation may be updated more easily as needed, for example. That is, it becomes easier to manage the corresponding relation using the intervening file.

It is to be noted that, because the file that stores the GOB initializers and the file storing the blocks are separated from each other, it is necessary to associate each GOB initializer with a given block. Although the file including the GOB initializers is not limited to an MP4 file, the MP4 file offers the advantage of identifying the times from the beginning of the file based on the information in the sample table box and on the subordinate information. The MP4 file thus allows the player to associate the GOB initializers with the corresponding blocks.

### <4. Third embodiment>

### <Setting the audio sample entry>

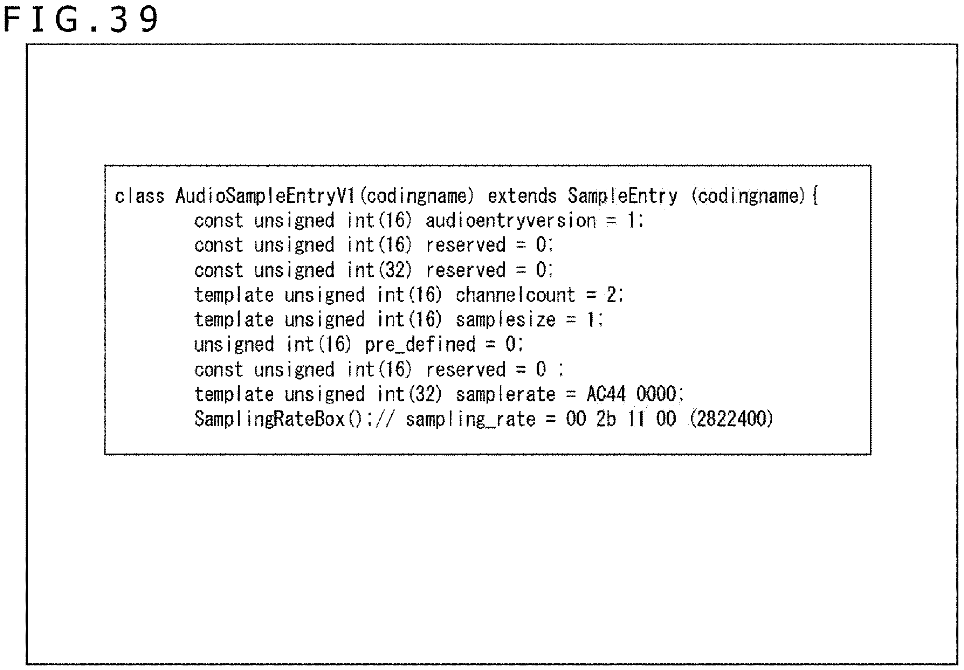

It is to be noted that, preferably, the management information regarding the DSD lossless stream may be stored in an audio sample entry (AudioSampleEntryV1). FIG. 39 depicts an example of the syntax of the audio sample entry. In the case where the audio sample entry is used, the parameters re set as follows:

The identifier of an audio format is set to a coding name (codingname) parameter. In the case of DSD data for example, the identifier 'dsd1' indicative of DSD data is set. The number of channels is set to a channel count (channelcount) parameter. In the case where the DSD data is of 2 channels for example, the value "2" is set to this parameter. The bit depth of audio data is set to a sample size (samplesize) parameter. In the case of DSD data for example, the value "1" is set to this parameter because the bit depth of DSD data is 1 bit. The value "AC44 0000h" denoting the fixed value "44.1 kHz" is set to a sample rate (samplerate) parameter. It is to be noted that this value is a dummy; the correct value is set to an extension box, to be discussed later.

A sampling rate (sampling_rate) parameter is set to a sample rate box (SamplingRateBox), which is an extension box. Because the correct sampling frequency of the DSD data cannot be set to the sample rate (samplerate) parameter, the correct value is set to this sampling rate (sampling_rate) parameter. In the case where the sampling frequency of the DSD data is 2.8 MHz for example, the value "00 2b 11 00h" (2822400Hz) is set to this parameter. Also, in the case where the sampling frequency of the DSD data is 5.6 MHz for example, the value "00 56 22 00h" (564480000Hz) is set to this parameter. Further, in the case where the sampling frequency of the DSD data is 11.2 MHz for example, the value "00 AC 44 00h" (11289600Hz) is set to this parameter. It is to be noted that a media timescale parameter is set to the same value as the sampling rate (sampling_rate) parameter or as the sample rate (samplerate) parameter.

### <File generating apparatus>

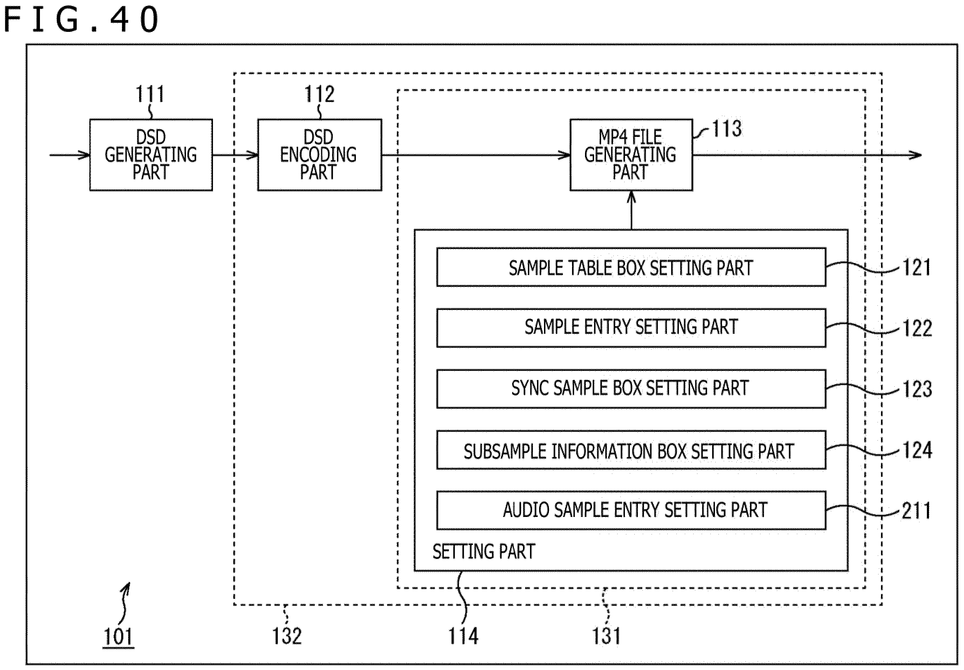

FIG. 40 is a block diagram depicting another representative configuration of the file generating apparatus 101 in the present case. As illustrated in FIG. 40, the file generating apparatus 101 in this case includes an audio sample entry setting part 211 in addition to the configuration explained above with reference to FIG. 19. The audio sample entry setting part 211 performs processes related to setting the audio sample entry.

### <Flow of the MP4 file generating process>

In the present case, the delivery data generating process is carried out in basically similar manner in the case explained above with reference to the flowchart of FIG. 28.

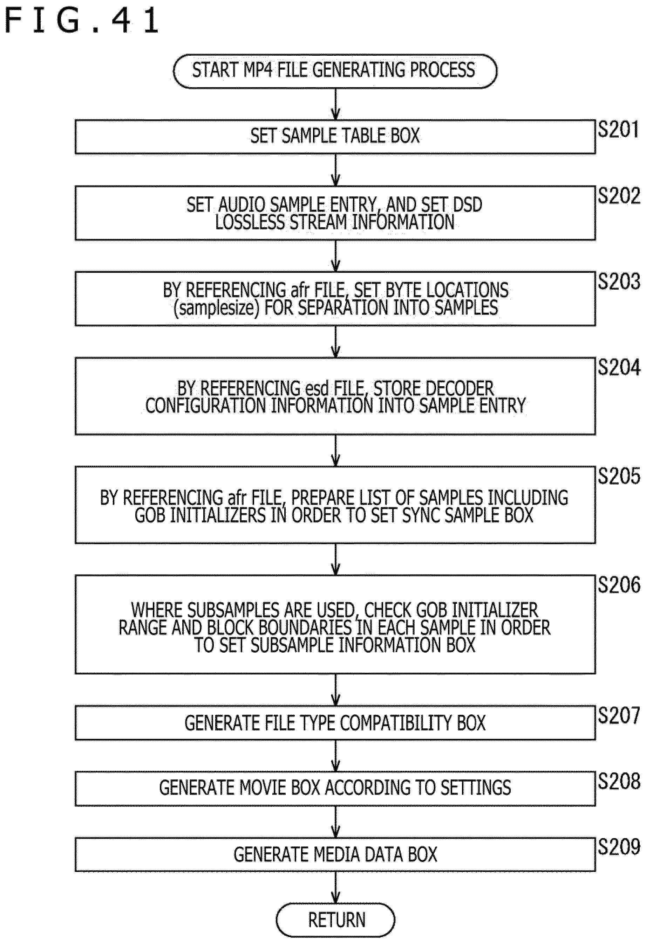

A typical flow of the MP4 file generating process in this case is explained with reference to the flowchart of FIG. 41. When the MP4 file generating process is started, the sample table box setting part 121 sets the sample table box in step S201. In step S202, the audio sample entry setting part 211 sets the audio sample entry.

In step S203, the audio sample entry setting part 211 references the .afr file to set the byte locations (samplesize) for separations into samples. That is, the audio sample entry setting part 211 assigns the blocks to samples on the basis of the .afr file. In making the assignments, the audio sample entry setting part 211 uses one of the methods described above as (A-1) to (A-6), (B-1) to (B-6), and (C-1) to (C-10), for example.

In step S204, the audio sample entry setting part 211 references the .esd file to store into the audio sample entry the decoder configuration information required to decode the current GOB. That is, the audio sample entry setting part 211 sets the GOB initializer including the decoder configuration information and assigns the settings to samples on the basis of the .esd file. In making the assignments, the audio sample entry setting part 211 uses one of the methods described above as (A-1) to (A-6), (B-1) to (B-6), and (C-1) to (C-10), for example.

The processing from step S205 to step S209 is carried out in similar manner to the processing from step S115 to step S119 in FIG. 29. When the MP4 file is generated as described above, the MP4 file generating process is terminated. Control is then returned to the process in FIG. 28.

When the processes are performed as described above, the DSD lossless stream is stored into the MP4 file, and the information regarding the DSD lossless stream (management information) is stored into the audio sample entry (AudioSampleEntryV1). Audio data of higher quality is thus transmitted using MPEG-DASH.

### <Reproduction terminal>

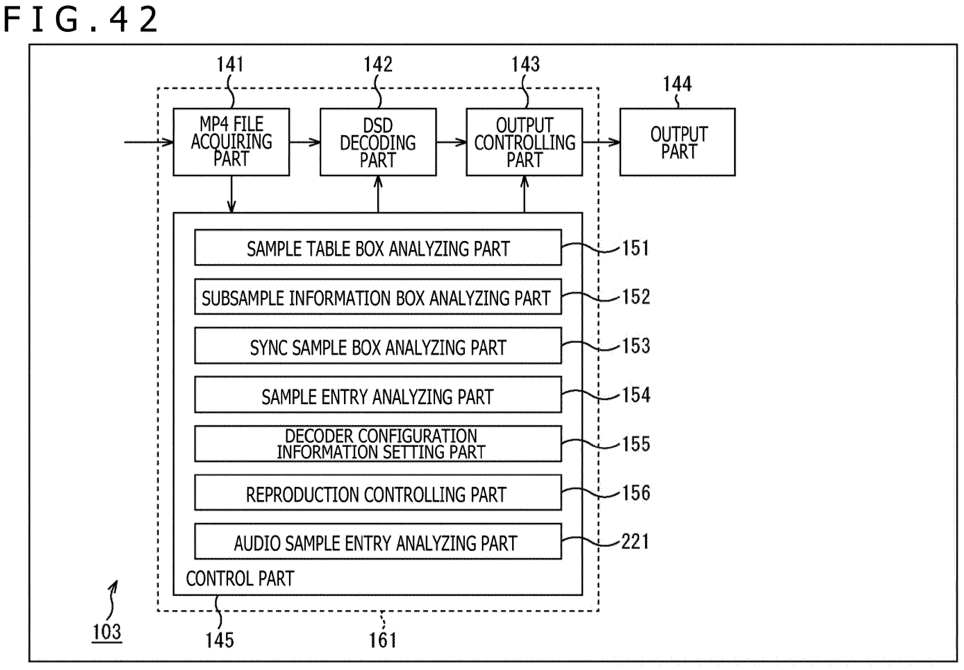

FIG. 42 is a block diagram depicting another representative configuration of the reproduction terminal 103 in the present case. As depicted in FIG. 42, the reproduction terminal 103 in this case includes an audio sample entry analyzing part 221 in addition to the configuration explained above with reference to FIG. 20. The audio sample entry analyzing part 221 performs processes related to analyzing the audio sample entry.

### <Flow of the decoding process>

The reproduction process in the present case is also carried out basically in similar manner explained above with reference to the flowchart of FIG. 31.

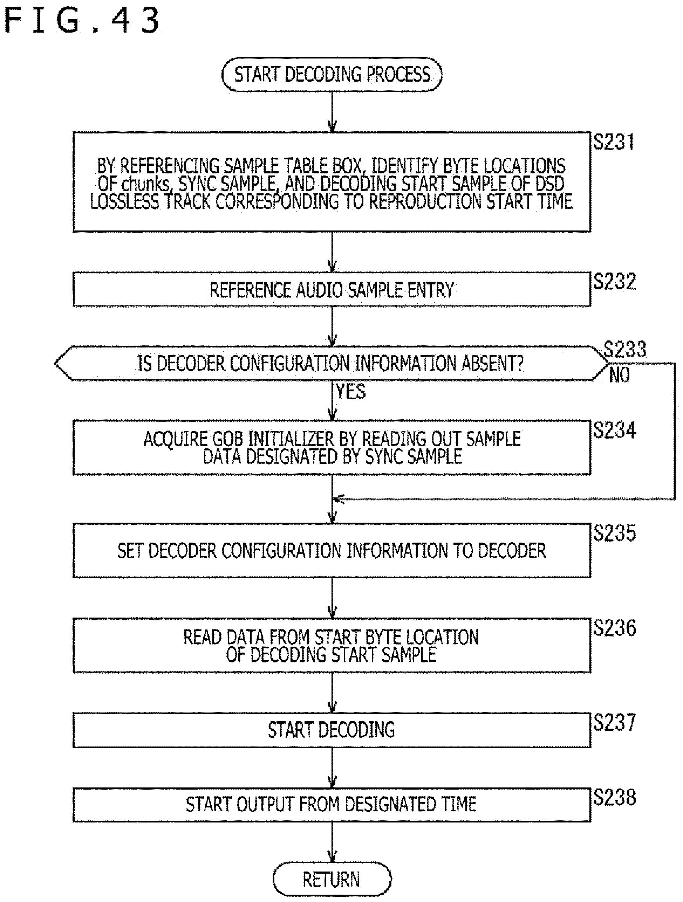

A typical flow of the decoding process in this case is explained with reference to the flowchart of FIG. 43. When the decoding process is started, the sample table box analyzing part 151 in step S231 references the sample table box in the MP4 file acquired by the MP file acquiring part 141 so as to identify the byte locations of the chunks, sync sample, and decoding start sample of the DSD lossless track corresponding to the reproduction start time. In step S232, the audio sample entry analyzing part 221 references the audio sample entry (AudioSampleEntryV1).

In step S233, the audio sample entry analyzing part 221 determines whether or not there exists the decoder configuration information. In the case where it is determined that the decoder configuration information is absent, control is transferred to step S234.

In this case, the audio sample entry analyzing part 221 in step S234 acquires the GOB initializer by reading the data of the sample designated by the sync sample from the MP4 file. With the GOB initializer acquired, control is transferred to step S235. In the case where it is determined in step S233 that there exists the decoder configuration information, step S234 is skipped and control is transferred to step S235.

The processing from step S235 to step S238 is carried out in similar manner to the processing from step S145 to step S148 in FIG. 32. At the end of step S238, the decoding process is terminated. Control is then returned to the process of FIG. 31.

When the processes are performed as described above, the DSD lossless stream stored and transmitted in the MP4 file is decoded using the information regarding the DSD lossless stream (management information) stored in the audio sample entry (AudioSampleEntryV1), and the decoded audio data is output. That is, audio data of higher quality is transmitting using MPEG-DASH.

### <5. Fourth embodiment>

### <Setting the extension box>

It is to be noted that, preferably, an extension box may be defined anew in the audio sample entry (AudioSampleEntryV1), and the information (config information) specific to the DSD lossless compression encoding technology may be stored into the extension box. This makes it possible to know the attributes of the stream (decoder configuration information) without gaining access to the inside of the media data box (mdat). It is then expected that the reproduction process will be performed more quickly at the time of random access, for example.

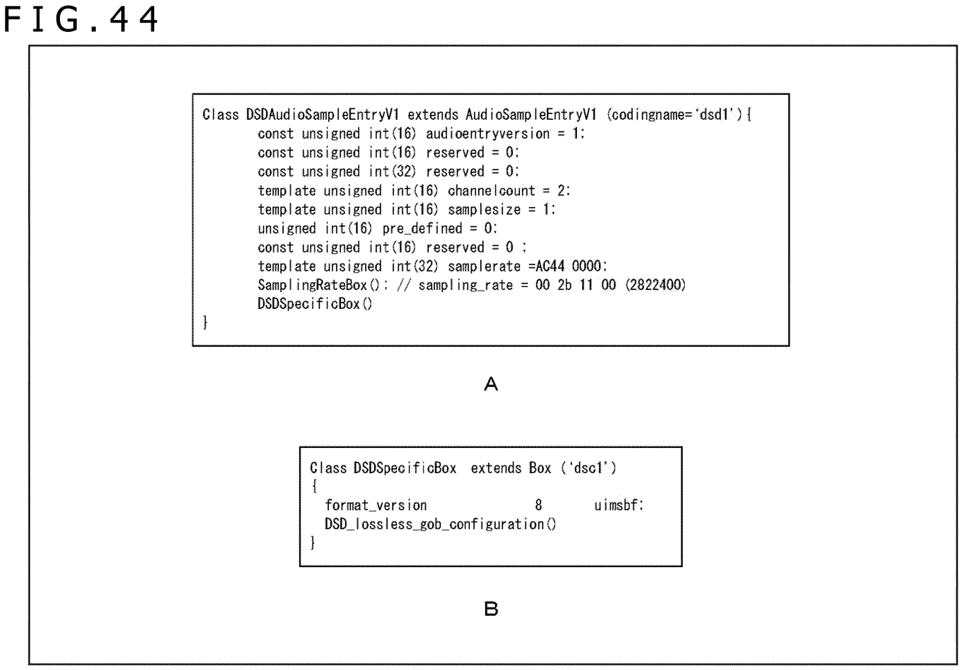

An example of the syntax of the audio sample entry (DSDAudioSampleEntryV1) in that case is depicted in Subfigure A in FIG. 44. As illustrated in Subfigure A in FIG. 44, the extension box (DSDSpecificBox()) is defined in the bottom line.

### <Storing the shared information>

An example of the syntax of the extension box (DSDSpecificBox()) is depicted in Subfigure B in FIG. 44. As illustrated in Subfigure B, the basic decoder configuration information shared in the stream may be stored in the extension box (DSDSpecificBox()). For example, format_version and DSD_lossless_gob_configuration() may be read from the DSD lossless payload (DSD_lossless_payload()) of the DSD lossless stream and stored into the extension box (DSDSpecificBox()).

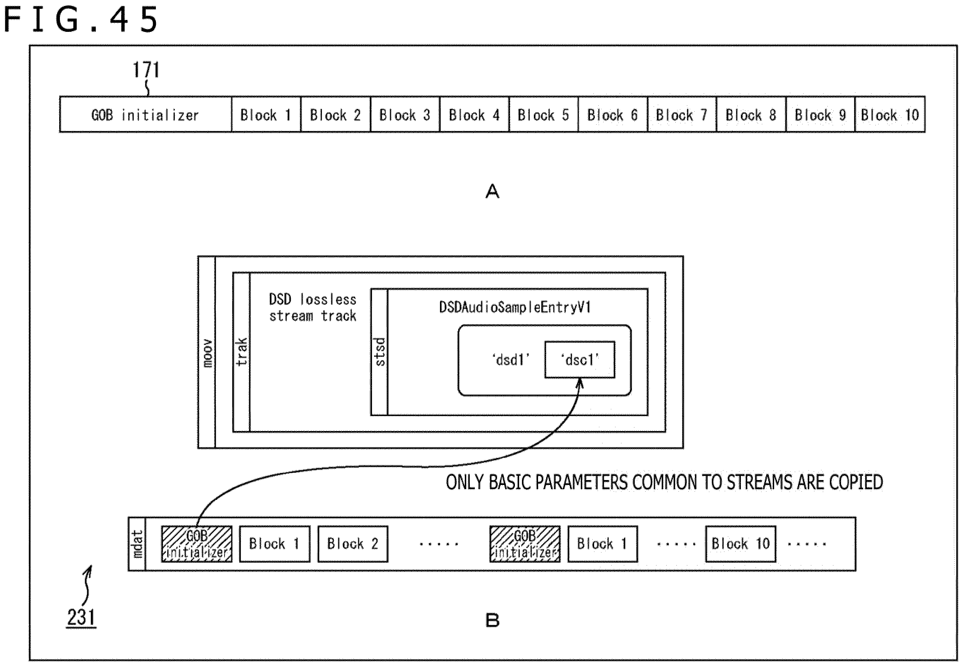

In this case, given the DSD lossless stream 171 configured as depicted in Subfigure A in FIG. 45, an MP4 file 231 configured as illustrated in Subfigure B in FIG. 45 is generated. As depicted in Subfigure B in FIG. 45, an extension box ('dsc1') is provided in the DSD audio sample entry (DSDAudioSampleEntryV1) ('dsd1'). Only the basic parameters shared in the stream are copied to this extension box ('dsc1') .

Consequently, referencing the extension box ('dsc1') allows the basic attributes of the stream to be known only in the system layer. Incidentally, because decoding each GOB requires DSD_lossless_gob_data() for each GOB, it is necessary to access the GOB initializer before the start of reproduction. In this case, however, the sample entry count is just "1," so that any increase in the amount of data is minimized.

### <Storing the individual information>

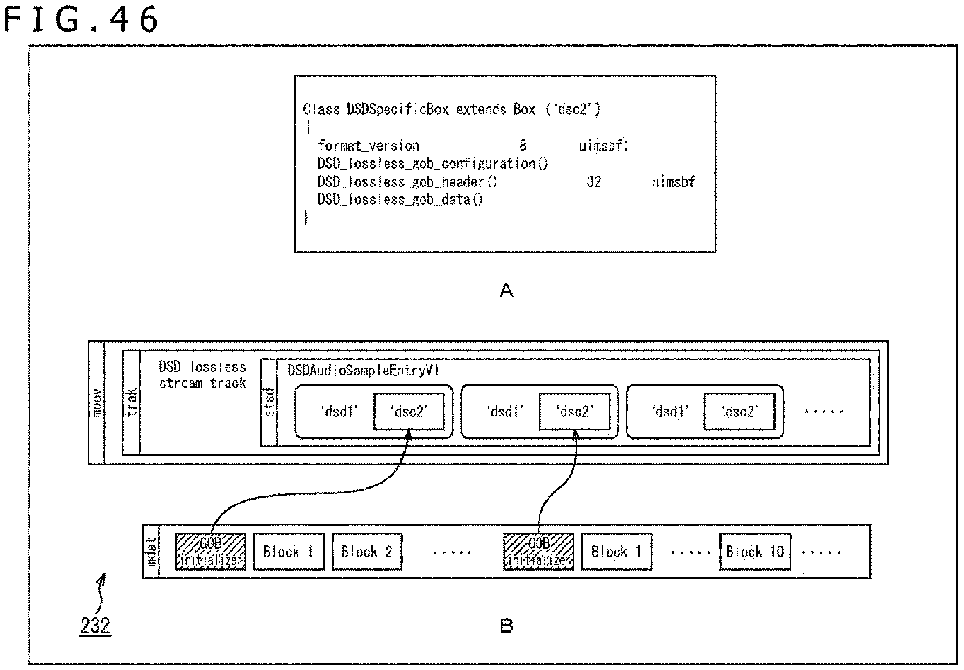

It is to be noted that, preferably, the information specific to a given GOB may be stored in the extension box (DSDSpecificBox()). An example of the syntax of the extension box (DSDSpecificBox()) in this case is depicted in Subfigure A in FIG. 46. As illustrated in Subfigure A in FIG. 46, DSD_lossless_gob_header() and DSD_lossless_gob_data() (codebook) may be read out and stored into the extension box (DSDSpecificBox()). As described above, DSD_lossless_gob_header() and DSD_lossless_gob_data() (codebook) are read from DSD_lossless_gob(). That is, these items of information are included in the GOB initializer and contain the information specific to the current GOB.

In this case, given the DSD lossless stream 171 configured as depicted in Subfigure A in FIG. 45, an MP4 file 232 configured as illustrated in Subfigure B in FIG. 46 is generated. As depicted in Subfigure B in FIG. 46, multiple extension boxes ('dsc2') are provided in the DSD audio sample entry (DSDAudioSampleEntryV1) (`dsd1'). The information (decoder configuration information) required to decode the GOB to which each extension box corresponds is stored in that extension box ('dsc2').

Thus referencing a given extension box ('dsc2') enables the GOB corresponding to that extension box to be decoded. That is, the GOB is decoded without referencing the GOB initializer, which permits processing at higher speed.

### <File generating apparatus>

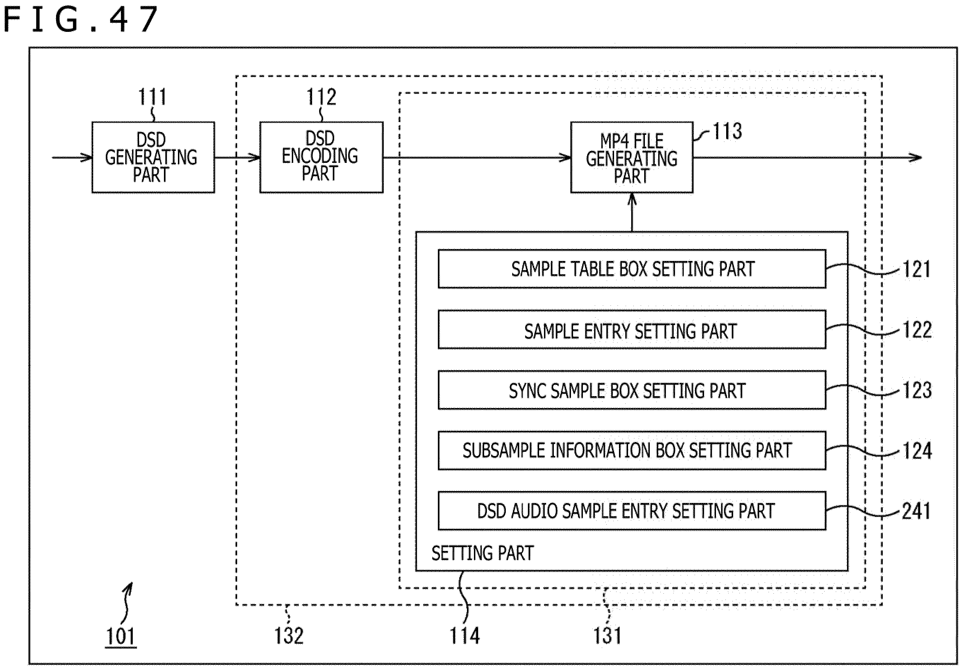

FIG. 47 is a block diagram depicting another representative configuration of the file generating apparatus 101 in the present case. As illustrated in FIG. 47, the file generating apparatus 101 in this case includes a DSD audio sample entry setting part 241 in addition to the configuration explained above with reference to FIG. 19. The DSD audio sample entry setting part 241 performs processes related to setting the audio sample entry and the extension box.

### <Flow of the MP4 file generating process>

In the present case, the delivery data generating process is also carried out basically in similar manner discussed above with reference to the flowchart of FIG. 28.

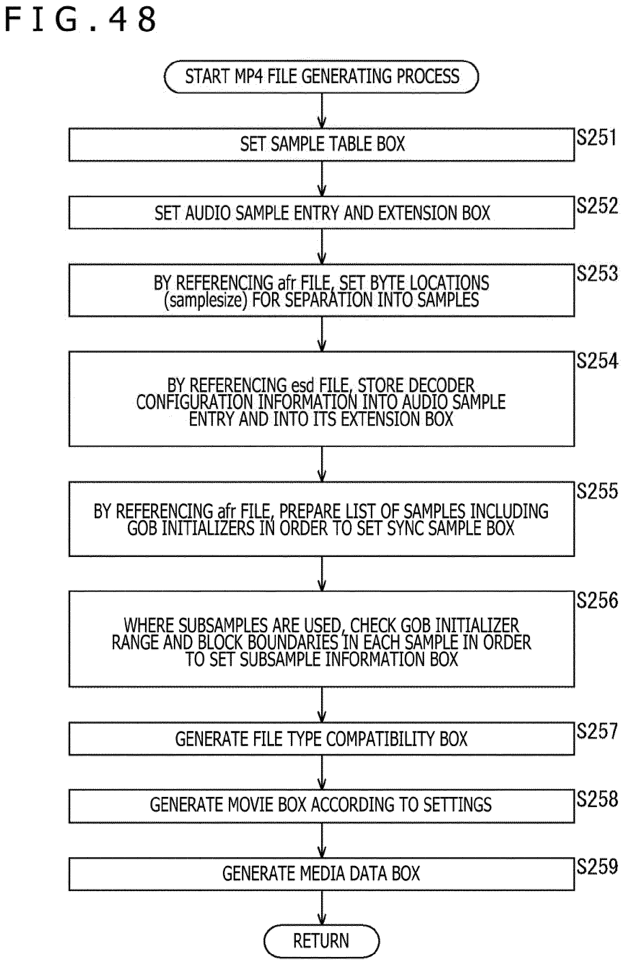

A typical flow of the MP4 file generating process in the present case is explained with reference to the flowchart of FIG. 48. When the MP4 file generating process is started, the sample table box setting part 121 sets the sample table box in step S251. In step S252, the DSD audio sample entry setting part 241 sets the DSD audio sample entry and further sets the extension box (DSDSpecificBox) therein.

In step S253, the DSD audio sample entry setting part 241 references the .afr file to set the byte locations (samplesize) for separation into samples. That is, the DSD audio sample entry setting part 241 assigns the blocks to samples on the basis of the .afr file. In making the assignments, the DSD audio sample entry setting part 241 uses one of the methods described above as (A-1) to (A-6), (B-1) to (B-6), and (C-1) to (C-10), for example.

In step S254, the DSD audio sample entry setting part 241 references the .esd file to store the decoder configuration information into the extension box (DSDSpecificBox) in the DSD audio sample entry. That is, the DSD audio sample entry setting part 241 sets the GOB initializer including the decoder configuration information and assigns the settings to the samples on the basis of the .esd file. In making the assignments, the DSD audio sample entry setting part 241 uses one of the methods described above as (A-1) to (A-6), (B-1) to (B-6), and (C-1) to (C-10), for example.

The processing from step S255 to step S259 is carried out in similar manner to the processing from step S115 to step S119 in FIG. 29. When the MP4 file is generated as described above, the MP4 file generating process is terminated. Control is then returned to the process in FIG. 28.

When the processes area performed as described above, the DSD lossless stream is stored into the MP4 file, and the information regarding the DSD lossless stream (management information) is stored into the extension box (DSDSpecificBox) in the DSD audio sample entry (DSDAudioSampleEntryV1). Audio data of higher quality is thus transmitted using MPEG-DASH.

### <Reproduction terminal>

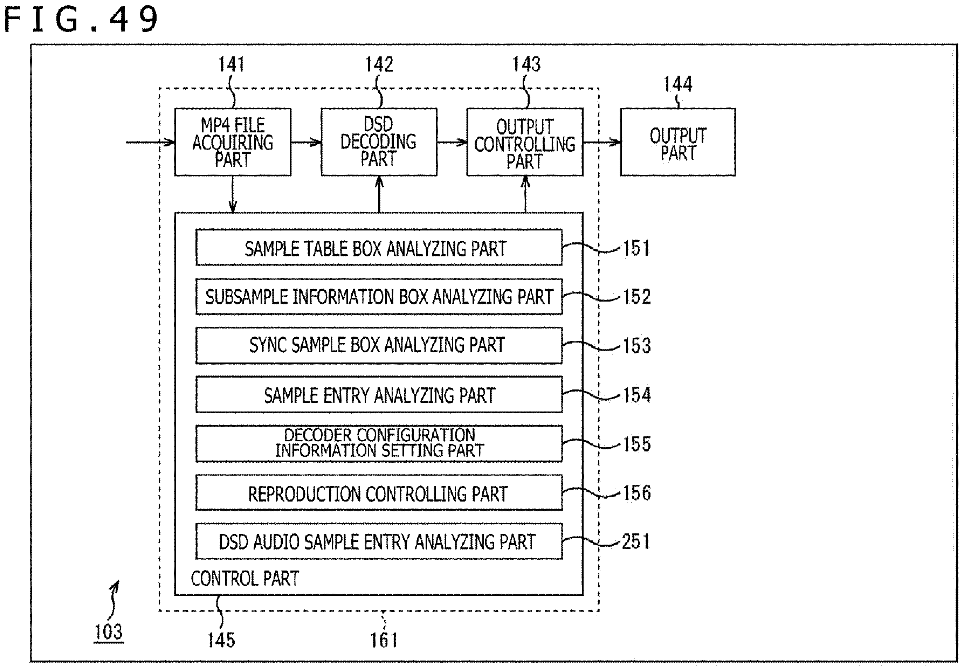

FIG. 49 is a block diagram depicting another representative configuration of the reproduction terminal 103 in the present case. As depicted in FIG. 49, the reproduction terminal 103 in this case includes a DSD audio sample entry analyzing part 251 in addition to the configuration explained above with reference to FIG. 20. The DSD audio sample entry analyzing part 251 performs processes related to analyzing the audio sample entry and the extension box.

### <Flow of the decoding process>

The reproduction process in the present case is also carried out basically in similar manner explained above with reference to the flowchart of FIG. 31.

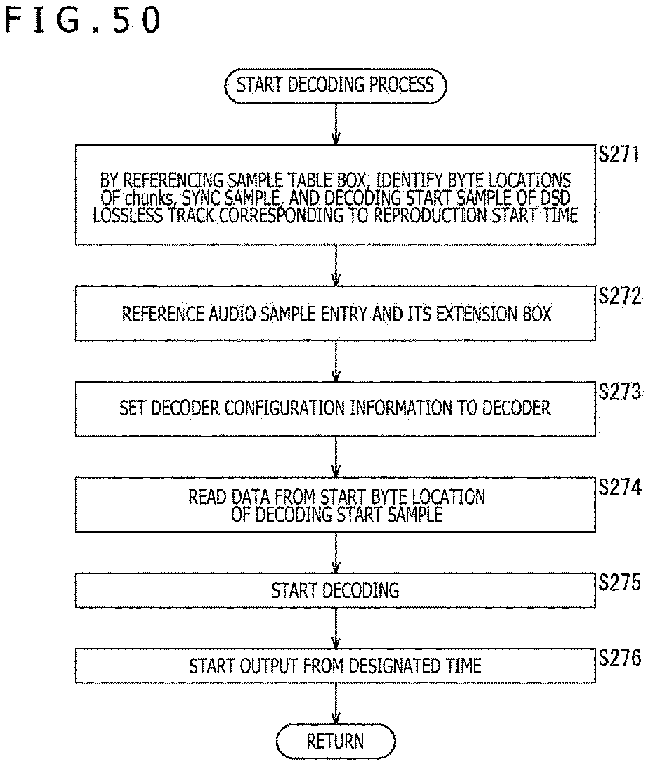

A typical flow of the decoding process in this case is explained with reference to the flowchart of FIG. 50. When the decoding process is started, the sample table box analyzing part 151 in step S271 references the sample table box in the MP4 file acquired by the MP4 file acquiring part 141 so as to identify the byte locations of the chunks, sync sample, and decoding start sample of the DSD lossless track corresponding to the reproduction start time. In step S232, the DSD audio sample entry analyzing part 251 references the DSD audio sample entry (DSDAudioSampleEntryV1) and further references the extension box (DSDSpecificBox) therein.

In step S273, the DSD audio sample entry analyzing part 251 sets to the decoder configuration information stored in the extension box (DSDSpecificBox).

The processing from step S274 to step S276 is carried out in similar manner to the processing from step S146 to step S148 in FIG. 32. At the end of step S276, the decoding process is terminated. Control is then returned to the process in FIG. 31.

When the processes are performed as described above, the current GOB is decoded using the decoder configuration information stored in the extension box (DSDSpecificBox) in the DSD audio sample entry (DSDAudioSampleEntryV1), and the decoded audio data is output. That is, audio data of higher quality is transmitted using MPEG-DASH.

### <6. Others>

### <Protocols>

Described above are the cases in which the DSD lossless stream is stored in the MP4 file and delivered using MPEG-DASH. However, this is not limitative of the present technology that may be applied to other cases as well. For example, the present technology may be applied to any data other than the DSD lossless stream. Also, the present technology may be applied to data storage in any format other than that of the MP4 file. Furthermore, the present technology may be applied to the delivery of data under protocols other than MPEG-DASH.

### <Applicable fields of the present technology>

The systems, apparatuses, processors and other devices to which the present technology is applied may be used in such diverse fields as transportation, medicine, crime prevention, agriculture, livestock raising, mining, beauty care, factories, consumer electronics, weather, and nature monitoring.

For example, the present technology may be applied to systems and devices for transmitting images for visual appreciation. In other examples, the present technology may be applied to systems and devices for use in transportation, to systems and devices for use in security, to systems and devices for use in sports, to systems and devices for use in agriculture, and to systems and devices for use in livestock raising. Also, the present technology may be applied, for example, to systems and devices for monitoring the status of volcanoes, forests, oceans, and other natural resources. In another example, the present technology may be applied to weather observation systems and weather observation apparatuses for observing the weather, temperature, humidity, wind velocity, sunshine duration, and other meteorological conditions. Furthermore, the present technology may be applied, for example, to systems and devices for observing the ecological status of wildlife such as birds, fish, reptiles, amphibians, mammals, insects, and plants.

### <Computer>

The series of processes described above may be executed either by hardware or by software. Where the series of processes is to be carried out by software, the programs constituting the software are installed into a suitable computer for execution. Such computers may include those with the software incorporated in their dedicated hardware beforehand, and those such as general-purpose personal computers or the like capable of executing diverse functions based on various programs installed therein.

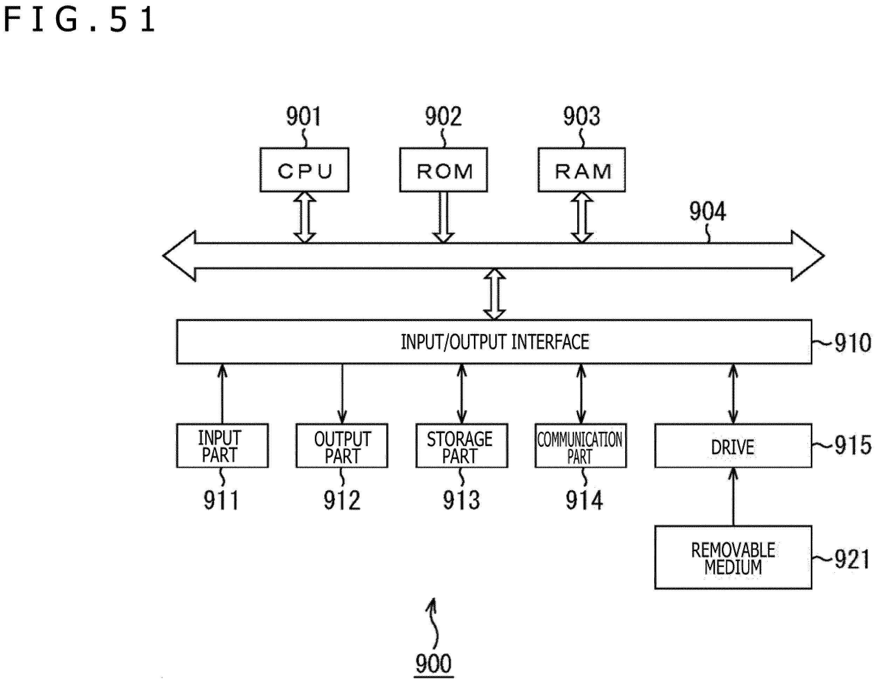

FIG. 51 is a block diagram depicting a typical hardware configuration of a computer that executes the above-described series of processes.

In a computer 900 depicted in FIG. 51, a Central Processing Unit (CPU) 901, a Read-Only Memory (ROM) 902, and a Random Access Memory (RAM) 903 are interconnected via a bus 904.

The bus 904 is also connected with an input/output interface 910. The input/output interface 910 is connected with an input part 911, an output part 912, a storage part 913, a communication part 914, and a drive 915.

The input part 911 is made up of a keyboard, a mouse, a microphone, a touch panel, and input terminals, for example. The output part 912 is formed by a display unit, speakers, and output terminals, for example. The storage part 913 is typically configured with a hard disk, a RAM disk, or a nonvolatile memory. The communication part 914 is typically constituted by a network interface. The drive 915 drives a removable medium 921 such as a magnetic disk, an optical disk, a magneto-optical disk, or a semiconductor memory.

In the computer 900 configured as described above, the CPU 901 performs the above-mentioned series of processing by loading appropriate programs from the storage part 913 into the RAM 903 via the input/output interface 910 and the bus 904 and by executing the loaded programs, for example. As needed, the RAM 903 also stores the data required by the CPU 901 in carrying out the diverse processes.

The programs to be executed by the computer 900 may be recorded on the removable media 921 such as packaged media when offered. In that case, the programs may be installed into the storage part 913 via the input/output interface 910 from a piece of the removable media 921 loaded into the drive 915.

The programs may also be offered via wired or wireless transmission media such as local area networks, the Internet, and digital satellite broadcasting. In such a case, the programs may be received by the communication part 914 before being installed into the storage part 913.

Alternatively, the programs may be preinstalled in the ROM 902 or in the storage part 913, for example.

### <Miscellaneous>

It is to be noted that this description has dealt with examples in which diverse items of information are multiplexed into encoded data (bit stream) and transmitted from the encoding side to the decoding side. In such cases, the techniques for transmitting the information are not limited to those discussed above. For example, the information items need not be multiplexed into encoded data; these items may be transmitted or recorded as individual data items associated with the encoded data. In this context, the term "associate" means handling both the image (or part of it, such as a slice or a block) included in the encoded data and the information corresponding to the image in such a manner that the image and the information may be linked to each other at the time of decoding. That is, the information associated with the encoded data (image) may be transmitted over a transmission path different from the path over which the encoded data (image) is transmitted. Also, the information associated with the encoded data (image) may be recorded on a recording medium different from the medium on which the encoded data (image) is recorded (or the information may be recorded in a different recording area on the same recording medium). Further, the image and the information corresponding thereto may be associated with each other in desired units, e.g., in units of multiple frames, a single frame, or a portion of each frame.

Also, as discussed above in this description, the terms such as "combine," "multiplex," "attach," "integrate," "include," "store," "push into," "put in," and "insert" mean unifying multiple objects into a single object, e.g., bringing the encoded data and metadata into a single data item. These terms refer to one method of "associating" multiple things as described above.

Also, the embodiments of the present technology are not limited to those discussed above. The embodiments may be modified or altered in diverse fashion within the scope and spirit of the present technology.

For example, in this description, the term "system" refers to an aggregate of multiple components (e.g., apparatuses or modules (component parts)). It does not matter whether or not all components are housed in the same enclosure. Thus a system may be configured with multiple apparatuses housed in separate enclosures and interconnected via a network, or with a single apparatus that houses multiple modules in a single enclosure.

Also, any configuration explained in the foregoing paragraphs as one apparatus (or processing part) may be divided into multiple apparatuses (or processing parts). Conversely, the configurations explained above as multiple apparatuses (or processing parts) may be unified into one apparatus (or processing part). Also, the configuration of each apparatus (or processing part) may obviously be supplemented with a configuration or configurations other than those discussed above. Furthermore, a portion of the configuration of an apparatus (or processing part) may be included in the configuration of another apparatus (or processing part), provided the configurations and the workings remain substantially the same for the system as a whole.

The present technology may be implemented as a cloud computing setup in which a single function is processed cooperatively by multiple networked apparatuses on a shared basis, for example.

The above-mentioned programs may be performed by a desired apparatus, for example. In such a case, the apparatus need only have the necessary functions (such as functional blocks) and obtain necessary information.

Also, each of the steps discussed above with reference to the above-described flowcharts may be executed either by a single apparatus or by multiple apparatuses on a shared basis. Furthermore, if a single step includes multiple processes, these processes may be executed either by a single apparatus or by multiple apparatuses on a shared basis.

It is to be noted that each program to be executed by the computer may be processed chronologically in the sequence depicted in this description, in parallel with other programs, or in otherwise appropriately timed fashion such as when it is invoked as needed. That is, the above steps may be carried out in sequences different from those discussed above, as long as there is no conflict between the steps. Furthermore, the processes of the steps describing a given program may be performed in parallel with, or in combination with, the processes of other programs.

It is to be noted that the multiple elements of the present technology explained in this description may be implemented independently of each other, provided there occurs no conflict therebetween. Obviously, the multiple elements of the present technology may be implemented in combination. For example, the present technology discussed in connection with one embodiment may be implemented in combination with the technology explained in conjunction with another embodiment. Furthermore, any elements of the above-described present technology may be implemented in combination with techniques not discussed in the present description.

It is to be noted that the present technology, when implemented, may be configured preferably as follows:
(1) An information processing apparatus including:
   a sample setting part configured, in such a manner that given a file in a predetermined file format for storing encoded data derived from audio data, the encoded data being in groups of a predetermined number of blocks, to set to the file a sample that constitutes a minimum access unit in the file and includes initialization information for decoding each of the groups of the blocks.
(2) The information processing apparatus as stated in paragraph (1) above,
   in which the sample setting part is further configured to set a sample to each of the blocks.
(3) The information processing apparatus as stated in paragraph (1) or (2) above, further including:
   a sync sample setting part configured to set as a sync sample the sample that is set by the sample setting part and includes the initialization information and the first block in each of the groups, the sync sample including information required for starting decoding.
(4) The information processing apparatus as stated in any one of paragraphs (1) to (3) above,
   in which the sample setting part is configured to set two samples, one of the two samples including the initialization information and the first block in each of the groups, the other sample corresponding to each of the other blocks in each of the groups.
(5) The information processing apparatus as stated in any one of paragraphs (1) to (4) above, further including:
   a sync sample setting part configured to set as a sync sample the sample that is set by the sample setting part and includes the initialization information and the first block in each of the groups, the sync sample including information required for starting decoding.
(6) The information processing apparatus as stated in any one of paragraphs (1) to (5) above, further including:
   a subsample setting part configured to set two subsamples to the sample that is set by the sample setting part and includes the initialization information and the first block in each of the groups, one of the subsamples including the initialization information, the other subsample including the first block in each of the groups.
(7) The information processing apparatus as stated in any one of paragraphs (1) to (6) above, further including:
   a sync sample setting part configured to set as a sync sample the sample that is set by the sample setting part and includes the initialization information and the first block in each of the groups, the sync sample including information required for starting decoding.
(8) The information processing apparatus as stated in any one of paragraphs (1) to (7) above,
   in which the sample setting part sets a sample that includes the initialization information and all blocks in each of the groups.
(9) The information processing apparatus as stated in any one of paragraphs (1) to (8) above, further including:
   a subsample setting part configured to set two subsamples to the sample that is set by the sample setting part and includes the initialization information and all blocks in each of the groups, one of the subsamples including the initialization information and the first block in each of the groups, the other subsample corresponding to each of the blocks in each of the groups.
(10) The information processing apparatus as stated in any one of paragraphs (1) to (9) above, further including:
   a subsample setting part configured to set three subsamples to the sample that is set by the sample setting part and includes the initialization information and all blocks in each of the groups, one of the three subsamples including the initialization information, another one of the three subsamples including the first block in each of the groups, the last one of the three subsamples corresponding to each of the blocks in each of the groups.
(11) The information processing apparatus as stated in any one of paragraphs (1) to (10) above,
   in which all samples set by the sample setting part constitute a sync sample including information required for starting decoding.
(12) The information processing apparatus as stated in any one of paragraphs (1) to (11) above, further including:
   a sync sample setting part configured to set as a sync sample the sample that is set by the sample setting part and includes the initialization information, the sync sample including information required for starting decoding,
   in which the sample setting part is further configured to set a sample including all blocks in each of the groups.
(13) The information processing apparatus as stated in any one of paragraphs (1) to (12) above, further including:
   a subsample setting part configured to set a subsample to the sample that is set by the sample setting part and includes all blocks in each of the groups, the subsample corresponding to each of the blocks.
(14) The information processing apparatus as stated in any one of paragraphs (1) to (13) above, in which the sample setting part is configured to set a sample including the initialization information and the first block in each of the groups, and a sample including all the other blocks in each of the groups,
   the information processing apparatus further including:
   a sync sample setting part configured to set as a sync sample the sample that is set by the sample setting part and includes the initialization information and the first block in each of the groups, the sync sample including information required for starting decoding.
(15) The information processing apparatus as stated in any one of paragraphs (1) to (14) above, further including:
   a subsample setting part configured to set a subsample to the sample that is set by the sample setting part and includes all the other blocks in each of the groups, the subsample corresponding to each of the blocks.
(16) The information processing apparatus as stated in any one of paragraphs (1) to (15) above,
   in which the subsample setting part is further configured to set two subsamples to the sample that is set by the sample setting part and includes the initialization information and the first block in each of the groups, one of the subsamples including the initialization information, the other subsample including the first block in each of the groups.
(17) The information processing apparatus as stated in any one of paragraphs (1) to (16) above,
   in which the sample setting part is further configured to set the sample corresponding to each of the blocks to a track different from the track to which the sample including the initialization information is set.
(18) The information processing apparatus as stated in any one of paragraphs (1) to (17) above,
   in which the sample setting part is configured to set two samples to a track different from the track to which the sample including the initialization information is set, one of the two samples including the initialization information and the first block in each of the groups, the other sample corresponding to each of the other blocks in each of the groups.
(19) The information processing apparatus as stated in any one of paragraphs (1) to (18) above,
   in which the sample setting part is further configured to set the sample corresponding to each of the blocks to a file different from the file to which the sample including the initialization information is set.
(20) The information processing apparatus as stated in any one of paragraphs (1) to (19) above,
   in which the sample setting part is further configured to set a protection scheme info box in which to store information regarding Digital Rights Management (DRM).
(21) The information processing apparatus as stated in any one of paragraphs (1) to (20) above, further including:
   an audio sample entry setting part configured to set information regarding the audio data in an audio sample entry.
(22) The information processing apparatus as stated in any one of paragraphs (1) to (21) above,
   in which the audio sample entry setting part is configured to set a predetermined value denoting the format of the audio data in a field "codingname."
(23) The information processing apparatus as stated in any one of paragraphs (1) to (22) above,
   in which the audio sample entry setting part is configured to set the value "2" in a field "channelcount."
(24) The information processing apparatus as stated in any one of paragraphs (1) to (23) above,
   in which the audio sample entry setting part is configured to set the value "1" in a field "samplesize."
(25) The information processing apparatus as stated in any one of paragraphs (1) to (24) above,
   in which the audio sample entry setting part is configured to set a value indicative of "44.1 kHz" in a field "samplerate."
(26) The information processing apparatus as stated in any one of paragraphs (1) to (25) above,
   in which the audio sample entry setting part is configured to set in a field "sampling_rate" the same value as the "sampling_rate" in a sampling rate box.
(27) The information processing apparatus as stated in any one of paragraphs (1) to (26) above, further including:
   an extension box setting part configured to set information regarding the audio data to an extension box in the audio sample entry.
(28) The information processing apparatus as stated in any one of paragraphs (1) to (27) above,
   in which the extension box setting part is configured to set, in the extension box, information specific to the encoding method applicable to the encoded data.
(29) The information processing apparatus as stated in any one of paragraphs (1) to (28) above,
   in which the extension box setting part is configured to set "DSD_lossless_gob_configuration" in the extension box.
(30) The information processing apparatus as stated in any one of paragraphs (1) to (29) above,
   in which the extension box setting part is configured further to set "DSD_lossless_gob_header" and "DSD_lossless_gob_data" in the extension box.
(31) The information processing apparatus as stated in any one of paragraphs (1) to (30) above,
   in which the initialization information includes decoder configuration information for decoding the encoded data.
(32) The information processing apparatus as stated in any one of paragraphs (1) to (31) above,
   in which the initialization information includes information regarding fragment boundaries.
(33) The information processing apparatus as stated in any one of paragraphs (1) to (32) above,
   in which the audio data is Direct Stream Digital (DSD) data, and the encoded data is obtained by losslessly encoding the DSD data.
(34) The information processing apparatus as stated in any one of paragraphs (1) to (33) above,
   in which the file format complies with the ISO/IEC 14496 standard.
(35) The information processing apparatus as stated in any one of paragraphs (1) to (34) above, further including:
   a file generating part configured to generate the file on the basis of the settings provided by the sample setting part.
(36) The information processing apparatus as stated in any one of paragraphs (1) to (35) above, further including:
   an encoding part configured to generate the encoded data by losslessly encoding the audio data.
(37) The information processing apparatus as stated in any one of paragraphs (1) to (36) above, further including:
   an audio data generating part configured to generate the audio data.
(38) An information processing method including:
   given a file in a predetermined file format for storing encoded data derived from audio data, the encoded data being in groups of a predetermined number of blocks, setting to the file a sample that constitutes a minimum access unit in the file and includes initialization information for decoding each of the groups of the blocks.
(39) An information processing apparatus including:
   a sample analyzing part configured to analyze a sample in a file in a predetermined file format for storing encoded data derived from audio data in groups of blocks, the sample being a minimum access unit in the file and including initialization information for decoding each of the groups of the blocks, the sample analyzing part further acquiring decoder configuration information for decoding the encoded data on the basis of the result of the analysis;
   a setting part configured to set the decoder configuration information acquired by the sample analyzing part; and
   a decoding part configured to decode the encoded data using the decoder configuration information set by the setting part.
(40) An information processing method including:
   analyzing a sample in a file in a predetermined file format for storing encoded data derived from audio data in groups of blocks, the sample being a minimum access unit in the file and including initialization information for decoding each of the groups of the blocks;
   acquiring decoder configuration information for decoding the encoded data on the basis of the result of the analysis;
   setting the acquired decoder configuration information; and
   decoding the encoded data using the set decoder configuration information.

### [Reference Signs List]

100 Delivery system, 101 File generating apparatus, 102 Delivery server, 103 Reproduction terminal, 104 Network, 111 DSD generating part, 112 DSD encoding part, 113 MP4 file generating part, 114 Setting part, 121 Sample table box setting part, 122 Sample entry setting part, 123 Sync sample box setting part, 124 Subsample information box setting part, 131 MP4 file generating apparatus, 132 MP4 file generating apparatus, 141 MP4 file acquiring part, 142 DSD decoding part, 143 Output controlling part, 144 Output part, 145 Control part, 151 Sample table box analyzing part, 152 Subsample information box analyzing part, 153 Sync sample box analyzing part, 154 Sample entry analyzing part, 155 Decoder configuration information setting part, 156 Reproduction controlling part, 171 DSD lossless stream, 181 and 182 MP4 files, 201 MP4 file, 202 License file, 203 MP4 file, 211 Audio sample entry setting part, 221 Audio sample entry analyzing part, 231 and 232 MP4 files, 241 DSD audio sample entry setting part, 251 DSD audio sample entry analyzing part, 900 Computer

## Claims

1. An information processing apparatus comprising:
a sample setting part configured, in such a manner that given a file in a predetermined file format for storing encoded data derived from audio data, the encoded data being in groups of a predetermined number of blocks, to set to the file a sample that constitutes a minimum access unit in the file and includes initialization information for decoding each of the groups of the blocks.

2. The information processing apparatus according to claim 1, wherein the sample setting part is configured to set two samples, one of the two samples including the initialization information and the first block in each of the groups, the other sample corresponding to each of the other blocks in each of the groups,
the information processing apparatus further comprising:
a sync sample setting part configured to set as a sync sample the sample that is set by the sample setting part and includes the initialization information and the first block in each of the groups, the sync sample including information required for starting decoding.

3. The information processing apparatus according to claim 2, further comprising:
a subsample setting part configured to set two subsamples to the sample that is set by the sample setting part and includes the initialization information and the first block in each of the groups, one of the subsamples including the initialization information, the other subsample including the first block in each of the groups.

4. The information processing apparatus according to claim 1,
wherein the sample setting part sets a sample that includes the initialization information and all blocks in each of the groups.

5. The information processing apparatus according to claim 4, further comprising:
a subsample setting part configured to set two subsamples to the sample that is set by the sample setting part and includes the initialization information and all blocks in each of the groups, one of the subsamples including the initialization information and the first block in each of the groups, the other subsample corresponding to each of the blocks in each of the groups.

6. The information processing apparatus according to claim 4, further comprising:
a subsample setting part configured to set three subsamples to the sample that is set by the sample setting part and includes the initialization information and all blocks in each of the groups, one of the three subsamples including the initialization information, another one of the three subsamples including the first block in each of the groups, the last one of the three subsamples corresponding to each of the blocks in each of the groups.

7. The information processing apparatus according to claim 4,
wherein all samples set by the sample setting part constitute a sync sample including information required for starting decoding.

8. The information processing apparatus according to claim 1, further comprising:
a sync sample setting part configured to set as a sync sample the sample that is set by the sample setting part and includes the initialization information, the sync sample including information required for starting decoding,
wherein the sample setting part is further configured to set a sample including all blocks in each of the groups.

9. The information processing apparatus according to claim 8, further comprising:
a subsample setting part configured to set a subsample to the sample that is set by the sample setting part and includes all blocks in each of the groups, the subsample corresponding to each of the blocks.

10. The information processing apparatus according to claim 1, wherein the sample setting part is configured to set a sample including the initialization information and the first block in each of the groups, and a sample including all the other blocks in each of the groups,
the information processing apparatus further comprising:
a sync sample setting part configured to set as a sync sample the sample that is set by the sample setting part and includes the initialization information and the first block in each of the groups, the sync sample including information required for starting decoding.

11. The information processing apparatus according to claim 10, further comprising:
a subsample setting part configured to set a subsample to the sample that is set by the sample setting part and includes all the other blocks in each of the groups, the subsample corresponding to each of the blocks.

12. The information processing apparatus according to claim 11,
wherein the subsample setting part is further configured to set two subsamples to the sample that is set by the sample setting part and includes the initialization information and the first block in each of the groups, one of the subsamples including the initialization information, the other subsample including the first block in each of the groups.

13. The information processing apparatus according to claim 1,
wherein the sample setting part is further configured to set the sample corresponding to each of the blocks to a track different from the track to which the sample including the initialization information is set.

14. The information processing apparatus according to claim 1,
wherein the sample setting part is further configured to set the sample corresponding to each of the blocks to a file different from the file to which the sample including the initialization information is set.

15. The information processing apparatus according to claim 1, further comprising:
an extension box setting part configured to set information regarding the audio data to an extension box in an audio sample entry.

16. The information processing apparatus according to claim 1,
wherein the audio data is Direct Stream Digital (DSD) data, and the encoded data is obtained by losslessly encoding the DSD data.

17. The information processing apparatus according to claim 1,
wherein the file format complies with the ISO/IEC 14496 standard.

18. An information processing method comprising:
given a file in a predetermined file format for storing encoded data derived from audio data, the encoded data being in groups of a predetermined number of blocks, setting to the file a sample that constitutes a minimum access unit in the file and includes initialization information for decoding each of the groups of the blocks.

19. An information processing apparatus comprising:
a sample analyzing part configured to analyze a sample in a file in a predetermined file format for storing encoded data derived from audio data in groups of blocks, the sample being a minimum access unit in the file and including initialization information for decoding each of the groups of the blocks, the sample analyzing part further acquiring decoder configuration information for decoding the encoded data on a basis of the result of the analysis;
a setting part configured to set the decoder configuration information acquired by the sample analyzing part; and
a decoding part configured to decode the encoded data using the decoder configuration information set by the setting part.

20. An information processing method comprising:
analyzing a sample in a file in a predetermined file format for storing encoded data derived from audio data in groups of blocks, the sample being a minimum access unit in the file and including initialization information for decoding each of the groups of the blocks;
acquiring decoder configuration information for decoding the encoded data on a basis of the result of the analysis;
setting the acquired decoder configuration information; and
decoding the encoded data using the set decoder configuration information.
